(19) Europäisches Patentamt
European Patent Office
Office européen des brevets

(11) EP 2 535 344 A1

(12) # EUROPÄISCHE PATENTANMELDUNG

(43) Veröffentlichungstag:
**19.12.2012 Patentblatt 2012/51**

(21) Anmeldenummer: **11170407.8**

(22) Anmeldetag: **17.06.2011**

(51) Int Cl.:
***C07F 7/21*** *(2006.01)* ***C07F 9/54*** *(2006.01)*
***C07F 15/00*** *(2006.01)* ***B01J 31/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Evonik Degussa GmbH**
**45128 Essen (DE)**

(72) Erfinder:
- **Azap, Cengiz, Dr.**
  **60435 Frankfurt (DE)**
- **Wolf, Dorit, Dr.**
  **61440 Oberursel (DE)**

(54) **Silsesquioxan-substituierte Verbindungen, Verfahren zu deren Herstellung, deren Verwendung als Liganden für Katalysatorsysteme sowie Katalysatorsysteme**

(57) Die vorliegende Erfindung betrifft Silsesquioxan-substituierte Verbindungen, sowie deren Herstellung und Verwendung. Insbesondere betrifft die Erfindung stickstoffhaltige und phosphorhaltige Silsesquioxan-substituierte Verbindungen, deren Herstellung und Verwendung als Liganden in katalytischen Systemen und Katalysatorsysteme mit entsprechenden Silsesquioxan-substituierten Verbindungen.

EP 2 535 344 A1

## Beschreibung

Die vorliegende Erfindung betrifft Silsesquioxan-substituierte Verbindungen, sowie deren Herstellung und Verwendung. Insbesondere betrifft die Erfindung stickstoffhaltige und phosphorhaltige Silsesquioxan-substituierte Verbindungen, deren Herstellung und Verwendung als Liganden in katalytischen Systemen und Katalysatorsysteme.

Homogene, übergangsmetallbasierte Systeme sind häufig angewandte Katalysatoren, zum Beispiel zur Funktionalisierung von Halogenaromaten oder Vinylhalogeniden in homogen-übergangsmetallkatalysierten C-C- und C-X-Kupplungen, zum Beispiel zu aromatischen Olefinen bzw. Dienen (Heck-Reaktion, Stille Reaktion), Biarylen (Suzuki-Reaktion), Alkinen (Sonogashira-Reaktion), Carbonsäurederivaten (Heck-Carbonylierung), Aminen (Buchwald-Hartwig-Reaktion). Dabei sind Palladiumkatalysatoren generell bekannt für ihre breite Anwendbarkeit auf unterschiedlichste Kupplungssubstrate und für ihre hervorragende Aktivität.

Imidazol- und Phosphinverbindungen haben sich dabei als nützliche Liganden in unterschiedlichsten katalytischen Anwendungen erwiesen. Insbesondere Imidazol-und Imidazolinderivate, wie das N-heterocyclische Carben (NHC), haben hierbei Bedeutung erlangt (vgl. G. Organ et al., Angew. Chem. 2007, 46, 2768-2813).

Aufgrund der Komplexität der Reaktionsgemische ist jedoch meist in der Synthese kein einfaches Katalysatorrecycling möglich, so daß die Rückführung des Katalysators hohe Kosten verursacht, die in der Regel einer technischen Realisierung entgegenstehen. Darüber hinaus ist es besonders bei der Herstellung von Wirkstoffen bzw. Wirkstoffvorprodukten unerwünscht, mit großen Mengen an Katalysator zu arbeiten, da ansonsten in diesem Fall Katalysatorrückstände im Produkt verbleiben. Insbesondere lösliche Metalle als Kontamination verursachen hierbei Probleme. Bei pharmazeutischen Wirkstoffen muß beispielsweise der Gehalt an Metallen auf ein vorgeschriebenes Maß reduziert werden. Hierzu werden Metallscavenger oder physikalische Verfahren wie Extraktion, Destillation oder Fällung eingesetzt, die jedoch zeit- und kostenaufwendig sind.

Eine gezielte Variation des Molekulargewichtes oder der Löslichkeit ist wiederum die Grundlage für eine Abtrennung der Liganden bzw. Metallkomplex-Katalysatoren von der Reaktionsmischung nach erfolgter katalytischer Reaktion bzw. für die Fixierung der Katalysatoren in kontinuierlich durchgeführten Reaktionen innerhalb des Reaktors. Sie eröffnet damit die Möglichkeit der Rückgewinnung der teuren Liganden bzw. Komplexkatalysatoren z. B. mittels Nanofiltration (vgl. A. I. Schafer, T. D. Waite, A. G. Fane (Hrsg.), Nanofiltration - Principles and Applications, Elsevier, 2004) und erlaubt so Effizienzsteigerungen für eine ganze Reihe von homogen-katalysierten Prozessen wie z. B. Hydroformylierung von Olefinen in Gegenwart von Rh-Komplexen, homogen-katalysierte C-X-Kupplungsreaktionen in Gegenwart von Pd-Komplexen und Olefinmetathese in Gegenwart von Komplexen aus Ruthenium und N-heterocyclischem Carben (NHC).

Polyedrische oligomere Silsesquioxanverbindungen sind unter der Bezeichnung "POSS®" kommerziell erhältlich und wurden bekannt durch die Synthese von Lichtenhan et al. (J. D. Lichtenhan Comments. Inorg. Chem. 1995, Vol. 17, No. 2, pp.115-130; A. M. Seifalian, Acc. Chem. Res. 2005, Vol 38, No. 11 879-884). Diese Verbindungen besitzen robuste Strukturen. Allerdings ist deren Anwendung als stickstoff- und phosphorhaltige Liganden in den o.g. katalytischen Verfahren bisher nicht bekannt.

Zur Herstellung bisher bekannter Ligandensysteme spielt die Alkylierung von Stickstoff- und Phosphorverbindungen, insbesondere Imidazolen und Phosphinen, eine herausragende Rolle. Dabei erfolgt in herkömmlichen Verfahren die Alkylierung von P-und N-haltigen Verbindungen, die beispielsweise als Vorstufen von Liganden für übergangsmetallkatalysierte Reaktionen dienen, durch Umsetzung der Komponenten in Lösung bei Raumtemperatur bzw. höheren Temperaturen. Häufig fällt dabei das Salz beim Abkühlen auf Raumtemperatur aus bzw. es wird durch Zugabe von unpolaren Lösungsmitteln ein Ausfällen der Salze bewirkt.

Bezüglich der Herstellung von bekannten Liganden sind u.a. Arbeiten zur Alkylierung von Phosphanen (vgl. Beller et al., Synthesis 2004, 6, 935-941), und zur Alkylierung von Imidazol-Verbindungen (vgl. Bedford et al. Synthesis 2005, 4, 622-626) bekannt. Das folgende Schema zeigt beispielhaft die Alkylierung von Imidazol- bzw. Phosphinderivaten:

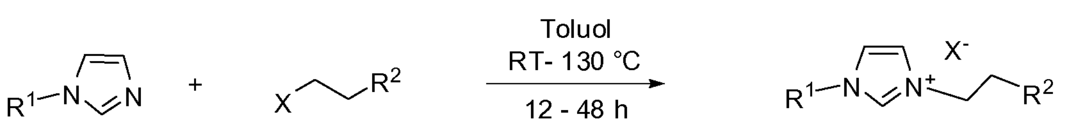


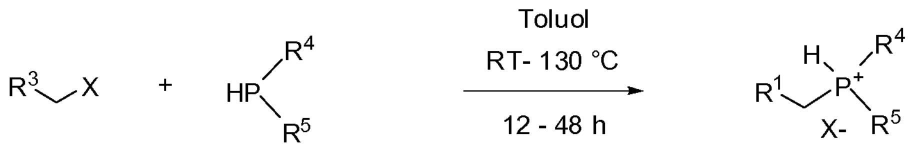


Hier stellen sich nicht nur der Lösungsmitteleinsatz, sondern auch die langen Reaktionszeiten nachteilig dar.

Mit Hinblick auf einen großtechnischen Prozeß ist der Einsatz eines Lösungsmittels sowohl ökonomisch als auch ökologisch unerwünscht. Zudem stellt der Einsatz eines Lösungsmittels stets ein Gefahrenpotential dar, bei dem entsprechende Sicherheitsmaßnahmen getroffen werden müssen. Lange Reaktionszeiten erfordern lange Reaktorlaufzeiten, die zusätzliche Produktionskosten verursachen.

Aufgabe der vorliegenden Erfindung ist es, neue aktive Verbindungen für Katalysatorsysteme bereitzustellen, die die genannten Nachteile nicht aufweisen, die insbesondere einfach und in hoher Ausbeute aus Reaktionsgemischen zurückgewonnen werden können, und damit auch für die großtechnische Synthese geeignet sind. Des weiteren ist es die Aufgabe der Erfindung, ein effizientes Verfahren zur Herstellung der genannten Verbindungen bereitzustellen.

Diese Aufgabe wird erfindungsgemäß gelöst durch die Bereitstellung neuartiger, mit polyedrischen oligomeren Silsesquioxanen substituierter Derivate (im Folgenden "Silsesquioxan-substituierte Verbindungen" genannt), die als Liganden in übergangsmetallkatalysierten Reaktionen Aktivität besitzen und leicht aus der Reaktionsmischung abgetrennt werden können. Die erfindungsgemäßen Verbindungen eignen sich aufgrund ihrer vorteilhaften Eigenschaften für eine solche Verwendung in Katalysatoren. Je nach Anzahl der gebundenen SilsesquioxanEinheiten erfahren die erfindungsgemäßen Verbindungen eine signifikante Erhöhung des Molekulargewichts und eine Änderung der physikalischen Eigenschaften (z. B. Löslichkeit), was insbesondere für die Prozeßführung in der industriellen Synthese vorteilhaft ist.

Ein weiterer Gegenstand der Erfindung ist die Herstellung der vorgenannten Silsesquioxan-substituierten Verbindungen und deren Verwendung als Liganden in Katalysatorsystemen und die Katalysatorsysteme selbst.

Im Folgenden werden die in der Beschreibung der Erfindung verwendeten Begriffe genauer erläutert.

Wie hierin verwendet bedeutet der Begriff "Alkyl" für sich genommen oder als Teil einer anderen Gruppe eine gesättigte aliphatische Kohlenwasserstoffgruppe, wobei der angegebene Bereich "$C_{1-20}$" bedeutet, daß die Alkylgruppe aus 1, 2, 3, 4, 5, 6, 7, 8, 9, 10, 11, 12, 13, 14, 15, 16, 17, 18, 19 oder 20 Kohlenstoffatomen besteht. "Substituiert" bzw. "unsubstituiert" bedeutet die An- bzw. Abwesenheit von einem oder mehreren Substituenten in Abhängigkeit von freien Valenzen. Der Begriff "geradkettige oder verzweigte $C_{1-6}$-Alkylgruppe" steht für Methyl, Ethyl, Propyl, Isopropyl, Butyl, Isobutyl, sec-Butyl, tert-Butyl, n-Pentyl, 3-Pentyl und Hexyl. Erfindungsgemäß bevorzugt sind $C_1$-$C_{20}$-Alkylketten.

Der Begriff "Alkylen" steht für eine gesättigte geradkettige oder verzweigte Kohlenwasserstoffkette mit zwei Bindungsstellen. Erfindungsgemäß bevorzugt sind $C_1$-$C_{20}$-Alkylenketten. Besonders bevorzugt sind unverzweigte $C_1$-$C_{20}$-Alkylenketten.

Der Begriff "geradkettiges oder verzweigtes Alkenyl" steht für einen geradkettigen oder verzweigten Kohlenwasserstoffrest mit mindestens einer Doppelbindung zwischen zwei Kohlenstoffatomen der Kette. Der Alkenylrest ist substituiert oder unsubstituiert. Erfindungsgemäß bevorzugt ist ein $C_2$-$C_{20}$-Alkenylrest. So steht der Begriff "$C_{2-6}$-Alkenyl" für einen geradkettigen oder verzweigten Kohlenwasserstoffrest mit 2 bis 6 Kohlenstoffatomen und mindestens einer Doppelbindung zwischen zwei Kohlenstoffatomen der Kette (z. B. Ethenyl, 1-Propenyl, 2-Propenyl, 2-Methyl-1-propenyl, 1-Butenyl oder 2-Butenyl), der substituiert oder unsubstituiert ist.

Der Begriff "Cycloalkyl" bedeutet einen vollständig gesättigten cyclischen Kohlenwasserstoffring, der als monocyclischer, bicyclischer oder Spiro-Ring vorliegen kann. Erfindungsgemäß bevorzugt sind Cycloalkylgruppen mit 3 bis 10 Kohlenstoffatomen. Der Begriff "$C_3$-$C_{10}$-Cycloalkyl bedeutet einen Ring, der 3 bis 10 Ringglieder besitzt. Beispiele für Cycloalkylringe sind Cyclopropyl, Cyclobutyl, Cyclopentyl und Cyclohexyl.

Der Begriff "Heterocyclus" bedeutet einen gesättigten oder teilweise gesättigten nichtaromatischen cyclischen Ring mit insgesamt mindestens 5 Atomen, umfassend 3 bis 13 Kohlenstoffatome und ein bis vier Heteroatome, unabhängig ausgewählt aus N, O und S, wobei die Stickstoff- und Schwefelatome ggf. oxidiert sein können, und der Stickstoff quaternisiert sein kann, d.h. ein monocyclischer Heterocyclus. Der Begriff "Heterocyclus" umfaßt auch eine Gruppe, bei der der o.g. nichtaromatische Ring an einen Cycloalkyl-, Heterocyclus-, Aryl- oder Heteroarylring anelliert ist (d.h. mit zwei benachbarten gemeinsamen Atomen), d.h. einen polycyclischen Heterocyclus. Wird ein Heterocyclus als Substituent an einer Baugruppe erwähnt, so ist damit gemeint, daß der Heterocyclus an die Baugruppe über ein Atom innerhalb des gesättigten oder teilweise gesättigten Ring des Heterocyclus gebunden ist. In einem gesättigten Heterocyclus ist der obige heteroatomhaltige cyclische Ring vollständig gesättigt, wohingegen ein "teilweise" gesättigter Ring eine oder mehrere Doppelbindungen innerhalb des nichtaromatischen heteroatomhaltigen oben beschriebenen Rings bezeichnet, unabhängig davon, an welchen der anderen Ringe er gebunden ist.

Beispiele für gesättigte oder teilweise gesättigte heterocyclische Gruppen umfassen Tetrahydrofuranyl, Pyranyl, Tetrahydropyranyl, Piperidinyl, Piperazinyl, Pyrrolidinyl, Imidazolidinyl, Indolinyl, Isoindolinyl, Chinuclidinyl, Morpholinyl, Isochromanyl, Chromanyl, Pyrazolinyl, und Pyrazolidinyl.

Der Begriff "Aryl" bezeichnet einen ausschließlich aus Kohlenstoff gebildeten Ring mit bis zu 8 Atomen im Ring (monocyclisches Aryl). Darüberhinaus umfaßt der Begriff "Aryl" ebenfalls eine Gruppe, bei welcher der vorgenannte carbocyclische Ring an einen Cycloalkyl-, Heterocyclus-, Aryl- oder Heteroarylring anelliert ist, d.h. mit einem gemeinsamen Paar benachbarter Atome und insgesamt bis zu 20 Kohlenstoffatomen. Wird ein Arylrest als Substituent an einer Baugruppe genannt, so ist gemeint, daß der Arylrest an die Baugruppe durch ein Atom innerhalb des gesamten aromatischen Rings des Aryl gebunden ist. Beispiele für Arylgruppen sind Phenyl, Naphthyl und Anthracenyl.

Der Begriff "Heteroaryl" bezeichnet einen aromatischen Ring mit 3 bis 13 Kohlenstoffatomen und 1, 2, 3 oder 4 Heteroatomen, ausgewählt aus N, O oder S, oder einer Kombination daraus, wobei mindestens 5 Ringatome vorliegen (monocyclisches Heteroaryl). Darüberhinaus umfaßt der Begriff Heteroaryl auch eine Gruppe, bei welcher der vorgenannte Heteroarylring an einen Cycloalkyl-, Heterocyclus-, Aryl- oder Heteroarylring anelliert ist, d.h. mit einem gemeinsamen Paar benachbarter Atome, d.h. ein polycyclisches Heteroaryl. Wird ein Heteroarylrest als Substituent an einer Baugruppe genannt (z.B. $C_7$-Heteroaryl), so ist gemeint, daß der Heteroarylrest an die Baugruppe durch ein Atom innerhalb des gesamten aromatischen Rings des Aryls gebunden ist. Beispiele für Heteroarylgruppen sind Thienyl (Thiophenyl), Benzo[b]thienyl, Naphtho[2,3-b]thienyl, Thianthrenyl, Furanyl, Furyl (Furanyl), Isobenzofuranyl, Chromenyl, Xanthenyl, Phenoxanthiinyl, Pyrrolyl, 2H-Pyrrolyl, Imidazolyl, Pyrazolyl, Pyridyl (Pyridinyl), 2-Pyridyl, 3-Pyridyl, 4-Pyridyl, Pyrazinyl, Pyrimidinyl, Pyridazinyl, Indolizinyl, Isoindolyl, 3H-Indolyl, Indolyl, Indazolyl, Isoindolyl, Isoxazolyl, Isothiazolyl, Cinnolinyl, Purinyl und 1,2-Benzisoxazol-3-yl. Falls die Heteroarylgruppe ein Stickstoffatom im Ring enthält, so kann dieses in Form eines N-Oxids vorliegen, z.B. Pyridyl-N-oxid.

Der Begriff "Arylalkyl" bedeutet eine vorstehend definierte Alkylgruppe, die mit einer vorstehend definierten Arylgruppe substituiert ist. Beispiele für Aralkylgruppen umfassen Benzyl, Phenethyl und Naphthylmethyl.

Der Begriff "Halogen" bedeutet einen Fluor-, Chlor-, Brom- oder Iodsubstituenten.

Der Begriff "Haloalkyl" bedeutet eine mit einem oder mehreren Halogenatomen substituierte Alkylgruppe. Beispiele für Haloalkylgruppen sind Fluormethyl, Difluormethyl, Trifluormethyl, Pentafluorethyl, Chlormethyl, Chlorfluormethyl, und Trichlormethylgruppen.

Der Begriff "Carbonyl" bedeutet eine Gruppe -C(=O)-.

Der Begriff "Alkylthio" bedeutet eine -S-Alkyl-Gruppe; und der Begriff "Arylthio" bedeutet eine -S-Aryl-Gruppe.

Der Begriff "Alkoxy" bedeutet eine -O-Alkyl-Gruppe.

Der Begriff "Carboxyl" bedeutet eine -COOH-Gruppe, und der Begriff "Ester" bedeutet eine Carboxygruppe -COOR, wobei R nicht Wasserstoff ist, und z.B. Methyl, Ethyl etc. darstellt.

Der Begriff "Anion" bedeutet allgemein eine negativ geladene Gruppe, und bezeichnet insbesondere ein Halogenid ($F^-$. $Cl^-$, $Br^-$, $I^-$), Tosylat, Mesylat, Sulfinat oder Triflat.

Der Begriff "substituiert" bedeutet im Zusammenhang mit der vorliegenden Erfindung allgemein den Ersatz von Wasserstoffatom(en) durch einen oder mehrere Substituenten.

Der Begriff "Abgangsgruppe" bezeichnet einen abzuspaltenden Molekülbereich, wobei die Abgangsgruppe ein Atom, Molekül oder Ion sein kann. Beispiele für Abgangsgruppen sind Tosylat, Mesylat, Triflat, Nonaflat, Acetat, Sulfonat, Sulfinat, und Halogenidionen wie Cl, Br oder I, $CF_3$, $CCl_3$, $CBr_3$, $C_6F_5$, Alkylsulfonat, Fluoralkylsulfonat, Arylsulfonat, Fluorsulfonat, Nitrat, Alkylphosphat, Alkylborat, Trialkylammonium und Dialkylsulfonium. Bevorzugte Abgangsgruppen gemäß der vorliegenden Erfindung sind Tosylat, Mesylat, Triflat, Nonaflat, Acetat, Sulfonat, Sulfinat, und Halogenidionen wie Cl, Br oder I.

In einem Aspekt betrifft die vorliegende Erfindung Silsesquioxan-substituierte stickstoffhaltige Derivate mit der folgenden Formel (I):

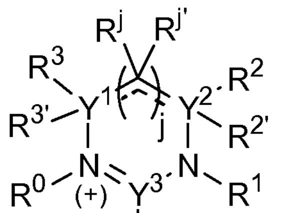

(I)

wobei in Formel (I) $Y^1$, $Y^2$ und $Y^3$ jeweils unabhängig voneinander ein Kohlenstoff-oder Stickstoffatom darstellt, j gleich 0, 1, 2 oder 3 ist, $R^0$ abwesend ist und ein freies Elektronenpaar an $N^3$ vorliegt oder $R^0$ gleich $\left[R^x_{n-1}\left(SiO_{1,5}\right)_n\right]$-$R^y$-ist und $N^3$ eine positive Ladung trägt, wobei n gleich 4, 6, 8, 10, 12, 14, 16 oder 18 ist und X- ein Anion ist, und die übrigen Gruppen wie im folgenden unter (1) definiert sind.

Bevorzugt gilt in der Formel (I) gemäß der vorliegenden Erfindung $Y^1$=$Y^2$=$Y^3$=C (Formel (Ia) und davon abgeleitete Strukturen).

Insbesondere besitzt die Erfindung die folgenden Ausführungsformen:

(1) Silsesquioxan-substituierte Verbindung, ausgewählt aus:

a) einer stickstoffhaltigen Verbindung der allgemeinen Formel (Ia), (Ib) oder (Ib')

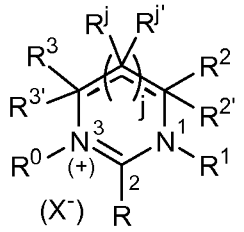

(Ia)

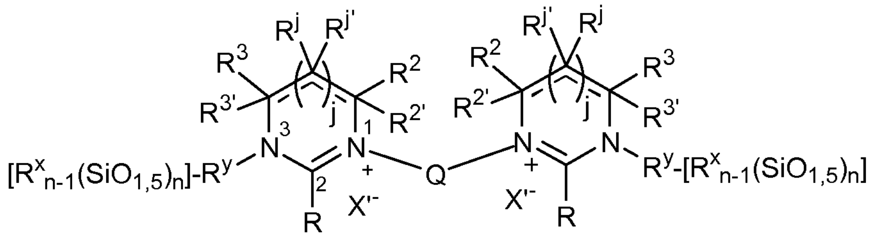

(Ib)

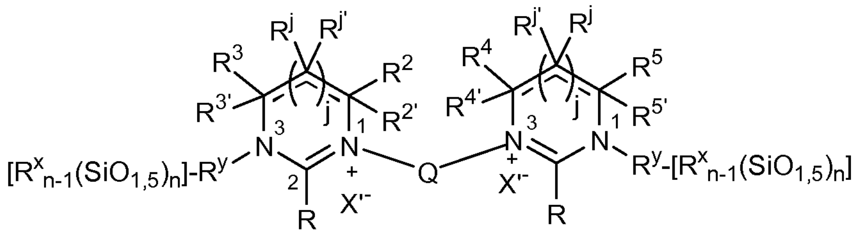

(Ib')

und deren Salze,
wobei j gleich 0, 1 oder 2 ist, $R^0$ abwesend ist und ein freies Elektronenpaar an $N^3$ vorliegt oder $R^0$ gleich $\left[R^x_{n-1}\left(SiO_{1,5}\right)_n\right]-R^y-$ ist und $N^3$ eine positive Ladung trägt,

wobei n gleich 4, 6, 8, 10, 12, 14, 16 oder 18 ist und X'- und $X^-$ jeweils ein Anion sind;
Q eine verbrückende Gruppe ist, ausgewählt aus $-(CH_2)_q$ mit q=1, 2, 3, 4, 5, 6, 7, 8, 9, 10, 11, 12, 13, 14, 15, 16, 17, 18, 19 oder 20, oder Arylen;

--- 0,1 oder 2 C-C-Doppelbindungen im Ring bedeutet;

$R^1=\left[R^x_{n-1}\left(SiO_{1,5}\right)_n\right]-R^y-$ ist oder ausgewählt ist aus der folgenden Gruppe (i), und unsubstituiert oder substituiert ist mit Substituenten, ausgewählt aus der folgenden Gruppe (i) oder (ii);
$R^x$ ausgewählt ist aus der folgenden Gruppe (i), und unsubstituiert oder substituiert ist mit Substituenten, ausgewählt aus der folgenden Gruppe (i);
$R^y$ ausgewählt ist aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_1$-$C_{20}$-Alkylen-$C_6$-$C_{18}$-Arylen oder $C_6$-$C_{18}$-Arylen-$C_1$-$C_{20}$-Alkylen; $C_3$-$C_{13}$-Heteroarylen, und unsubstituiert

oder substituiert ist mit Substituenten, ausgewählt aus der folgenden Gruppe (i) oder (ii);

$R^2$, $R^{2'}$, $R^3$, $R^{3'}$, $R^4$, $R^{4'}$, $R^5$, $R^{5'}$, $R^j$ und $R^{j'}$ ausgewählt sind aus Wasserstoff und den folgenden Gruppen (i) oder (ii); und unsubstituiert oder substituiert sind mit Substituenten, ausgewählt aus der folgenden Gruppe (i) oder (ii);

(i) geradkettigem oder verzweigtem $C_1$-$C_{20}$-Alkyl- oder $C_1$-$C_{20}$-Alkoxy; mono-, bi- oder tricyclischem $C_3$-$C_{10}$-Cycloalkyl oder $C_3$-$C_{10}$-Cycloalkyloxy; bevorzugt $C_4$-$C_{10}$-Alkyl- oder $C_4$-$C_{10}$-Alkoxy, und besonders bevorzugt $C_4$-$C_8$-Alkyl oder $C_4$-$C_8$-Alkoxy;
geradkettigem oder verzweigtem $C_1$-$C_{20}$-Thioalkyl;
geradkettigem oder verzweigtem $C_2$-$C_{20}$-Alkenyl- oder $C_2$-$C_{20}$-Alkenyloxy;
Aryl oder Aryloxy, wobei Aryl oder Aryloxy einen mono- oder polycyclischen aromatischen, nicht anellierten oder anellierten Kohlenwasserstoffrest mit 6 bis 18 Kohlenstoffatomen darstellt; Arylalkyl (Aralkyl) oder Alkylaryl, wobei Aryl und Alkyl wie oben definiert sind, wie zum Beispiel Phenylalkyl oder Alkylphenyl;
Heterocyclus, wobei der Heterocyclus einen gesättigten oder teilweise gesättigten 3- bis 7-gliedrigen nichtaromatischen Ring aus Kohlenstoffatomen und 1 bis 4 unabhängig aus N, O und S ausgewählten Heterotaomen darstellt, wobei N oder S oxidiert oder nicht oxidiert sein können; und wobei der nichtaromatische Ring an einen oder mehrere monocyclische(n) Carbocyclus-, Heterocyclus-, Aryl- oder Heteroarylring(e) anelliert sein kann;
Heteroaryl, wobei das Heteroaryl einen aromatischen Ring mit mindestens insgesamt 5 Ringatomen, 3 bis 13 Kohlenstoffatomen und 1 bis 4 Heteroatomen darstellt, unabhängig ausgewählt aus N, O, und S, in einem oder mehreren heterocyclischen Ring(en), wobei ein monocyclischer Heteroarylring an einen oder mehrere carbocyclische(n), heterocyclische(n) Ring, Aryl- oder Heteroarylring(e) anelliert sein kann;

(ii) Hydroxyl, Halogen, Amin, mono- oder dialkyliertem Amin, Imin, Silyl, Alkoxysilyl, Silyloxy, Amid, Carbonsäure, Ester, Nitril, Keton, Sulfoxid, Phosphin, Alkenylether, Thioether, Ether, cyclischer Ether, Polyether, Arylthio, Carbodiimid, Sulfoxid, Sulfon, Sulfonat, Sulfonamid, Oxythiophosphoryl, Phosphinoxid, und Borono;
wobei jeweils zwei Substituenten $R^2$, $R^{2'}$, $R^3$, $R^{3'}$, $R^j$ und $R^{j'}$ miteinander an den Stammring der allgemeinen Formel (Ia) oder die Stammringe der Formel (Ib) annelierte, unsubstituierte oder substituierte Ringe bilden können;
R ausgewählt ist aus der Gruppe, umfassend H, $CF_3$, $CCl_3$, $CBr_3$, $C_6F_5$, Triflat, Tosylat, Mesylat, oder Sulfinat, oder einer Abgangsgruppe;

mit der Maßgabe, daß $R^0$ oder $R^1$ oder beide $\left[R^x_{n-1}(SiO_{1,5})_n\right]$-$R^y$- sind; oder

b) eine Silsesquioxan-substituierte Verbindung der allgemeinen Formel (IIa)

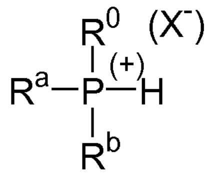

(IIa)

und deren Salze, wobei

$R^0$ abwesend sein kann und ein freies Elektronenpaar am Phosphoratom vorliegt oder $R^0$ $\left[R^x_{n-1}(SiO_{1,5})_n\right]$-$R^y$- ist und das Phosphoratom eine positive Ladung trägt und ein Salz mit dem Anion $X^-$ vorliegt, wobei $\left[R^x_{n-1}(SiO_{1,5})_n\right]$-$R^y$- wie in a) definiert ist;

$R^a$ und $R^b$ wie $R^1$ in a) definiert sind;

mit der Maßgabe, daß einer, zwei oder drei der Reste $R^0$, $R^a$ und $R^b$ die Formel

$\left[R^{x}_{n-1}\left(SiO_{1,5}\right)_{n}\right]$-$R^{y}$- besitzt bzw. besitzen; oder

c) eine Silsesquioxan-substituierte Verbindung der Formel (IIIa) oder (IIIb)

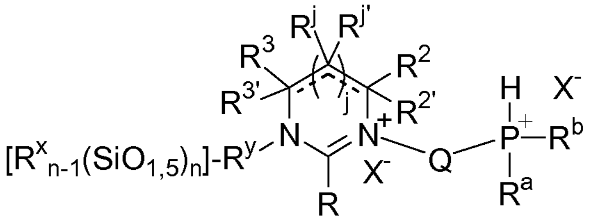

(IIIa)

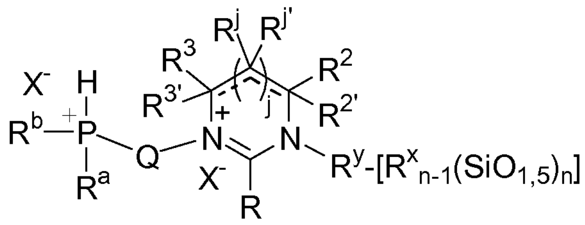

(IIIb)

wobei $R^a$ und $R^b$ wie in (1 b) definiert sind,

und j, Q, $R^2$, $R^{2'}$, $R^3$, $R^{3'}$, $R^j$, $R^{j'}$ und $\left[R^{x}_{n-1}\left(SiO_{1,5}\right)_{n}\right]$-$R^{y}$- wie in a) definiert sind.

(2) Silsesquioxan-substituierte Verbindung gemäß (1) mit der allgemeinen Formel (Ic) oder (Id)

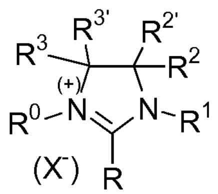

(Ic)

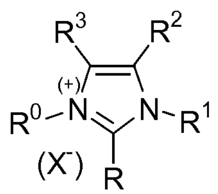

(Id)

und deren Salze, wobei R, $R^0$, $R^1$, $R^2$, $R^{2'}$, $R^3$ und $R^{3'}$ wie in (1) definiert sind.

(3) Silsesquioxan-substituierte Verbindung gemäß (1) oder (2) und deren Salze, wobei die Verbindung die allgemeine Formel (Ia), (Ic) oder (Id) besitzt, und wobei

$R^0=\left[R^x_{n-1}\left(SiO_{1,5}\right)_n\right]$-$R^y$- ist; oder

$R^0$ abwesend ist und $R^1=\left[R^x_{n-1}\left(SiO_{1,5}\right)_n\right]$-$R^y$- ist; oder $R^0=R^1=\left[R^x_{n-1}\left(SiO_{1,5}\right)_n\right]$-$R^y$- ist;

wobei $\left[R^x_{n-1}\left(SiO_{1,5}\right)_n\right]$-$R^y$- wie in (1) definiert ist.

(4) Silsesquioxan-substituierte Verbindung gemäß (1), (2) oder (3) mit der allgemeinen Formel (Ib), wobei die Verbindung ausgewählt ist aus den folgenden für Formeln (Ib") und (Ib"') beispielhaft aufgeführten Verbindungen:

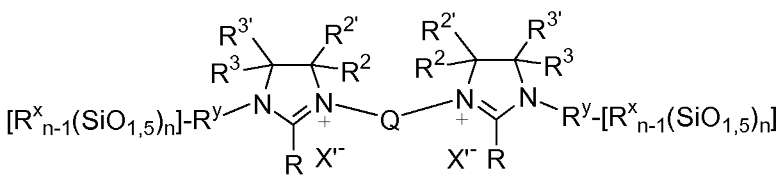

oder

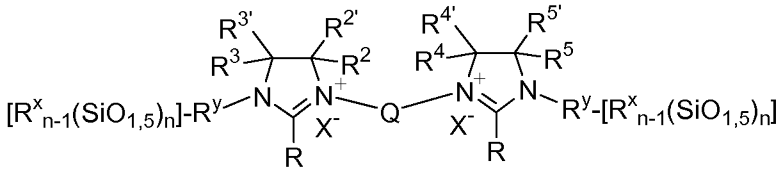

(Ib")

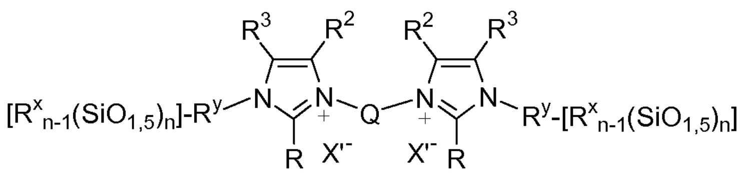

oder

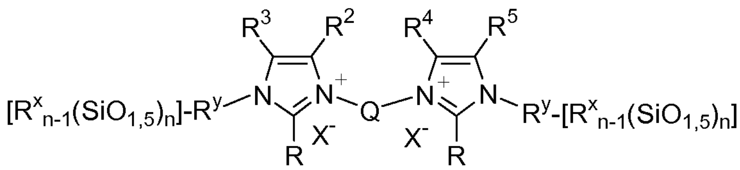

(Ib"')

wobei n, X, $R^2$, $R^{2'}$, $R^3$, $R^{3'}$, $R^4$, $R^{4'}$ $R^5$, $R^{5'}$ und $\left[R^x_{n-1}\left(SiO_{1,5}\right)_n\right]$-$R^y$- jeweils gleich oder verschieden sein können, und wie in (1) definiert sind, und Q wie in (1) definiert ist.

(5) Silsesquioxan-substituierte Verbindung gemäß (1) mit der allgemeinen Formel (IIIa) oder (IIIb), wobei die Verbindung ausgewählt ist aus den folgenden Formeln (IIIa'), (IIIb'), (IIIa") und (IIIb"):

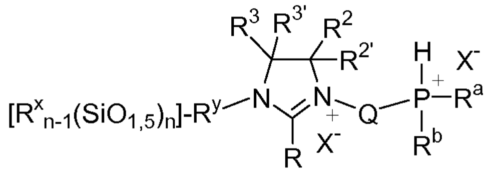

(IIIa')

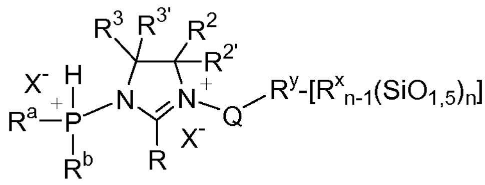

(IIIb')

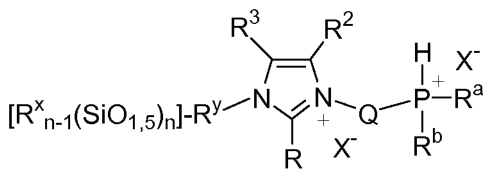

(IIIa")

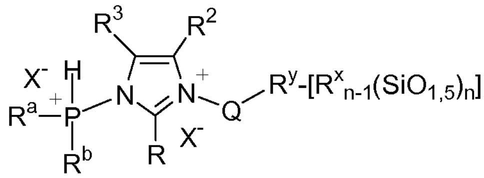

(IIIb")

wobei R, $R^a$, $R^b$, $R^2$, $R^{2'}$, $R^3$, $R^{3'}$, $\left[R_{n-1}^{x}\left(SiO_{1,5}\right)_n\right]$-$R^y$- und Q wie in (1) definiert sind, und $X^-$ ein Anion ist.

(6) Silsesquioxan-substituierte Verbindung und deren Salze gemäß einem aus (1) bis (5) oben, wobei $\left[R_{n-1}^{x}\left(SiO_{1,5}\right)_n\right]$ die folgende Struktur besitzt, ausgewählt aus der Gruppe, bestehend aus

a) $\left[R_5^{x}\left(SiO_{1,5}\right)_6\right]-$

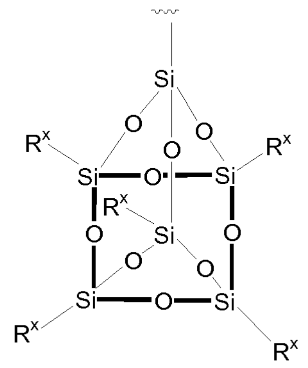

b) n=8: $\left[R_7^x\left(SiO_{1,5}\right)_8\right]-$

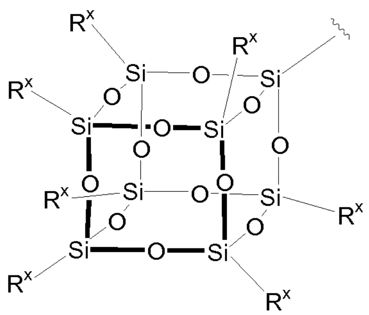

c) n=10: $\left[R_9^x\left(SiO_{1,5}\right)_{10}\right]-$

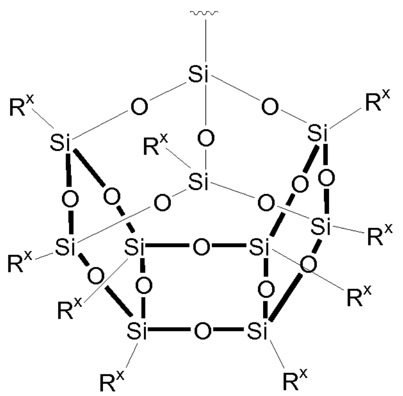

wobei $R^x$ wie in (1) definiert ist, und 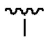 die Bindung zur Gruppe $R^y$ bedeutet.

(7) Silsesquioxan-substituierte Verbindung und deren Salze gemäß einem aus (1) bis (6), wobei $R^x$ ausgewählt ist aus der Gruppe, bestehend aus $C_1$-$C_{20}$-Alkyl, $C_1$-$C_{20}$-Alkenyl, $C_3$-$C_{10}$-Cycloalkyl, $C_6$-$C_{18}$-Aryl oder $C_3$-$C_{13}$-Heteroaryl, wobei die vorgenannten Gruppen durch Substituenten der Gruppe (i) gemäß (1) substituiert sein können.

(8) Silsesquioxan-substituierte Verbindung und deren Salze gemäß einem aus (1) bis (7), wobei $R^y$ ausgewählt ist aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_3$-$C_{13}$-Heteroarylen, wobei $R^y$ unsubstituiert oder sustituiert ist mit einem oder mehreren, ausgewählt aus der Gruppe, bestehend aus Heteroatom, Aryl, Ether, Ester, Polyether, Polythioether, Amino oder arylverbrücktem Alkylen.

(9) Silsesquioxan-substituierte Verbindung und deren Salze gemäß einem aus (1) bis (8) und deren Salze, wobei

$R^x$ geradkettige oder verzweigte $C_1$-$C_{20}$-Alkylreste, und $R^y$ substituierte oder unsubstituierte, geradkettige oder verzweigte $C_1$-$C_{20}$-Alkylenreste darstellt, wobei die vorgenannten Reste unsubstituiert oder substituiert sind durch Substituenten der Gruppe (i) oder (ii).

(10) Silsesquioxan-substituierte Verbindung und deren Salze gemäß einem aus (1) bis (9) und deren Salze, wobei $R^1$ halogensubstituiertes Alkyl, Aryl oder Heteroaryl ist, wobei die vorgenannten Reste unsubstituiert oder substituiert sind durch Substituenten der Gruppe (i) oder (ii).

(11) Silsesquioxan-substituierte Verbindung und deren Salze gemäß einem aus (1) bis (10), wobei $R^a$ und $R^b$ unabhängig voneinander ausgewählt sind aus der Gruppe, bestehend aus $C_1$-$C_{20}$-Alkyl oder $C_1$-$C_{20}$-Alkoxy, 1-Adamantyl, 2-Adamantyl, $C_3$-$C_{12}$-Cycloalkyl oder $C_3$-$C_{12}$-Cycloalkyloxy, substituiertem oder unsubstituiertem Aryl oder Aryloxy, wobei die vorgenannten Reste unsubstituiert oder substituiert sind durch Substituenten der Gruppe (i) oder (ii).

(12) Silsesquioxan-substituierte Verbindung und deren Salze gemäß (11), wobei $R^a$ 1-Adamantyl ist und $R^b$ $C_1$-$C_{18}$-Alkyl ist, oder
wobei $R^a$ 2-Adamantyl ist und $R^b$ $C_1$-$C_{18}$-Alkyl ist, oder
wobei $R^a$ $C_1$-$C_{18}$-Alkyl ist und $R^b$ ist 1-Adamantyl, oder
wobei $R^a$ $C_1$-$C_{18}$-Alkyl ist und $R^b$ 2-Adamantyl ist;
wobei Adamantyl in 1- oder 2-Stellung an das Phosphoratom gebunden sein kann gemäß den folgenden Formeln:

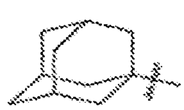
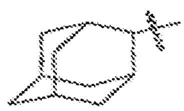

.

wobei $C_1$-$C_{18}$-Alkyl geradkettig oder verzweigt sein kann, und wobei $R^a$ und $R^b$ unsubstituiert oder substituiert sein können mit $C_1$- bis $C_8$-Alkyl, O-Alkyl($C_1$-$C_8$), OH, OCO-Alkyl($C_1$-$C_8$), O-Phenyl, Phenyl, Aryl, Fluor, $NO_2$, SiAlkyl($C_1$-$C_8$)$_3$, CN, COOH, CHO, $SO_3H$, $NH_2$, NH-Alkyl-($C_1$-$C_8$), N-Alkyl($C_1$-$C_8$)$_2$, P(Alkyl($C_1$-$C_8$))$_2$, P(Aryl)$_2$, $SO_2$-Alkyl($C_1$-$C_6$), SO-Alkyl($C_1$-$C_6$), $CF_3$, NHCO-Alkyl($C_1$-$C_4$), COO-Alkyl($C_1$-$C_8$), $CONH_2$, CO-Alkyl($C_1$-$C_8$), NHCHO, NHCOO-Alkyl($C_1$-$C_4$), CO-Phenyl, COO-Phenyl, CH=CH-$CO_2$-Alkyl($C_1$-$C_8$), CH=CHCOOH, PO(Phenyl)$_2$, PO(Alkyl($C_1$-$C_4$))$_2$, $PO_3H_2$, PO(OAlkyl($C_1$-$C_6$))$_2$, $SO_3$(Alkyl($C_1$-$C_4$)), wobei Aryl für einen Aromaten mit 5 bis 14 Ringkohlenstoffatomen steht, wobei ein oder mehrere Ringkohlenstoffatome durch Stickstoff-, Sauerstoff- und/oder Schwefelatome ersetzt sein können, so daß ein Heteroaromat mit 1 bis 13 Ringkohlenstoffatomen vorliegt.

(13) Silsesquioxan-substituierte Verbindung und deren Salze gemäß einem aus (1) bis (12), ausgewählt aus der Gruppe, bestehend aus Formel (Ia-1) bis (Ia-320) gemäß Tabelle 1, wobei $R^x$ wie in (1) definiert ist.

(14) Silsesquioxan-substituierte Verbindung und deren Salze gemäß (13), wobei $R^x$ ausgewählt ist aus der Gruppe, bestehend aus unsubstituiertem oder substituiertem, geradkettigem oder verzweigtem $C_1$-$C_{20}$-Alkyl, $C_1$-$C_{20}$-Alkenyl, $C_3$-$C_{10}$-Cycloalkyl, $C_6$-$C_{18}$-Aryl oder $C_3$-$C_{13}$-Heteroaryl.

(15) Verfahren zur Herstellung einer Silsesquioxan-substituierten Verbindung gemäß einem aus (1) bis (14), umfassend

(A) die chemische Umsetzung einer Verbindung, ausgewählt aus

a) einer stickstoffhaltigen Verbindung der Formel (Ia')

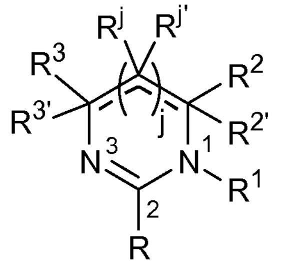

(Ia')

wobei R, $R^1$, $R^2$, $R^{2'}$, $R^3$, $R^{3'}$, $R^j$, $R^{j'}$, und j die in (1) beschriebenen Definitionen besitzen, wobei $R^0$ abwesend ist und ein freies Elektronenpaar an $N^3$ vorliegt; oder

b) einem Phosphin der Formel (IIa')

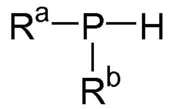

(IIa')

wobei $R^a$ und $R^b$ die in (1) beschriebene Definition besitzen; mit einem Silsesquioxan der Formel (IV) $\left[R^{x}_{n-1}\left(SiO_{1,5}\right)_{n}\right]\text{-}R^{y}\text{-}X$ (IV) jeweils als Reinsubstanz in der Schmelze; wobei X eine Abgangsgruppe ist und $\left[R^{x}_{n-1}\left(SiO_{1,5}\right)_{n}\right]\text{-}R^{y}\text{-}$ wie in (1) definiert ist;

(B) ggf. Reinigung des erhaltenen Reaktionsprodukts.

(16) Verfahren gemäß (15), wobei das Silsesquioxan (IV) und die stickstoffhaltige Verbindung (Ia') oder das Phosphin (IIa') miteinander, gegebenenfalls unter Rühren, bis zur Schmelze erhitzt und in der Schmelze umgesetzt werden.

(17) Verfahren (15) oder (16), wobei diejenige Reaktionskomponente, ausgewählt aus dem Silsesquioxan (IV) und der stickstoffhaltigen Verbindung (Ia') oder dem Phosphin (IIa') mit dem relativ niedrigeren Schmelzpunkt bis zur Schmelze erhitzt wird und die andere Reaktionskomponente in fester oder flüssiger (geschmolzener) Form, gegebenenfalls unter Rühren, zugegeben wird und die beiden Reaktionskomponenten in der Schmelze umgesetzt werden.

(18) Verfahren gemäß einem aus (15) bis (17), wobei die Schmelztemperatur bzw. Reaktionstemperatur in einem Bereich von 70°C bis 190°C liegt.

(19) Verfahren gemäß einem aus (15) bis (18), wobei das Silsesquioxan (IV) durch Erhitzen geschmolzen wird und die stickstoffhaltige Verbindung (Ia') bzw. das Phosphin (IIa') in fester Form unter Rühren zugegeben wird und die Reaktionskomponenten in der Schmelze bis zur Vollständigkeit der Umsetzung gehalten werden.

(20) Verfahren gemäß einem aus (15) bis (19), wobei das stickstoffhaltige Derivat (Ia') im 10-100-fachen molaren Überschuss in Bezug auf das einzusetzende Silsesquioxan (IV) als Schmelze bei 70°C bis 190°C vorgelegt wird, und anschließend das Silsesquioxan (IV) in fester Form portionsweise unter Rühren zugegeben wird.

(21) Verfahren gemäß einem aus (15) bis (19), wobei das Silsesquioxan (IV)

a) in einer Menge von 0,9 bis 1,1 Moläquivalenten in Bezug auf die Menge der stickstoffhaltigen Verbindung (Ia')

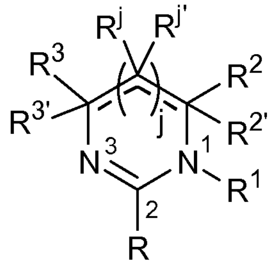

(Ia')

eingesetzt wird, wobei ein Produkt der Formel (Ic') oder (Id') gebildet wird

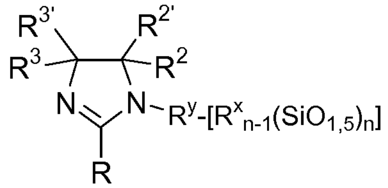

(Ic')

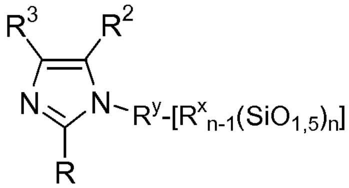

(Id')

wobei $\left[R^{x}_{n-1}\left(SiO_{1,5}\right)_{n}\right]$ $-R^{y}-$, $R^2$, $R^{2'}$, $R^3$ und $R^{3'}$ die in (1) beschriebenen Definitionen besitzen, und $R^1$ in Formel (Ia') H ist;
oder wobei ein Produkt der Formel (Ic'') oder (Id'') gebildet wird

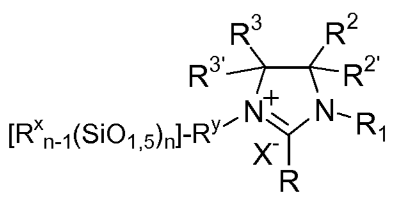

(Ic'')

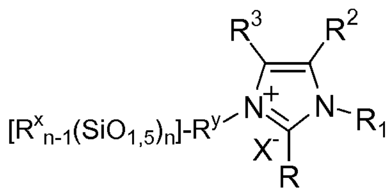

(Id")

wobei $\left[R^{x}_{n-1}\left(SiO_{1,5}\right)_{n}\right]$-$R^{y}$-, R, $R^1$, $R^2$, $R^{2'}$, $R^3$ und $R^{3'}$ die in (1) beschriebenen Definitionen besitzen, wobei $R^1$ in Formel (Ia'), (Ic") und (Id") nicht H ist;

b) in einer Menge von 1,9 bis 2,1 Moläquivalenten in Bezug auf die Menge der stickstoffhaltigen Verbindung (Ia') eingesetzt wird, wobei ein Produkt der Formel (Ic') oder (Id') gebildet wird

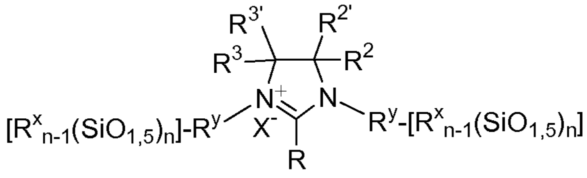

(Ic"')

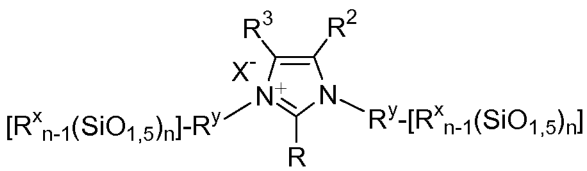

(Id"')

wobei $\left[R^{x}_{n-1}\left(SiO_{1,5}\right)_{n}\right]$-$R^{y}$-, R, $R^1$, $R^2$, $R^{2'}$, $R^3$ und $R^{3'}$ die in (1) beschriebenen Definitionen besitzen, wobei $R^1$ in Formel (Ia') H ist;

c) in einer Menge von 0,9 bis 1,1 Moläquivalenten in Bezug auf die Menge des Phosphins (IIa') eingesetzt wird, wobei ein Produkt der Formel (IIa) gebildet wird, wobei $R^0$ die Formel $\left[R^{x}_{n-1}\left(SiO_{1,5}\right)_{n}\right]$ $R^{y}$ - besitzt:

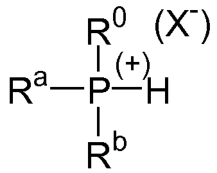

(IIa)

wobei $\left[R^{x}_{n-1}\left(SiO_{1,5}\right)_{n}\right]$ $R^y$ - , $R^a$, $R^b$ und $R^0$ in Formel (IIa') die in (1) beschriebenen Definitionen besitzen;

d) in einer Menge von 1,9 bis 2,1 Moläquivalenten in Bezug auf die Menge des Phosphins (IIa') eingesetzt wird, und ein Produkt der Formel (IIa) gebildet wird, wobei $R^0$ und $R^a$ oder $R^b$ die Formel $\left[R^{x}_{n-1}\left(SiO_{1,5}\right)_{n}\right]$ $R^y$ - besitzen:

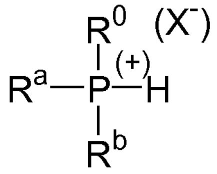

(IIa)

wobei $\left[R^{x}_{n-1}\left(SiO_{1,5}\right)_{n}\right]$ $R^y$ - , $R^a$, $R^b$ und $R^0$ in Formel (IIa') die in (1) beschriebenen Definitionen besitzen.

(22) Verfahren gemäß einem aus (15) bis (21), wobei der Schmelzpunkt mindestens einer der Reaktanden, ausgewählt aus dem Silsesquioxan (IV) und der stickstoffhaltigen Verbindung (Ia') oder dem Phosphin (IIa') durch Zugabe einer inerten Verbindung in einer schmelzpunkterniedrigenden Menge abgesenkt wird, wobei die schmelzpunkterniedrigende inerte Verbindung eine organische Verbindung ist, die einen Siedepunkt besitzt, der über der Schmelztemperatur der Reaktanden liegt und chemisch inert gegenüber den Reaktanden ist.

(23) Verfahren gemäß (22), wobei die schmelzpunkterniedrigende inerte Verbindung ausgewählt ist aus der Gruppe umfassend Kohlenwasserstoffe und Ether.

(24) Verfahren gemäß (22), wobei die schmelzpunkterniedrigende inerte Verbindung ausgewählt aus der Gruppe, bestehend aus Toluol, o-, m- oder p-Xylol, n-Heptan, 2-Methylhexan, 3-Methylhexan, 2,2-Dimethylpentan, 2,3-Dimethylpentan, 2,4-Dimethylpentan, 3,3-Dimethylpentan, 3,4-Dimethylpentan, 2,2,3-Dimethylbutan und Dibutylether.

(25) Verfahren gemäß einem aus (15) bis (24),
wobei eine stickstoffhaltige Verbindung (Ia) der Formel (Ic) oder (Id), wobei $R^0$ abwesend ist:

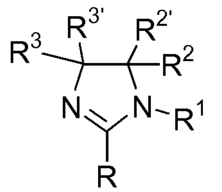

(Ic)

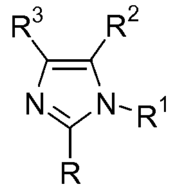

(Id)

mit dem Silsesquioxan der Formel (IV) umgesetzt wird,

$$\left[R^{x}_{n-1}\left(SiO_{1,5}\right)_{n}\right]\text{-}R^{y}\text{-}X \text{ (IV)}$$

wobei $R^1$=H ist und n, $R^x$, $R^y$, $R^2$, $R^{2'}$, $R^3$ und $R^{3'}$ wie in (1) definiert sind und X eine Abgangsgruppe ist, und ein im Verhältnis zur Verbindung der Formel (IV) 10-100-facher Überschuß an Verbindung (Ic) oder (Id) als Schmelze bei 70-190°C vorgelegt wird und portionsweise mit dem Silsesquioxan der Formel (IV) versetzt wird, wodurch eine Silsesquioxan-substituierte Verbindung der folgenden Formel (Ic’) oder (Id’) hergestellt wird:

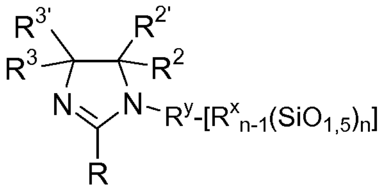

(Ic’)

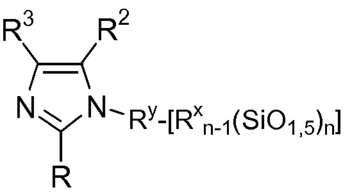

(Id’)

(26) Verfahren gemäß (25), wobei ein 20-40-facher Überschuß an Verbindung (Ic) oder (Id) eingesetzt wird.

(27) Verfahren gemäß einem aus (15) bis (24),
wobei eine stickstoffhaltige Verbindung (la) der Formel (Ic) oder (Id), wobei $R^0$ abwesend ist:

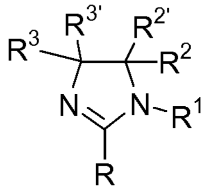

(Ic)

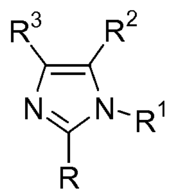

(Id)

mit dem Silsesquioxan der Formel (IV) umgesetzt wird,

$$\left[R^{x}_{n-1}\left(SiO_{1,5}\right)_{n}\right]\text{-}R^{y}\text{-}X \text{ (IV)}$$

wobei $R^1$, $R^x$, $R^y$, $R^2$, $R^{2'}$, $R^3$ und $R^{3'}$ wie in (1) definiert sind, $R^1$ nicht H ist, und wobei das Silsesquioxan der Formel (IV) als Schmelze bei 70-190°C vorgelegt wird und portionsweise mit 0,9-1,1 Moläquivalenten Verbindung (Ic) oder (Id) versetzt wird,
wodurch eine Silsesquioxan-substituierte Verbindung der Formel (Ic") oder (Id") hergestellt wird:

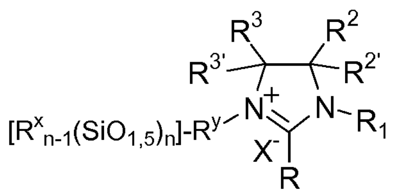

(Ic")

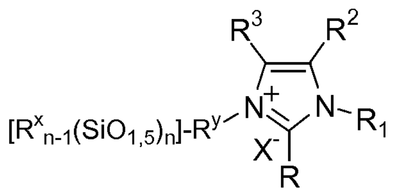

(Id")

(28) Verfahren gemäß (15),
wobei ein Phosphin der Formel (IIa')

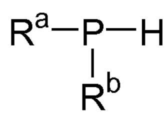

(IIa')

bei 70°C-190°C geschmolzen wird, und zu der Schmelze 0,9-1,1 Moläquivalente des Silsesquioxans (IV) gegeben werden,
wobei $R^a$ und $R^b$ wie in (1) definiert sind,
wodurch eine Verbindung der Formel (IIa) hergestellt wird

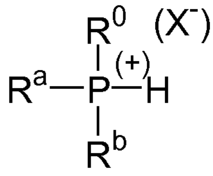

(IIa)

wobei $R^0$ die Formel $\left[R^x_{n-1}(SiO_{1,5})_n\right]$-$R^y$- besitzt.

(29) Verfahren gemäß einem aus (15) bis (25), des Weiteren umfassend

(C) die chemische Umsetzung in der Schmelze des in Schritt (A) bzw. (B) erhaltenen Produkts der Formel (Ia')

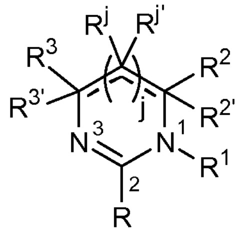

(Ia')

wobei $R^1$=H und R, $R^x$, $R^y$, $R^2$, $R^{2'}$, $R^3$, $R^{3'}$, $R^j$, $R^{j'}$, n und j die in (1) beschriebenen Definitionen besitzen,

mit der Maßgabe, daß $R^1 = \left[R^x_{n-1}(SiO_{1,5})_n\right]$-$R^y$- ist,

mit einer Verbindung der Formel X'-Q-X', wobei Q=-$(CH_2)_q$- und q= 1, 2, 3, 4, 5, 6, 7, 8, 9, 10, 11, 12, 13, 14, 15, 16, 17, 18, 19 oder 20; und X' eine Abgangsgruppe bezeichnet, wobei ein Produkt mit der Formel (Ib) hergestellt wird:

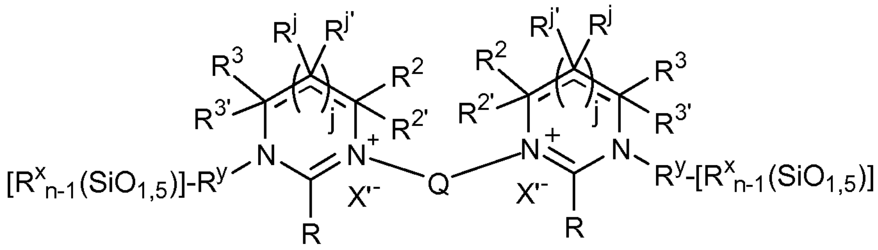

(Ib) .

(30) Verfahren gemäß (29), wobei in (C) 1,9-2,1 Moläquivalente einer stickstoffhaltigen Verbindung (Ia'), ausgewählt aus den Formeln (Ic') und (Id')

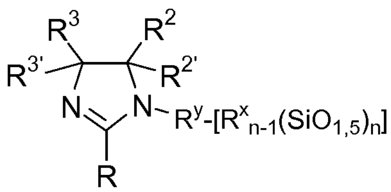

(Ic')

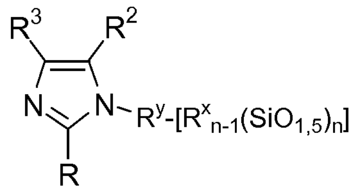

(Id')

bei 70°C-190°C durch Zugabe einer schmelzpunkterniedrigenden inerten Verbindung geschmolzen werden, und in der Schmelze mit 0,9-1,1 Moläquivalenten der Verbindung X'-Q-X' umgesetzt werden, und die schmelzpunkterniedrigende inerte Verbindung unter vermindertem Druck entfernt wird,
wobei Q= $-(CH_2)_q-$, wobei q =1, 2, 3, 4, 5, 6, 7, 8, 9, 10, 11, 12, 13, 14, 15, 16, 17, 18, 19 oder 20 ist und X' eine Abgangsgruppe bezeichnet,
wodurch eine Silsesquioxan-substituierte Verbindung der Formel (Ib") oder (Ib"') hergestellt wird:

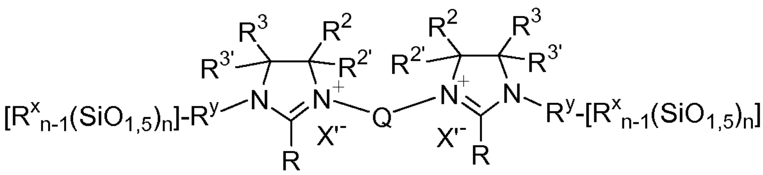

(Ib")

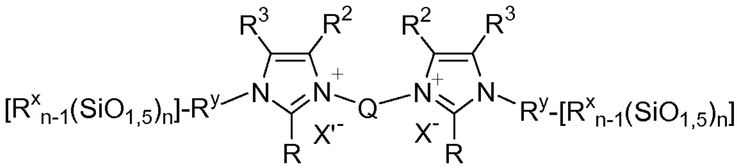

(Ib"')

und wobei $R^x$, $R^y$, $R^2$, $R^{2'}$, $R^3$ und $R^{3'}$ die in (1) beschriebenen Definitionen besitzen

(31) Verfahren zur Herstellung einer Silsesquioxan-substituierten Verbindung gemäß (1), (4) oder (5), wobei eine Verbindung der Formel (Ia'),

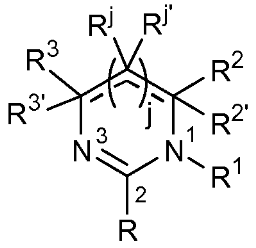

(Ia')

wobei $R^1 = \left[R^x_{n-1}\left(SiO_{1,5}\right)_n\right]\text{-}R^y\text{-}$ und $R^x$, $R^y$, $R^2$, $R^{2'}$, $R^3$, $R^{3'}$, $R^j$, $R^{j'}$, n und j die in (1) beschriebenen Definitionen besitzen,

mit einer Verbindung der Formel X'-Q-X' umgesetzt wird, wobei Q=-$(CH_2)_q$- und wobei q= 1, 2, 3, 4, 5, 6, 7, 8, 9, 10, 11, 12, 13, 14, 15, 16, 17, 18, 19 oder 20, und wobei X' eine Abgangsgruppe bezeichnet,

gefolgt von einem Schritt der Umsetzung der erhaltenen Produkts mit der Verbindung der Formel (IIa") oder (IIa"')

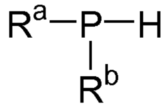

(IIa')

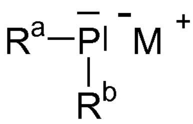

(IIa")

wobei $R^a$ und $R^b$ wie in (1) definiert sind, und M ein Metallkation ist, wobei eine Verbindung der Formel (IIIa) oder (IIIb) hergestellt wird:

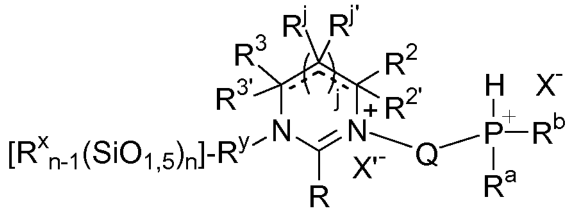

(IIIa)

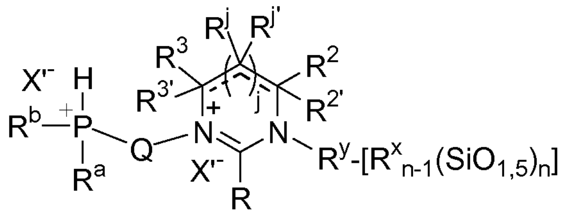

(IIIb) .

(32) Verfahren gemäß (31), umfassend die Umsetzung einer Verbindung der Formel (Ic') oder (Id')

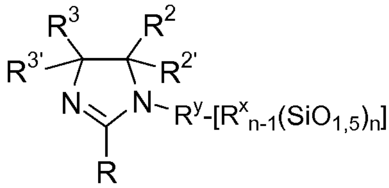

(Ic')

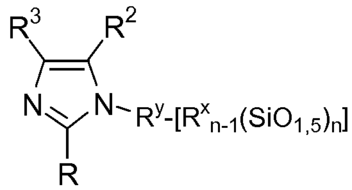

(Id')

wobei $R^x$, n, $R^y$, R, $R^2$, $R^{2'}$, $R^3$, $R^{3'}$ und X wie in (1) definiert sind,
mit einer Verbindung der Formel X'-$(CH_2)_q$-X', wobei X' eine Abgangsgruppe ist und Q= -$(CH_2)_q$-, wobei q= 1, 2, 3, 4, 5, 6, 7, 8, 9, 10, 11, 12, 13, 14, 15, 16, 17, 18, 19 oder 20, gefolgt von Umsetzung des erhaltenen Produkts mit der Verbindung der Formel (IIa") gemäß (31), wobei eine Verbindung der Formel (IIIa") bzw. (IIIb") erhalten wird:

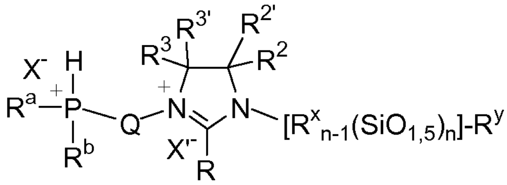

(IIIa")

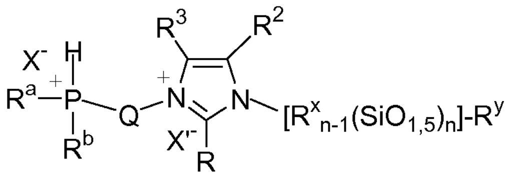

(IIIb")

(33) Verfahren gemäß einem aus (29) bis (31), wobei in (C) anstelle von 0,9-1,1 Moläquivalenten im Bezug auf die stickstoffhaltige Verbindung ein molarer Überschuß an Verbindung X'-Q-X' eingesetzt wird, und zunächst ein Produkt der allgemeinen Formel (Ib'''') gebildet wird

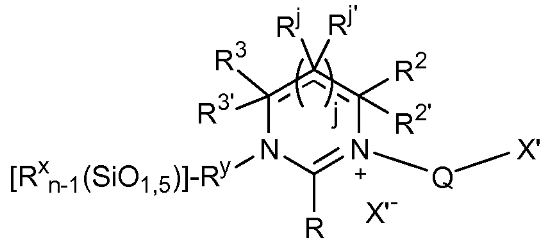

(Ib'''')

das anschließend (D) mit einer Verbindung der Formel (Ia') bzw. (Ia'')

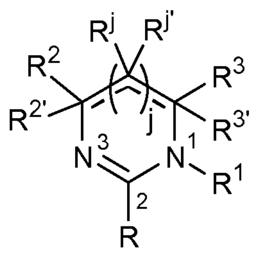

(Ia')

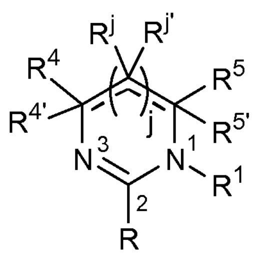

(Ia'')

wobei $R^1 = \left[R^x_{n-1}\left(SiO_{1,5}\right)_n\right]\text{-}R^y\text{-}$ ist, umgesetzt wird, wobei in Formeln (Ib'''') und (Ia') $R^x$, n, $R^y$, R, $R^2$, $R^{2'}$, $R^3$, $R^{3'}$, $R^j$, $R^{j'}$, und j jeweils gleich oder verschieden sein können und wie in (1) definiert sind, Q, $R^4$, $R^5$, $R^{4'}$, $R^{5'}$, X und X' wie in (1) definiert sind;

wobei in (D) ein Produkt der Formel (Ib) (bei Umsetzung mit einer Verbindung der Formel (Ia'), also dem gleichen Edukt wie bei der Herstellung des Produkts mit der Formel (Ib'''')), bzw. wobei ein Produkt mit der Formel (Ib') (bei Umsetzung mit einer Verbindung der Formel (Ia''), also einem im Vergleich zum ersten Schritt unterschiedlichen Edukt) hergestellt wird:

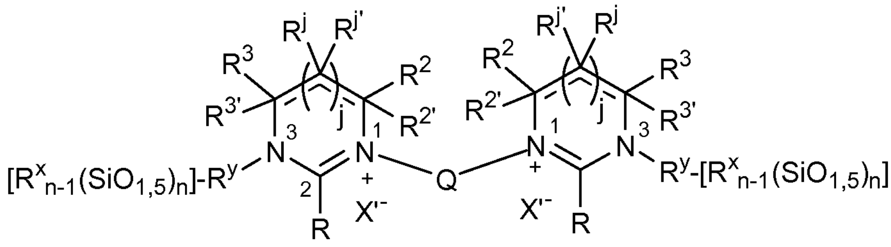

(Ib)

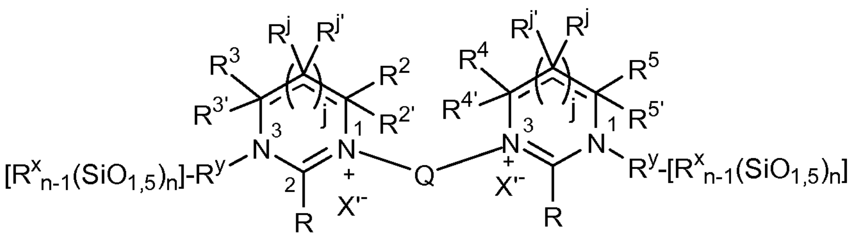

(Ib')

Die symmetrische Struktur (Ib) kann auch direkt hergestellt werden, wenn 2 Moläquivalente der Verbindung (Ia') mit 1 Moläquivalent der Verbindung X'-Q-X' umgesetzt werden, wie beispielsweise in (30) oben für die Synthese der Verbindungen (Ib") und (Ib"') gezeigt ist.

(34) Katalysator, umfassend eine oder mehrere Silsesquioxan-Verbindungen gemäß einem aus (1) bis (14) als Ligand und ein oder mehrere Verbindungen eines Übergangsmetalls.

(35) Verwendung einer Silsesquioxan-substituierten Verbindung gemäß einem aus (1) bis (14) als Ligand für die Herstellung von Katalysatoren oder als Bestandteile von Katalysatoren in homogenen-Übergangsmetall-katalysierten C-C- und C-X-Kupplungen, in der homogen-katalysierten Hydroformylierung oder in der Olefinmetathese.

Die in der vorliegenden Beschreibung wiedergegebenen Strukturformeln sind insbesondere hinsichtlich der in den erfindungsgemäßen Verbindungen angegebenen Elektronenverteilung lediglich eine Annäherung. So sind beispielsweise von den Strukturen (Ia) und (Ib) ebenso folgende alternative Strukturen umfaßt:

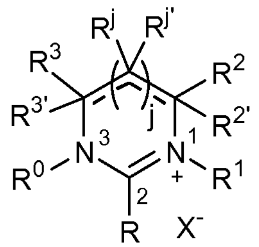

(Ia)

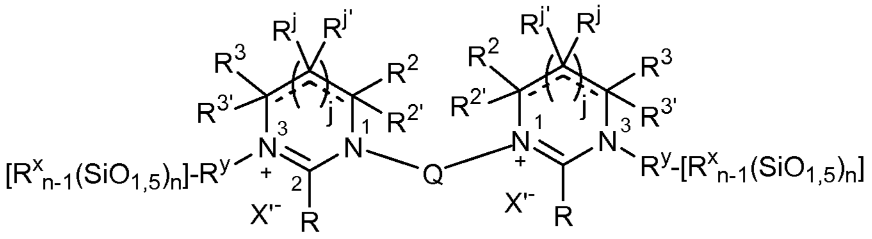

(Ib)

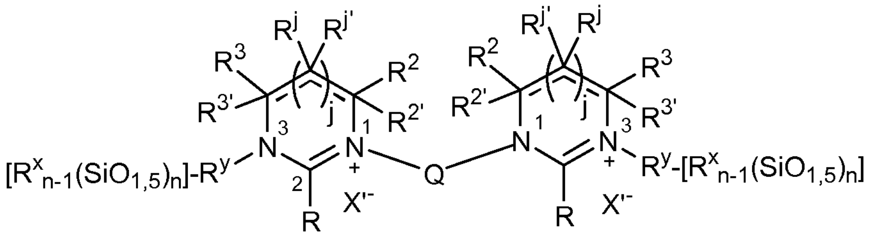

Dies wird durch die folgenden zusammenfassenden, in der vorliegenden Beschreibung alternativ verwendeten Formeln wie folgt zum Ausdruck gebracht:

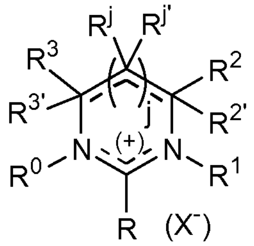

≡

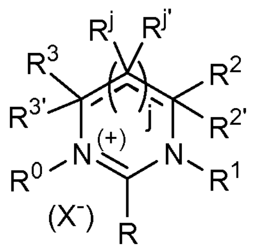

bzw.

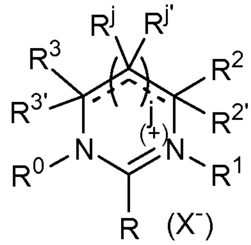

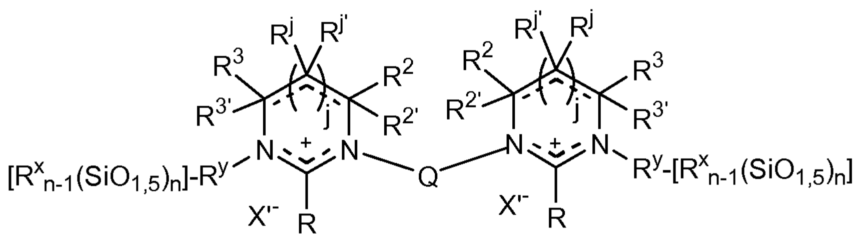

wobei - - - eine oder mehrere C-C- oder C-N-Doppelbindungen im Ring bedeutet und die Alternativen ausdrückt, daß die positive Ladung in jedem Ring jeweils an $N^1$ oder $N^3$ vorliegen kann, und (+) bzw. ($X^-$) in Formel (Ia) ausdrücken, daß eine Ladung und das Anion X abwesend sein können.

Ebenso sind durch die Strukturen (IIIa) und (IIIb) folgende alternative Strukturen umfaßt:

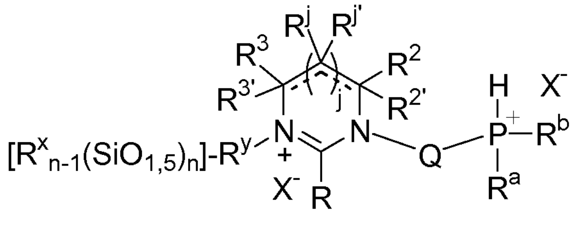

(IIIa)

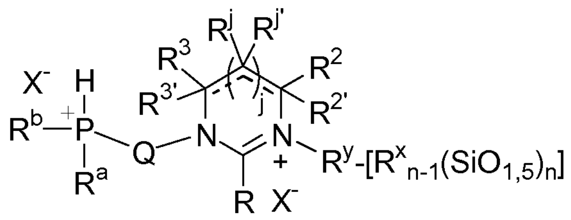

(IIIb)

Entsprechendes gilt auch für die den Strukturen (Ia), (Ib), (IIIa) und (IIIb) untergeordneten Strukturen wie z.B. (Ib'), (Ic''), (Id''), (Ib''), (Ib'''), (IIIa'') und (IIIb'').

Die Erfindung wird im Folgenden in Einzelheiten beschrieben.

Gemäß (1) wird eine stickstoffhaltige Verbindung der allgemeinen Formel (Ia), (Ib) oder (Ib') bereitgestellt,

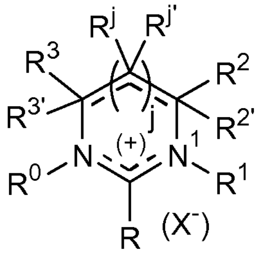

(Ia)

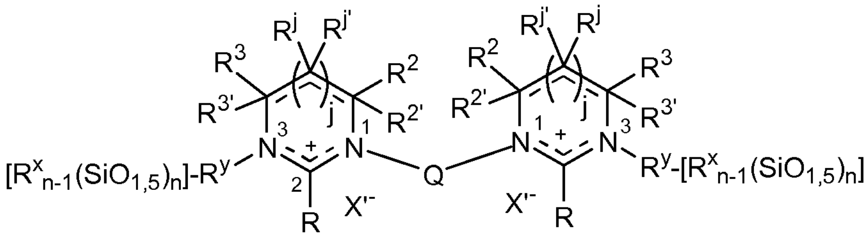

(Ib)

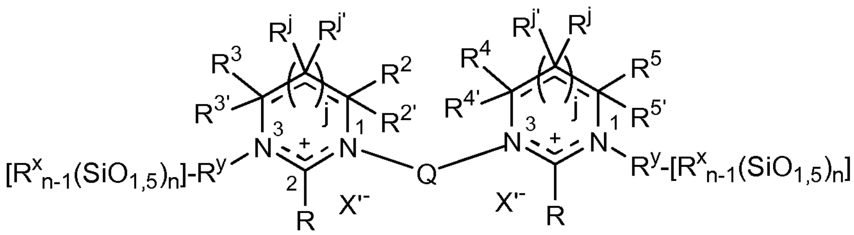

(Ib')

wobei j gleich 0, 1 oder 2 ist, $R^0$ abwesend ist und ein freies Elektronenpaar an $N^3$ vorliegt oder $R^0$ gleich $\left[R^x_{n-1}\left(SiO_{1,5}\right)_n\right]$-$R^y$- ist und $N^3$ eine positive Ladung trägt,

wobei n gleich 4, 6, 8, 10, 12, 14, 16 oder 18 ist und $X^-$ ein Anion ist;

Q eine verbrückende Gruppe ist, ausgewählt aus -$(CH_2)_q$- mit q=1, 2, 3, 4, 5, 6, 7, 8, 9, 10, 11, 12, 13, 14, 15, 16, 17,

18, 19 oder 20, oder Arylen, insbesondere Phenylen, und bevorzugt $-(CH_2)_q$ mit q=1, 2, 3, 4, 5, 6, 7, 8, 9, 10, und besonders bevorzugt mit q=2, 3 oder 4 ist;

- - - 0, 1 oder 2 C-C- und eine oder mehrere C-N-Doppelbindungen im Ring bedeutet; und eine positive Ladung an $N^1$ oder $N^3$ in Formel (Ia), bzw. an $N^1$ und/oder $N^3$ in Formel (Ib) und (Ib') vorliegen kann;

$R^1 = \left[R^x_{n-1}\left(SiO_{1,5}\right)_n\right]-R^y-$ ist oder ausgewählt ist aus der folgenden Gruppe (i), und unsubstituiert oder substituiert ist mit Substituenten, ausgewählt aus der folgenden Gruppe (i) oder (ii); und

$R^x$ ausgewählt ist aus der folgenden Gruppe (i), und unsubstituiert oder substituiert ist mit Substituenten, ausgewählt aus der folgenden Gruppe (i).

Bevorzugt ist $R^x$ ein substituierter oder unsubstituierter, geradkettiger oder verzweigter $C_1$-$C_{20}$-Alkylrest, und besonders bevorzugt ein $C_4$-$C_{10}$-Alkylrest. Weiter bevorzugt ist $R^x$ ein substituierter oder unsubstituierter, geradkettiger oder verzweigter $C_4$-$C_8$-Alkylrest, wobei die Substituenten aus der Gruppe (i) oder (ii), und bevorzugt aus der Gruppe (i) ausgewählt sind. Besonders bevorzugt ist $R^x$ ein Isobutylrest.

$R^y$ ist ausgewählt aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_3$-$C_{13}$-Heteroarylen; und unsubstituiert oder substituiert ist mit Substituenten, ausgewählt aus der folgenden Gruppe (i) oder (ii).

Bevorzugt ist $R^y$ ausgewählt aus der Gruppe, bestehend aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_3$-$C_{13}$-Heteroarylen, wobei $R^y$ substituiert sein kann mit einem oder mehreren, ausgewählt aus Heteroatom, Aryl, Ether, Ester, Polyether, Polythioether, Amino, Alkylamino und einer arylverbrückten Alkylenkette.

$R^2$, $R^{2'}$, $R^3$, $R^{3'}$, $R^4$, $R^{4'}$, $R^5$, $R^{5'}$, bzw. $R^j$ und $R^{j'}$ sind erfindungsgemäß ausgewählt aus Wasserstoff und den folgenden Gruppen (i) oder (ii); und unsubstituiert oder substituiert sind mit Substituenten, ausgewählt aus der folgenden Gruppe (i) oder (ii);

(i) geradkettigem oder verzweigtem $C_1$-$C_{20}$-Alkyl- oder $C_1$-$C_{20}$-Alkoxy, mono-, bi- oder tricyclischem $C_3$-$C_{10}$-Cycloalkyl oder $C_3$-$C_{10}$-Cycloalkyloxy; bevorzugt $C_4$-$C_{10}$-Alkyl- oder $C_4$-$C_{10}$-Alkoxy, und besonders bevorzugt $C_4$-$C_8$-Alkyl oder $C_4$-$C_8$-Alkoxy,
geradkettigem oder verzweigtem $C_1$-$C_{20}$-Thioalkyl,
geradkettigem oder verzweigtem $C_2$-$C_{20}$-Alkenyl- oder $C_2$-$C_{20}$-Alkenyloxy;
Aryl oder Aryloxy, wobei Aryl oder Aryloxy einen mono- oder polycyclischen aromatischen, nicht anellierten oder anellierten Kohlenwasserstoffrest mit 6 bis 18 Kohlenstoffatomen darstellt;
Arylalkyl (Aralkyl) oder Alkylaryl, wobei Aryl und Alkyl wie oben definiert sind;
Heterocyclus, wobei der Heterocyclus einen gesättigten oder teilweise gesättigten 3- bis 7-gliedrigen nichtaromatischen Ring aus Kohlenstoffatomen und 1 bis 4 unabhängig aus N, O und S ausgewählten Heterotaomen darstellt, wobei N oder S oxidiert oder nicht oxidiert sein können; und wobei der nichtaromatische Ring an einen oder mehrere monocyclische(n) Carbocyclus-, Heterocyclus-, Aryl- oder Heteroarylring(e) anelliert sein kann;
Heteroaryl, wobei das Heteroaryl einen aromatischen Ring mit mindestens insgesamt 5 Ringatomen, 3 bis 13 Kohlenstoffatomen und 1 bis 4 Heteroatomen darstellt, unabhängig ausgewählt aus N, O, und S, in einem oder mehreren heterocyclischen Ring(en), wobei ein monocyclischer Heteroarylring an einen oder mehrere carbocyclische(n), heterocyclische(n) Ring, Aryl- oder Heteroarylring(e) anelliert sein kann;

(ii) Hydroxyl, Halogen, Amin, mono- oder dialkyliertem Amin, Imin, Silyl, Alkoxysilyl, Silyloxy, Amid, Carbonsäure, Ester, Nitril, Keton, Sulfoxid, Phosphin, Alkenylether, Thioether, Ether, cyclischer Ether, Polyether, Arylthio, Carbodiimid, Sulfoxid, Sulfon, Sulfonat, Sulfonamid, Oxythiophosphoryl, Phosphinoxid, und Borono.

In den erfindungsgemäßen Verbindungen können jeweils zwei Substituenten aus $R^2$, $R^{2'}$, $R^3$, $R^{3'}$, $R^4$, $R^{4'}$, $R^5$, $R^{5'}$, $R^j$ und $R^{j'}$ miteinander an den Stammring der allgemeinen Formel (Ia) oder die Stammringe der Formel (Ib) annelierte, unsubstituierte oder substituierte Ringe bilden. Beispielsweise kann in der Formel (Ia) für j=0 und insgesamt 2 Doppelbindungen im Ring der Rest $R^2$ mit dem Rest $R^3$ einen Ring mit dem (Imidazol)-Stammring bilden, wobei ein anelliertes System entsteht.

Erfindungsgemäß ist R ausgewählt aus der Gruppe, umfassend H, $CF_3$, $CCl_3$, $CBr_3$, $C_6F_5$, Triflat, Tosylat, Mesylat, oder Sulfinat, oder einer Abgangsgruppe.

In den Verbindungen der Formel (Ia) und (Ib) gilt, daß $R^0$ oder $R^1$ oder beide $\left[R^x_{n-1}\left(SiO_{1,5}\right)_n\right] R^y -$ sind.

Gemäß einer weiteren bevorzugten Ausführungsform umfaßt die Erfindung Verbindungen der allgemeinen Formel (Ia)

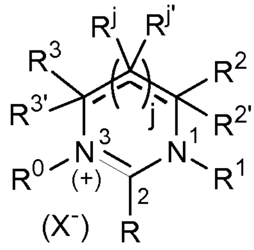

(Ia)

wobei j=1, 2 oder 3, oder die Ringstruktur ist aus einem oder aus mehreren, anellierten Ringen aufgebaut, und die stickstoffhaltige Verbindung ist ausgewählt aus den folgenden Strukturen:

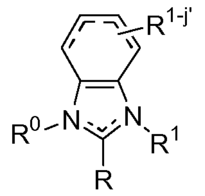

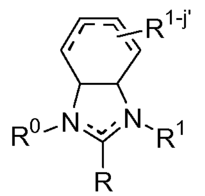

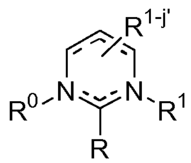

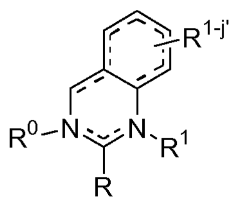

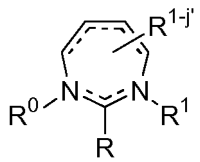

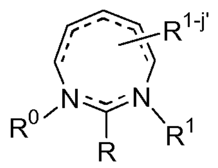

wobei $R^{1-j'}$ jeweils die Reste $R^2$, $R^{2'}$, $R^3$, $R^{3'}$ bis $R^j$ bzw. $R^{j'}$ als Substituenten an einer beliebigen Ringposition bedeuten, und die vorgenannten Reste wie oben unter Formel (Ia) definiert sind, und ‗‗‗ jeweils Einfach- oder Doppelbindungen im Ring bzw. den Ringen bedeutet. Die vorgenannten Verbindungen können auch als Salze mit $X^-$ bzw. HX, vorliegen, wobei bevorzugt X=Halogen.

Die Erfindung liefert auch ein Phosphin der allgemeinen Formel (IIa)

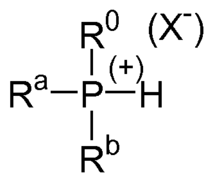

(IIa)

und dessen Salze, wobei

$R^0$ abwesend sein kann und ein freies Elektronenpaar am Phosphoratom vorliegt oder $R^0$ $\left[R^x_{n-1}\left(SiO_{1,5}\right)_n\right]$-$R^y$- ist und das Phosphoratom eine positive Ladung trägt und ein Salz mit dem Anion $X^-$ vorliegt, wobei $\left[R^x_{n-1}\left(SiO_{1,5}\right)_n\right]$-$R^y$-,

$R^a$ und $R^b$ wie $R^1$ in Formel (Ia) definiert sind;

mit der Maßgabe, daß einer, zwei oder drei der Reste $R^0$, $R^a$ und $R^b$ die Formel $\left[R^x_{n-1}\left(SiO_{1,5}\right)_n\right]$-$R^y$- besitzt bzw. besitzen.

Die Erfindung liefert auch eine Verbindung der Formel (IIIa) oder (IIIb)

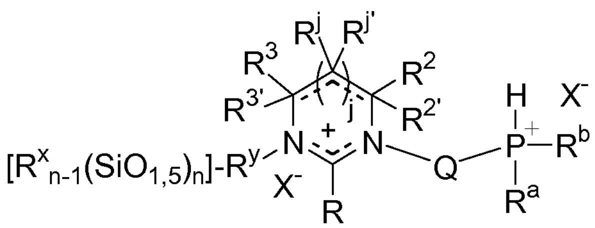

(IIIa)

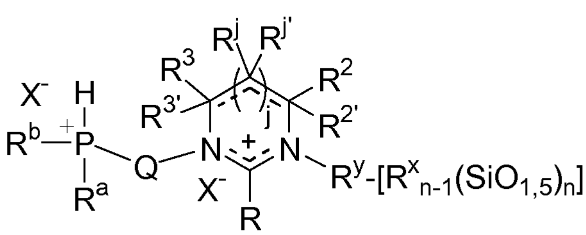

(IIIb)

wobei $R^a$ und $R^b$ wie unter Formel (IIa) oben beschrieben definiert sind,

und j, Q, $R^2$, $R^{2'}$, $R^3$, $R^{3'}$, $R^j$, $R^{j'}$ und $\left[R^x_{n-1}\left(SiO_{1,5}\right)_n\right]$-$R^y$- wie unter Formel (Ia) oben beschrieben definiert sind.

Die erfindungsgemäße Baugruppe des oligomeren polyedrischen Silsesquioxans wird in den erfindungsgemäßen Strukturen durch die Formel $\left[R^x_{n-1}\left(SiO_{1,5}\right)_n\right]$-$R^y$- zum Ausdruck gebracht, wobei $R^x$ allgemein die Substituenten an den Siliciumatomen, und $R^y$ die sog. Spacergruppen, die die Silsesquioxaneinheit mit der N-heterocyclischen oder phosphorhaltigen Kernstruktur verbinden, bezeichnen, und wobei n=4, 6, 8, 10, 12, 14, 16, oder 18, bevorzugt n= 4, 6, 8, 10, 12 oder 14 ist.

Bevorzugt besitzt in den vorgenannten Verbindungen $\left[R^x_{n-1}\left(SiO_{1,5}\right)_n\right]$-$R^y$- gemäß (6) eine der folgenden Silsesquioxanstrukturen:

a) n=6: $\left[R^x_5\left(SiO_{1,5}\right)_6\right]$ -$R^y$-; pentaedrische Struktur in Form eines dreieckigen Prismas mit sechs Siliciumatomen, die jeweils an den Ecken der Struktur angeordnet sind:

b) n=8: $\left[R^x_7\left(SiO_{1,5}\right)_8\right]$-$R^y$-; hexaedrische Struktur in Form eines Würfels mit acht Siliciumatomen, die an jeweils an den Ecken der Struktur angeordnet sind,

c) n=10: $\left[R^x_9\left(SiO_{1,5}\right)_{10}\right]$ -$R^y$-; heptaedrische Struktur in der Form eines pentagonalen Prismas mit zehn Siliciumatomen, die jeweils an den Ecken der

Struktur angeordnet sind.

Bevorzugt besitzt der Silsesquioxan-Substituent die obigen Strukturen a) bis c), und $R^x$ ist ausgewählt aus linearem oder verzweigtem $C_1$-$C_{20}$-Alkyl, $C_3$-$C_{10}$-Cycloalkyl, $C_1$-$C_{20}$-Alkoxy, $C_2$-$C_{20}$-Alkenyl, $C_2$-$C_{20}$-Alkenyloxy, Aryloxy, $C_1$-$C_{20}$-Alkylthio, $C_1$-$C_{20}$-Carboxylat, Aryl, oder Heteroaryl, $C_1$-$C_{20}$-Haloalkyl, anneliertes Aryl oder Heteroaryl, wobei die vorgenannten Gruppen substituiert sein können, ausgewählt aus der Gruppe, bestehend aus Heteroatom, Aryl, Ether, Polyether, Polythioether und Amino.

Gemäß einer weiteren bevorzugten Ausführungsform besitzt der Silsesquioxanrest die obige Struktur a), b) oder c), $R^y$ ist geradkettiges oder verzweigtes Alkylen mit 1 bis 10 Kohlenstoffatomen, und $R^x$ ist geradkettiges oder verzweigtes, unsubstituiertes oder substituiertes $C_4$-$C_{10}$-Alkyl.

Gemäß einer weiteren bevorzugten Ausführungsform besitzt der Silsesquioxanrest die obige Struktur a), b) oder c), $R^y$ ist geradkettiges oder verzweigtes Alkylen mit 1 bis 10 Kohlenstoffatomen, und $R^x$ ist ein $C_4$-$C_8$-Alkyl, wobei $R^x$ besonders bevorzugt ein Isobutylrest der Formel $-CH_2-CH(CH_3)_2$ ist.

Besonders bevorzugt besitzt in den erfindungsgemäßen Verbindungen der Silsesquioxanrest die obige Struktur a), b) oder c), $R^x$ ist Alkyl, und $R^y$ ist geradkettiges Alkylen mit 3, 5, oder 10 Kohlenstoffatomen.

Bevorzugte Verbindungen sind die der Formel (Ia), wobei $R^2$, $R^{2'}$, $R^3$, $R^{3'}$, $R^j$, $R^{j'}$, R, $R^x$ und j wie vorstehend definiert sind und $R^0$, $R^1$, n und $R^y$ wie in Tabelle 1 definiert sind:

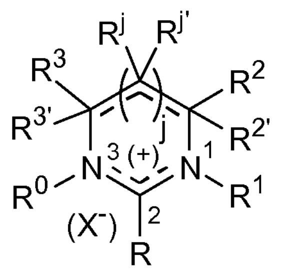

(Ia)

Tabelle 1. Bevorzugte Verbindungen der Formel (Ia)

| $R^0$ | $R^1$ | n | $R^y$ | Formel |
|---|---|---|---|---|
| -* | $\left[R^x_3(SiO_{1,5})_4\right]$ -$(CH_2)$– | 4 | -$CH_2$- | Ia-1 |
| - | $\left[R^x_5(SiO_{1,5})_6\right]$ -$(CH_2)$– | 6 | -$CH_2$- | Ia-2 |
| - | $\left[R^x_7(SiO_{1,5})_8\right]$ -$(CH_2)$– | 8 | -$CH_2$- | Ia-3 |
| - | $\left[R^x_9(SiO_{1,5})_{10}\right]$ -$(CH_2)$– | 10 | -$CH_2$- | Ia-4 |
| - | $\left[R^x_{11}(SiO_{1,5})_{12}\right]$ -$(CH_2)$– | 12 | -$CH_2$- | Ia-5 |
| - | $\left[R^x_{13}(SiO_{1,5})_{14}\right]$ -$(CH_2)$– | 14 | -$CH_2$- | Ia-6 |
| - | $\left[R^x_{15}(SiO_{1,5})_{16}\right]$ -$(CH_2)$– | 16 | -$CH_2$- | Ia-7 |
| - | $\left[R^x_{17}(SiO_{1,5})_{18}\right]$ -$(CH_2)$– | 18 | -$CH_2$- | Ia-8 |
| - | $\left[R^x_3(SiO_{1,5})_4\right]$ -$(CH_2)_2$ – | 4 | -$(CH_2)_2$- | Ia-9 |
| - | $\left[R^x_5(SiO_{1,5})_6\right]$ -$(CH_2)_2$ – | 6 | -$(CH_2)_2$- | Ia-10 |
| - | $\left[R^x_7(SiO_{1,5})_8\right]$ -$(CH_2)_2$ – | 8 | -$(CH_2)_2$- | Ia-11 |
| - | $\left[R^x_9(SiO_{1,5})_{10}\right]$ -$(CH_2)_2$ – | 10 | -$(CH_2)_2$- | Ia-12 |
| - | $\left[R^x_{11}(SiO_{1,5})_{12}\right]$ -$(CH_2)_2$ – | 12 | -$(CH_2)_2$- | Ia-13 |
| - | $\left[R^x_{13}(SiO_{1,5})_{14}\right]$ -$(CH_2)_2$ – | 14 | -$(CH_2)_2$- | Ia-14 |
| - | $\left[R^x_{15}(SiO_{1,5})_{16}\right]$ -$(CH_2)_2$ – | 16 | -$(CH_2)_2$- | Ia-15 |
| - | $\left[R^x_{17}(SiO_{1,5})_{18}\right]$ -$(CH_2)_2$ – | 18 | -$(CH_2)_2$- | Ia-16 |
| - | $\left[R^x_3(SiO_{1,5})_4\right]$ -$(CH_2)_3$ – | 4 | -$(CH_2)_3$- | Ia-17 |
| - | $\left[R^x_5(SiO_{1,5})_6\right]$ -$(CH_2)_3$ – | 6 | -$(CH_2)_3$- | Ia-18 |
| - | $\left[R^x_7(SiO_{1,5})_8\right]$ -$(CH_2)_3$ – | 8 | -$(CH_2)_3$- | Ia-19 |
| - | $\left[R^x_9(SiO_{1,5})_{10}\right]$ -$(CH_2)_3$ – | 10 | -$(CH_2)_3$- | Ia-20 |

(fortgesetzt)

| $R^0$ | $R^1$ | n | $R^y$ | Formel |
|---|---|---|---|---|
| - | $\lfloor R^x_{11}(SiO_{1,5})_{12} \rfloor$ -$(CH_2)_3$ – | 12 | -$(CH_2)_3$- | Ia-21 |
| - | $\lfloor R^x_{13}(SiO_{1,5})_{14} \rfloor$ -$(CH_2)_3$ – | 14 | -$(CH_2)_3$- | Ia-22 |
| - | $\lfloor R^x_{15}(SiO_{1,5})_{16} \rfloor$ -$(CH_2)_3$ – | 16 | -$(CH_2)_3$- | Ia-23 |
| - | $\lfloor R^x_{17}(SiO_{1,5})_{18} \rfloor$ -$(CH_2)_3$ – | 18 | -$(CH_2)_3$- | Ia-24 |
| - | $\lfloor R^x_{3}(SiO_{1,5})_{4} \rfloor$ -$(CH_2)_4$ – | 4 | -$(CH_2)_4$- | Ia-25 |
| - | $\lfloor R^x_{5}(SiO_{1,5})_{6} \rfloor$ -$(CH_2)_4$ – | 6 | -$(CH_2)_4$- | Ia-26 |
| - | $\lfloor R^x_{7}(SiO_{1,5})_{8} \rfloor$ -$(CH_2)_4$ – | 8 | -$(CH_2)_4$- | Ia-27 |
| - | $\lfloor R^x_{9}(SiO_{1,5})_{10} \rfloor$ -$(CH_2)_4$ – | 10 | -$(CH_2)_4$- | Ia-28 |
| - | $\lfloor R^x_{11}(SiO_{1,5})_{12} \rfloor$ -$(CH_2)_4$ – | 12 | -$(CH_2)_4$- | Ia-29 |
| - | $\lfloor R^x_{13}(SiO_{1,5})_{14} \rfloor$ -$(CH_2)_4$ – | 14 | -$(CH_2)_4$- | Ia-30 |
| - | $\lfloor R^x_{15}(SiO_{1,5})_{16} \rfloor$ -$(CH_2)_4$ – | 16 | -$(CH_2)_4$- | Ia-31 |
| - | $\lfloor R^x_{17}(SiO_{1,5})_{18} \rfloor$ -$(CH_2)_4$ – | 18 | -$(CH_2)_4$- | Ia-32 |
| - | $\lfloor R^x_{3}(SiO_{1,5})_{4} \rfloor$ -$(CH_2)_5$ – | 4 | -$(CH_2)_5$- | Ia-33 |
| - | $\lfloor R^x_{5}(SiO_{1,5})_{6} \rfloor$ -$(CH_2)_5$ – | 6 | -$(CH_2)_5$- | Ia-34 |
| - | $\lfloor R^x_{7}(SiO_{1,5})_{8} \rfloor$ -$(CH_2)_5$ – | 8 | -$(CH_2)_5$- | Ia-35 |
| - | $\lfloor R^x_{9}(SiO_{1,5})_{10} \rfloor$ -$(CH_2)_5$ – | 10 | -$(CH_2)_5$- | Ia-36 |
| - | $\lfloor R^x_{11}(SiO_{1,5})_{12} \rfloor$ -$(CH_2)_5$ – | 12 | -$(CH_2)_5$- | Ia-37 |
| - | $\lfloor R^x_{13}(SiO_{1,5})_{14} \rfloor$ -$(CH_2)_5$ – | 14 | -$(CH_2)_5$- | Ia-38 |
| - | $\lfloor R^x_{15}(SiO_{1,5})_{16} \rfloor$ -$(CH_2)_5$ – | 16 | -$(CH_2)_5$- | Ia-39 |
| - | $\lfloor R^x_{17}(SiO_{1,5})_{18} \rfloor$ -$(CH_2)_5$ – | 18 | -$(CH_2)_5$- | Ia-40 |

(fortgesetzt)

| $R^0$ | $R^1$ | n | $R^y$ | Formel |
|---|---|---|---|---|
| - | $\left[R_3^x(SiO_{1,5})_4\right]$ -$(CH_2)_6$ – | 4 | -$(CH_2)_6$- | Ia-41 |
| - | $\left[R_5^x(SiO_{1,5})_6\right]$ -$(CH_2)_6$ – | 6 | -$(CH_2)_6$- | Ia-42 |
| - | $\left[R_7^x(SiO_{1,5})_8\right]$ -$(CH_2)_6$ – | 8 | -$(CH_2)_6$- | Ia-43 |
| - | $\left[R_9^x(SiO_{1,5})_{10}\right]$ -$(CH_2)_6$ – | 10 | -$(CH_2)_6$- | Ia-44 |
| - | $\left[R_{11}^x(SiO_{1,5})_{12}\right]$ -$(CH_2)_6$ – | 12 | -$(CH_2)_6$- | Ia-45 |
| - | $\left[R_{13}^x(SiO_{1,5})_{14}\right]$ -$(CH_2)_6$ – | 14 | -$(CH_2)_6$- | Ia-46 |
| - | $\left[R_{15}^x(SiO_{1,5})_{16}\right]$ -$(CH_2)_6$ – | 16 | -$(CH_2)_6$- | Ia-47 |
| - | $\left[R_{17}^x(SiO_{1,5})_{18}\right]$ -$(CH_2)_6$ – | 18 | -$(CH_2)_6$- | Ia-48 |
| - | $\left[R_3^x(SiO_{1,5})_4\right]$ -$(CH_2)_7$ – | 4 | -$(CH_2)_7$- | Ia-49 |
| - | $\left[R_5^x(SiO_{1,5})_6\right]$ -$(CH_2)_7$ – | 6 | -$(CH_2)_7$- | Ia-50 |
| - | $\left[R_7^x(SiO_{1,5})_8\right]$ -$(CH_2)_7$ – | 8 | -$(CH_2)_7$- | Ia-51 |
| - | $\left[R_9^x(SiO_{1,5})_{10}\right]$ -$(CH_2)_7$ – | 10 | -$(CH_2)_7$- | Ia-52 |
| - | $\left[R_{11}^x(SiO_{1,5})_{12}\right]$ -$(CH_2)_7$ – | 12 | -$(CH_2)_7$- | Ia-53 |
| - | $\left[R_{13}^x(SiO_{1,5})_{14}\right]$ -$(CH_2)_7$ – | 14 | -$(CH_2)_7$- | Ia-54 |
| - | $\left[R_{15}^x(SiO_{1,5})_{16}\right]$ -$(CH_2)_7$ – | 16 | -$(CH_2)_7$- | Ia-55 |
| - | $\left[R_{17}^x(SiO_{1,5})_{18}\right]$ -$(CH_2)_7$ – | 18 | -$(CH_2)_7$- | Ia-56 |
| - | $\left[R_3^x(SiO_{1,5})_4\right]$ -$(CH_2)_8$ – | 4 | -$(CH_2)_8$- | Ia-57 |
| - | $\left[R_5^x(SiO_{1,5})_6\right]$ -$(CH_2)_8$ – | 6 | -$(CH_2)_8$- | Ia-58 |
| - | $\left[R_7^x(SiO_{1,5})_8\right]$ -$(CH_2)_8$ – | 8 | -$(CH_2)_8$- | Ia-59 |
| - | $\left[R_9^x(SiO_{1,5})_{10}\right]$ -$(CH_2)_8$ – | 10 | -$(CH_2)_8$- | Ia-60 |

(fortgesetzt)

| $R^0$ | $R^1$ | n | $R^y$ | Formel |
|---|---|---|---|---|
| - | $[R^{x}_{11}(SiO_{1,5})_{12}]-(CH_2)_8-$ | 12 | $-(CH_2)_8-$ | Ia-61 |
| - | $[R^{x}_{13}(SiO_{1,5})_{14}]-(CH_2)_8-$ | 14 | $-(CH_2)_8-$ | Ia-62 |
| - | $[R^{x}_{15}(SiO_{1,5})_{16}]-(CH_2)_8-$ | 16 | $-(CH_2)_8-$ | Ia-63 |
| - | $[R^{x}_{17}(SiO_{1,5})_{18}]-(CH_2)_8-$ | 18 | $-(CH_2)_8-$ | Ia-64 |
| - | $[R^{x}_{3}(SiO_{1,5})_{4}]-(CH_2)_9-$ | 4 | $-(CH_2)_9-$ | Ia-65 |
| - | $[R^{x1}_{5}(SiO_{1,5})_{6}]-(CH_2)_9-$ | 6 | $-(CH_2)_9-$ | Ia-66 |
| - | $[R^{x1}_{7}(SiO_{1,5})_{8}]-(CH_2)_9-$ | 8 | $-(CH_2)_9-$ | Ia-67 |
| - | $[R^{x1}_{9}(SiO_{1,5})_{10}]-(CH_2)_9-$ | 10 | $-(CH_2)_9-$ | Ia-68 |
| - | $[R^{x}_{11}(SiO_{1,5})_{12}]-(CH_2)_9-$ | 12 | $-(CH_2)_9-$ | Ia-69 |
| - | $[R^{x}_{13}(SiO_{1,5})_{14}]-(CH_2)_9-$ | 14 | $-(CH_2)_9-$ | Ia-70 |
| - | $[R^{x}_{15}(SiO_{1,5})_{16}]-(CH_2)_9-$ | 16 | $-(CH_2)_9-$ | Ia-71 |
| - | $[R^{x}_{17}(SiO_{1,5})_{18}]-(CH_2)_9-$ | 18 | $-(CH_2)_9-$ | Ia-72 |
| - | $[R^{x}_{3}(SiO_{1,5})_{4}]-(CH_2)_{10}-$ | 4 | $-(CH_2)_{10}-$ | Ia-73 |
| - | $[R^{x}_{5}(SiO_{1,5})_{6}]-(CH_2)_{10}-$ | 6 | $-(CH_2)_{10}-$ | Ia-74 |
| - | $[R^{x}_{7}(SiO_{1,5})_{8}]-(CH_2)_{10}-$ | 8 | $-(CH_2)_{10}-$ | Ia-75 |
| - | $[R^{x}_{9}(SiO_{1,5})_{10}]-(CH_2)_{10}-$ | 10 | $-(CH_2)_{10}-$ | Ia-76 |
| - | $[R^{x}_{11}(SiO_{1,5})_{12}]-(CH_2)_{10}-$ | 12 | $-(CH_2)_{10}-$ | Ia-77 |
| - | $[R^{x}_{13}(SiO_{1,5})_{14}]-(CH_2)_{10}-$ | 14 | $-(CH_2)_{10}-$ | Ia-78 |
| - | $[R^{x}_{15}(SiO_{1,5})_{16}]-(CH_2)_{10}-$ | 16 | $-(CH_2)_{10}-$ | Ia-79 |

(fortgesetzt)

| $R^0$ | $R^1$ | n | $R^y$ | Formel |
|---|---|---|---|---|
| - | $[R^x_{17}(SiO_{1,5})_{18}]$ -$(CH_2)_{10}$ – | 18 | $-(CH_2)_{10}-$ | Ia-80 |
| - | $[R^x_{3}(SiO_{1,5})_{4}]$ -$(CH_2)_{11}$ – | 4 | $-(CH_2)_{11}-$ | Ia-81 |
| - | $[R^x_{5}(SiO_{1,5})_{6}]$ -$(CH_2)_{11}$ – | 6 | $-(CH_2)_{11}-$ | Ia-82 |
| - | $[R^x_{7}(SiO_{1,5})_{8}]$ -$(CH_2)_{11}$ – | 8 | $-(CH_2)_{11}-$ | Ia-83 |
| - | $[R^x_{9}(SiO_{1,5})_{10}]$ -$(CH_2)_{11}$ – | 10 | $-(CH_2)_{11}-$ | Ia-84 |
| - | $[R^x_{11}(SiO_{1,5})_{12}]$ -$(CH_2)_{11}$ – | 12 | $-(CH_2)_{11}-$ | Ia-85 |
| - | $[R^x_{13}(SiO_{1,5})_{14}]$ -$(CH_2)_{11}$ – | 14 | $-(CH_2)_{11}-$ | Ia-86 |
| - | $[R^x_{15}(SiO_{1,5})_{16}]$ -$(CH_2)_{11}$– | 16 | $-(CH_2)_{11}-$ | Ia-87 |
| - | $[R^x_{17}(SiO_{1,5})_{18}]$ -$(CH_2)_{11}$ – | 18 | $-(CH_2)_{11}-$ | Ia-88 |
| - | $[R^x_{3}(SiO_{1,5})_{4}]$ -$(CH_2)_{12}$ – | 4 | $-(CH_2)_{12}-$ | Ia-89 |
| - | $[R^x_{5}(SiO_{1,5})_{6}]$ -$(CH_2)_{12}$ – | 6 | $-(CH_2)_{12}-$ | Ia-90 |
| - | $[R^x_{7}(SiO_{1,5})_{8}]$ -$(CH_2)_{12}$ – | 8 | $-(CH_2)_{12}-$ | Ia-91 |
| - | $[R^x_{9}(SiO_{1,5})_{10}]$ -$(CH_2)_{12}$ – | 10 | $-(CH_2)_{12}-$ | Ia-92 |
| - | $[R^x_{11}(SiO_{1,5})_{12}]$ -$(CH_2)_{12}$ – | 12 | $-(CH_2)_{12}-$ | Ia-93 |
| - | $[R^x_{13}(SiO_{1,5})_{14}]$ -$(CH_2)_{12}$ – | 14 | $-(CH_2)_{12}-$ | Ia-94 |
| - | $[R^x_{15}(SiO_{1,5})_{16}]$ -$(CH_2)_{12}$– | 16 | $-(CH_2)_{12}-$ | Ia-95 |
| - | $[R^x_{17}(SiO_{1,5})_{18}]$ -$(CH_2)_{12}$ – | 18 | $-(CH_2)_{12}-$ | Ia-96 |
| - | $[R^x_{3}(SiO_{1,5})_{4}]$ -$(CH_2)_{13}$ – | 4 | $-(CH_2)_{13}-$ | Ia-97 |
| - | $[R^x_{5}(SiO_{1,5})_{6}]$ -$(CH_2)_{13}$ – | 6 | $-(CH_2)_{13}-$ | Ia-98 |
| - | $[R^x_{7}(SiO_{1,5})_{8}]$ -$(CH_2)_{13}$ – | 8 | $-(CH_2)_{13}-$ | Ia-99 |

(fortgesetzt)

| $R^0$ | $R^1$ | n | $R^y$ | Formel |
|---|---|---|---|---|
| - | $\lfloor R^x_9(SiO_{1,5})_{10}\rfloor$ $-(CH_2)_{13}-$ | 10 | $-(CH_2)_{13}-$ | Ia-100 |
| - | $\lfloor R^x_{11}(SiO_{1,5})_{12}\rfloor$ $-(CH_2)_{13}-$ | 12 | $-(CH_2)_{13}-$ | Ia-101 |
| - | $\lfloor R^x_{13}(SiO_{1,5})_{14}\rfloor$ $-(CH_2)_{13}-$ | 14 | $-(CH_2)_{13}-$ | Ia-102 |
| - | $\lfloor R^x_{15}(SiO_{1,5})_{16}\rfloor$ $-(CH_2)_{13}-$ | 16 | $-(CH_2)_{13}-$ | Ia-103 |
| - | $\lfloor R^x_{17}(SiO_{1,5})_{18}\rfloor$ $-(CH_2)_{13}-$ | 18 | $-(CH_2)_{13}-$ | Ia-104 |
| - | $\lfloor R^x_3(SiO_{1,5})_4\rfloor$ $-(CH_2)_{14}-$ | 4 | $-(CH_2)_{14}-$ | Ia-105 |
| - | $\lfloor R^x_5(SiO_{1,5})_6\rfloor$ $-(CH_2)_{14}-$ | 6 | $-(CH_2)_{14}-$ | Ia-106 |
| - | $\lfloor R^x_7(SiO_{1,5})_8\rfloor$ $-(CH_2)_{14}-$ | 8 | $-(CH_2)_{14}-$ | Ia-107 |
| - | $\lfloor R^x_9(SiO_{1,5})_{10}\rfloor$ $-(CH_2)_{14}-$ | 10 | $-(CH_2)_{14}-$ | Ia-108 |
| - | $\lfloor R^x_{11}(SiO_{1,5})_{12}\rfloor$ $-(CH_2)_{14}-$ | 12 | $-(CH_2)_{14}-$ | Ia-109 |
| - | $\lfloor R^x_{13}(SiO_{1,5})_{14}\rfloor$ $-(CH_2)_{14}-$ | 14 | $-(CH_2)_{14}-$ | Ia-110 |
| - | $\lfloor R^x_{15}(SiO_{1,5})_{16}\rfloor$ $-(CH_2)_{14}-$ | 16 | $-(CH_2)_{14}-$ | Ia-111 |
| - | $\lfloor R^x_{17}(SiO_{1,5})_{18}\rfloor$ $-(CH_2)_{14}-$ | 18 | $-(CH_2)_{14}-$ | Ia-112 |
| - | $\lfloor R^x_3(SiO_{1,5})_4\rfloor$ $-(CH_2)_{15}-$ | 4 | $-(CH_2)_{15}-$ | Ia-113 |
| - | $\lfloor R^x_5(SiO_{1,5})_6\rfloor$ $-(CH_2)_{15}-$ | 6 | $-(CH_2)_{15}-$ | Ia-114 |
| - | $\lfloor R^x_7(SiO_{1,5})_8\rfloor$ $-(CH_2)_{15}-$ | 8 | $-(CH_2)_{15}-$ | Ia-115 |
| - | $\lfloor R^x_9(SiO_{1,5})_{10}\rfloor$ $-(CH_2)_{15}-$ | 10 | $-(CH_2)_{15}-$ | Ia-116 |
| - | $\lfloor R^x_{11}(SiO_{1,5})_{12}\rfloor$ $-(CH_2)_{15}-$ | 12 | $-(CH_2)_{15}-$ | Ia-117 |
| - | $\lfloor R^x_{13}(SiO_{1,5})_{14}\rfloor$ $-(CH_2)_{15}-$ | 14 | $-(CH_2)_{15}-$ | Ia-118 |
| - | $\lfloor R^x_{15}(SiO_{1,5})_{16}\rfloor$ $-(CH_2)_{15}-$ | 16 | $-(CH_2)_{15}-$ | Ia-119 |

(fortgesetzt)

| $R^0$ | $R^1$ | n | $R^y$ | Formel |
|---|---|---|---|---|
| - | $\left[R^x_{17}(SiO_{1,5})_{18}\right]-(CH_2)_{15}-$ | 18 | $-(CH_2)_{15}-$ | Ia-120 |
| - | $\left[R^x_{3}(SiO_{1,5})_{4}\right]-(CH_2)_{16}-$ | 4 | $-(CH_2)_{16}-$ | Ia-121 |
| - | $\left[R^x_{5}(SiO_{1,5})_{6}\right]-(CH_2)_{16}-$ | 6 | $-(CH_2)_{16}-$ | Ia-122 |
| - | $\left[R^x_{7}(SiO_{1,5})_{8}\right]-(CH_2)_{16}-$ | 8 | $-(CH_2)_{16}-$ | Ia-123 |
| - | $\left[R^x_{9}(SiO_{1,5})_{10}\right]-(CH_2)_{16}-$ | 10 | $-(CH_2)_{16}-$ | Ia-124 |
| - | $\left[R^x_{11}(SiO_{1,5})_{12}\right]-(CH_2)_{16}-$ | 12 | $-(CH_2)_{16}-$ | Ia-125 |
| - | $\left[R^{x1}_{13}(SiO_{1,5})_{14}\right]-(CH_2)_{16}-$ | 14 | $-(CH_2)_{16}-$ | Ia-126 |
| - | $\left[R^{x1}_{15}(SiO_{1,5})_{16}\right]-(CH_2)_{16}-$ | 16 | $-(CH_2)_{16}-$ | Ia-127 |
| - | $\left[R^{x1}_{17}(SiO_{1,5})_{18}\right]-(CH_2)_{16}-$ | 18 | $-(CH_2)_{16}-$ | Ia-128 |
| - | $\left[R^{x1}_{3}(SiO_{1,5})_{4}\right]-(CH_2)_{17}-$ | 4 | $-(CH_2)_{17}-$ | Ia-129 |
| - | $\left[R^{x1}_{5}(SiO_{1,5})_{6}\right]-(CH_2)_{17}-$ | 6 | $-(CH_2)_{17}-$ | Ia-130 |
| - | $\left[R^{x1}_{7}(SiO_{1,5})_{8}\right]-(CH_2)_{17}-$ | 8 | $-(CH_2)_{17}-$ | Ia-131 |
| - | $\left[R^{x1}_{9}(SiO_{1,5})_{10}\right]-(CH_2)_{17}-$ | 10 | $-(CH_2)_{17}-$ | Ia-132 |
| - | $\left[R^{x1}_{11}(SiO_{1,5})_{12}\right]-(CH_2)_{17}-$ | 12 | $-(CH_2)_{17}-$ | Ia-133 |
| - | $\left[R^{x1}_{13}(SiO_{1,5})_{14}\right]-(CH_2)_{17}-$ | 14 | $-(CH_2)_{17}-$ | Ia-134 |
| - | $\left[R^{x1}_{15}(SiO_{1,5})_{16}\right]-(CH_2)_{17}-$ | 16 | $-(CH_2)_{17}-$ | Ia-135 |
| - | $\left[R^{x1}_{17}(SiO_{1,5})_{18}\right]-(CH_2)_{17}-$ | 18 | $-(CH_2)_{17}-$ | Ia-136 |
| - | $\left[R^{x1}_{3}(SiO_{1,5})_{4}\right]-(CH_2)_{18}-$ | 4 | $-(CH_2)_{18}-$ | Ia-137 |
| - | $\left[R^x_{5}(SiO_{1,5})_{6}\right]-(CH_2)_{18}-$ | 6 | $-(CH_2)_{18}-$ | Ia-138 |
| - | $\left[R^x_{7}(SiO_{1,5})_{8}\right]-(CH_2)_{18}-$ | 8 | $-(CH_2)_{18}-$ | Ia-139 |

(fortgesetzt)

| $R^0$ | $R^1$ | n | $R^y$ | Formel |
|---|---|---|---|---|
| - | $\left[R^x_9(SiO_{1,5})_{10}\right]-(CH_2)_{18}-$ | 10 | $-(CH_2)_{18}-$ | Ia-140 |
| - | $\left[R^x_{11}(SiO_{1,5})_{12}\right]-(CH_2)_{18}-$ | 12 | $-(CH_2)_{18}-$ | Ia-141 |
| - | $\left[R^x_{13}(SiO_{1,5})_{14}\right]-(CH_2)_{18}-$ | 14 | $-(CH_2)_{18}-$ | Ia-142 |
| - | $\left[R^x_{15}(SiO_{1,5})_{16}\right]-(CH_2)_{18}-$ | 16 | $-(CH_2)_{18}-$ | Ia-143 |
| - | $\left[R^x_{17}(SiO_{1,5})_{18}\right]-(CH_2)_{18}-$ | 18 | $-(CH_2)_{18}-$ | Ia-144 |
| - | $\left[R^x_3(SiO_{1,5})_4\right]-(CH_2)_{19}-$ | 4 | $-(CH_2)_{19}-$ | Ia-145 |
| - | $\left[R^x_5(SiO_{1,5})_6\right]-(CH_2)_{19}-$ | 6 | $-(CH_2)_{19}-$ | Ia-146 |
| - | $\left[R^x_7(SiO_{1,5})_8\right]-(CH_2)_{19}-$ | 8 | $-(CH_2)_{19}-$ | Ia-147 |
| - | $\left[R^x_9(SiO_{1,5})_{10}\right]-(CH_2)_{19}-$ | 10 | $-(CH_2)_{19}-$ | Ia-148 |
| - | $\left[R^x_{11}(SiO_{1,5})_{12}\right]-(CH_2)_{19}-$ | 12 | $-(CH_2)_{19}-$ | Ia-149 |
| - | $\left[R^x_{13}(SiO_{1,5})_{14}\right]-(CH_2)_{19}-$ | 14 | $-(CH_2)_{19}-$ | Ia-150 |
| - | $\left[R^x_{15}(SiO_{1,5})_{16}\right]-(CH_2)_{19}-$ | 16 | $-(CH_2)_{19}-$ | Ia-151 |
| - | $\left[R^x_{17}(SiO_{1,5})_{18}\right]-(CH_2)_{19}-$ | 18 | $-(CH_2)_{19}-$ | Ia-152 |
| - | $\left[R^x_3(SiO_{1,5})_4\right]-(CH_2)_{20}-$ | 4 | $-(CH_2)_{20}-$ | Ia-153 |
| - | $\left[R^x_5(SiO_{1,5})_6\right]-(CH_2)_{20}-$ | 6 | $-(CH_2)_{20}-$ | Ia-154 |
| - | $\left[R^x_7(SiO_{1,5})_8\right]-(CH_2)_{20}-$ | 8 | $-(CH_2)_{20}-$ | Ia-155 |
| - | $\left[R^x_9(SiO_{1,5})_{10}\right]-(CH_2)_{20}-$ | 10 | $-(CH_2)_{20}-$ | Ia-156 |
| - | $\left[R^x_{11}(SiO_{1,5})_{12}\right]-(CH_2)_{20}-$ | 12 | $-(CH_2)_{20}-$ | Ia-157 |
| - | $\left[R^x_{13}(SiO_{1,5})_{14}\right]-(CH_2)_{20}-$ | 14 | $-(CH_2)_{20}-$ | Ia-158 |
| - | $\left[R^x_{15}(SiO_{1,5})_{16}\right]-(CH_2)_{20}-$ | 16 | $-(CH_2)_{20}-$ | Ia-159 |

(fortgesetzt)

| $R^0$ | $R^1$ | n | $R^y$ | Formel |
|---|---|---|---|---|
| - | $\left[R^x_{17}(SiO_{1,5})_{18}\right]-(CH_2)_{20}-$ | 18 | $-(CH_2)_{20}-$ | Ia-160 |
| $\left[R^x_3(SiO_{1,5})_4\right]-(CH_2)-$ | Ar** | 4 | $-CH_2-$ | Ia-161 |
| $\left[R^x_5(SiO_{1,5})_6\right]-(CH_2)-$ | Ar | 6 | $-CH_2-$ | Ia-162 |
| $\left[R^x_7(SiO_{1,5})_8\right]-(CH_2)-$ | Ar | 8 | $-CH_2-$ | Ia-163 |
| $\left[R^x_9(SiO_{1,5})_{10}\right]-(CH_2)-$ | Ar | 10 | $-CH_2-$ | Ia-164 |
| $\left[R^x_{11}(SiO_{1,5})_{12}\right]-(CH_2)-$ | Ar | 12 | $-CH_2-$ | Ia-165 |
| $\left[R^x_{13}(SiO_{1,5})_{14}\right]-(CH_2)-$ | Ar | 14 | $-CH_2-$ | Ia-166 |
| $\left[R^x_{15}(SiO_{1,5})_{16}\right]-(CH_2)-$ | Ar | 16 | $-CH_2-$ | Ia-167 |
| $\left[R^x_{17}(SiO_{1,5})_{18}\right]-(CH_2)-$ | Ar | 18 | $-CH_2-$ | Ia-168 |
| $\left[R^x_3(SiO_{1,5})_4\right]-(CH_2)_2-$ | Ar | 4 | $-(CH_2)_2-$ | Ia-169 |
| $\left[R^x_5(SiO_{1,5})_6\right]-(CH_2)_2-$ | Ar | 6 | $-(CH_2)_2-$ | Ia-170 |
| $\left[R^x_7(SiO_{1,5})_8\right]-(CH_2)_2-$ | Ar | 8 | $-(CH_2)_2-$ | Ia-171 |
| $\left[R^x_9(SiO_{1,5})_{10}\right]-(CH_2)_2-$ | Ar | 10 | $-(CH_2)_2-$ | Ia-172 |
| $\left[R^x_{11}(SiO_{1,5})_{12}\right]-(CH_2)_2-$ | Ar | 12 | $-(CH_2)_2-$ | Ia-173 |
| $\left[R^x_{13}(SiO_{1,5})_{14}\right]-(CH_2)_2-$ | Ar | 14 | $-(CH_2)_2-$ | Ia-174 |
| $\left[R^x_{15}(SiO_{1,5})_{16}\right]-(CH_2)_2-$ | Ar | 16 | $-(CH_2)_2-$ | Ia-175 |
| $\left[R^x_{17}(SiO_{1,5})_{18}\right]-(CH_2)_2-$ | Ar | 18 | $-(CH_2)_2-$ | Ia-176 |
| $\left[R^x_3(SiO_{1,5})_4\right]-(CH_2)_3-$ | Ar | 4 | $-(CH_2)_3-$ | Ia-177 |
| $\left[R^x_5(SiO_{1,5})_6\right]-(CH_2)_3-$ | Ar | 6 | $-(CH_2)_3-$ | Ia-178 |
| $\left[R^x_7(SiO_{1,5})_8\right]-(CH_2)_3-$ | Ar | 8 | $-(CH_2)_3-$ | Ia-179 |

(fortgesetzt)

| $R^0$ | $R^1$ | n | $R^y$ | Formel |
|---|---|---|---|---|
| $\left[R_9^x(SiO_{1,5})_{10}\right]-(CH_2)_3-$ | Ar | 10 | $-(CH_2)_3-$ | Ia-180 |
| $\left[R_{11}^x(SiO_{1,5})_{12}\right]-(CH_2)_3-$ | Ar | 12 | $-(CH_2)_3-$ | Ia-181 |
| $\left[R_{13}^x(SiO_{1,5})_{14}\right]-(CH_2)_3-$ | Ar | 14 | $-(CH_2)_3-$ | Ia-182 |
| $\left[R_{15}^x(SiO_{1,5})_{16}\right]-(CH_2)_3-$ | Ar | 16 | $-(CH_2)_3-$ | Ia-183 |
| $\left[R_{17}^x(SiO_{1,5})_{18}\right]-(CH_2)_3-$ | Ar | 18 | $-(CH_2)_3-$ | Ia-184 |
| $\left[R_3^x(SiO_{1,5})_4\right]-(CH_2)_4-$ | Ar | 4 | $-(CH_2)_4-$ | Ia-185 |
| $\left[R_5^x(SiO_{1,5})_6\right]-(CH_2)_4-$ | Ar | 6 | $-(CH_2)_4-$ | Ia-186 |
| $\left[R_7^x(SiO_{1,5})_8\right]-(CH_2)_4-$ | Ar | 8 | $-(CH_2)_4-$ | Ia-187 |
| $\left[R_9^x(SiO_{1,5})_{10}\right]-(CH_2)_4-$ | Ar | 10 | $-(CH_2)_4-$ | Ia-188 |
| $\left[R_{11}^x(SiO_{1,5})_{12}\right]-(CH_2)_4-$ | Ar | 12 | $-(CH_2)_4-$ | Ia-189 |
| $\left[R_{13}^x(SiO_{1,5})_{14}\right]-(CH_2)_4-$ | Ar | 14 | $-(CH_2)_4-$ | Ia-190 |
| $\left[R_{15}^x(SiO_{1,5})_{16}\right]-(CH_2)_4-$ | Ar | 16 | $-(CH_2)_4-$ | Ia-191 |
| $\left[R_{17}^x(SiO_{1,5})_{18}\right]-(CH_2)_4-$ | Ar | 18 | $-(CH_2)_4-$ | Ia-192 |
| $\left[R_3^x(SiO_{1,5})_4\right]-(CH_2)_5-$ | Ar | 4 | $-(CH_2)_5-$ | Ia-193 |
| $\left[R_5^x(SiO_{1,5})_6\right]-(CH_2)_5-$ | Ar | 6 | $-(CH_2)_5-$ | Ia-194 |
| $\left[R_7^x(SiO_{1,5})_8\right]-(CH_2)_5-$ | Ar | 8 | $-(CH_2)_5-$ | Ia-195 |
| $\left[R_9^x(SiO_{1,5})_{10}\right]-(CH_2)_5-$ | Ar | 10 | $-(CH_2)_5-$ | Ia-196 |
| $\left[R_{11}^x(SiO_{1,5})_{12}\right]-(CH_2)_5-$ | Ar | 12 | $-(CH_2)_5-$ | Ia-197 |
| $\left[R_{13}^x(SiO_{1,5})_{14}\right]-(CH_2)_5-$ | Ar | 14 | $-(CH_2)_5-$ | Ia-198 |
| $\left[R_{15}^x(SiO_{1,5})_{16}\right]-(CH_2)_5-$ | Ar | 16 | $-(CH_2)_5-$ | Ia-199 |

(fortgesetzt)

| $R^0$ | $R^1$ | n | $R^y$ | Formel |
|---|---|---|---|---|
| $[R^x_{17}(SiO_{1,5})_{18}]-(CH_2)_5-$ | Ar | 18 | $-(CH_2)_5-$ | Ia-200 |
| $[R^x_{3}(SiO_{1,5})_{4}]-(CH_2)_6-$ | Ar | 4 | $-(CH_2)_6-$ | Ia-201 |
| $[R^x_{5}(SiO_{1,5})_{6}]-(CH_2)_6-$ | Ar | 6 | $-(CH_2)_6-$ | Ia-202 |
| $[R^x_{7}(SiO_{1,5})_{8}]-(CH_2)_6-$ | Ar | 8 | $-(CH_2)_6-$ | Ia-203 |
| $[R^x_{9}(SiO_{1,5})_{10}]-(CH_2)_6-$ | Ar | 10 | $-(CH_2)_6-$ | Ia-204 |
| $[R^x_{11}(SiO_{1,5})_{12}]-(CH_2)_6-$ | Ar | 12 | $-(CH_2)_6-$ | Ia-205 |
| $[R^x_{13}(SiO_{1,5})_{14}]-(CH_2)_6-$ | Ar | 14 | $-(CH_2)_6-$ | Ia-206 |
| $[R^x_{15}(SiO_{1,5})_{16}]-(CH_2)_6-$ | Ar | 16 | $-(CH_2)_6-$ | Ia-207 |
| $[R^x_{17}(SiO_{1,5})_{18}]-(CH_2)_6-$ | Ar | 18 | $-(CH_2)_6-$ | Ia-208 |
| $[R^x_{3}(SiO_{1,5})_{4}]-(CH_2)_7-$ | Ar | 4 | $-(CH_2)_7-$ | Ia-209 |
| $[R^x_{5}(SiO_{1,5})_{6}]-(CH_2)_7-$ | Ar | 6 | $-(CH_2)_7-$ | Ia-210 |
| $[R^x_{7}(SiO_{1,5})_{8}]-(CH_2)_7-$ | Ar | 8 | $-(CH_2)_7-$ | Ia-211 |
| $[R^x_{9}(SiO_{1,5})_{10}]-(CH_2)_7-$ | Ar | 10 | $-(CH_2)_7-$ | Ia-212 |
| $[R^x_{11}(SiO_{1,5})_{12}]-(CH_2)_7-$ | Ar | 12 | $-(CH_2)_7-$ | Ia-213 |
| $[R^x_{13}(SiO_{1,5})_{14}]-(CH_2)_7-$ | Ar | 14 | $-(CH_2)_7-$ | Ia-214 |
| $[R^x_{15}(SiO_{1,5})_{16}]-(CH_2)_7-$ | Ar | 16 | $-(CH_2)_7-$ | Ia-215 |
| $[R^x_{17}(SiO_{1,5})_{18}]-(CH_2)_7-$ | Ar | 18 | $-(CH_2)_7-$ | Ia-216 |
| $[R^x_{3}(SiO_{1,5})_{4}]-(CH_2)_8-$ | Ar | 4 | $-(CH_2)_8-$ | Ia-217 |
| $[R^x_{5}(SiO_{1,5})_{6}]-(CH_2)_8-$ | Ar | 6 | $-(CH_2)_8-$ | Ia-218 |
| $[R^x_{7}(SiO_{1,5})_{8}]-(CH_2)_8-$ | Ar | 8 | $-(CH_2)_8-$ | Ia-219 |

(fortgesetzt)

| $R^0$ | $R^1$ | n | $R^y$ | Formel |
|---|---|---|---|---|
| $[R^{x}_{9}(SiO_{1,5})_{10}]-(CH_2)_8-$ | Ar | 10 | $-(CH_2)_8-$ | Ia-220 |
| $[R^{x}_{11}(SiO_{1,5})_{12}]-(CH_2)_8-$ | Ar | 12 | $-(CH_2)_8-$ | Ia-221 |
| $[R^{x}_{13}(SiO_{1,5})_{14}]-(CH_2)_8-$ | Ar | 14 | $-(CH_2)_8-$ | Ia-222 |
| $[R^{x}_{15}(SiO_{1,5})_{16}]-(CH_2)_8-$ | Ar | 16 | $-(CH_2)_8-$ | Ia-223 |
| $[R^{x}_{17}(SiO_{1,5})_{18}]-(CH_2)_8-$ | Ar | 18 | $-(CH_2)_8-$ | Ia-224 |
| $[R^{x}_{3}(SiO_{1,5})_{4}]-(CH_2)_9-$ | Ar | 4 | $-(CH_2)_9-$ | Ia-225 |
| $[R^{x1}_{5}(SiO_{1,5})_{6}]-(CH_2)_9-$ | Ar | 6 | $-(CH_2)_9-$ | Ia-226 |
| $[R^{x1}_{7}(SiO_{1,5})_{8}]-(CH_2)_9-$ | Ar | 8 | $-(CH_2)_9-$ | Ia-227 |
| $[R^{x1}_{9}(SiO_{1,5})_{10}]-(CH_2)_9-$ | Ar | 10 | $-(CH_2)_9-$ | Ia-228 |
| $[R^{x}_{11}(SiO_{1,5})_{12}]-(CH_2)_9-$ | Ar | 12 | $-(CH_2)_9-$ | Ia-229 |
| $[R^{x}_{13}(SiO_{1,5})_{14}]-(CH_2)_9-$ | Ar | 14 | $-(CH_2)_9-$ | Ia-230 |
| $[R^{x}_{15}(SiO_{1,5})_{16}]-(CH_2)_9-$ | Ar | 16 | $-(CH_2)_9-$ | Ia-231 |
| $[R^{x}_{17}(SiO_{1,5})_{18}]-(CH_2)_9-$ | Ar | 18 | $-(CH_2)_9-$ | Ia-232 |
| $[R^{x}_{3}(SiO_{1,5})_{4}]-(CH_2)_{10}-$ | Ar | 4 | $-(CH_2)_{10}-$ | Ia-233 |
| $[R^{x}_{5}(SiO_{1,5})_{6}]-(CH_2)_{10}-$ | Ar | 6 | $-(CH_2)_{10}-$ | Ia-234 |
| $[R^{x}_{7}(SiO_{1,5})_{8}]-(CH_2)_{10}-$ | Ar | 8 | $-(CH_2)_{10}-$ | Ia-235 |
| $[R^{x}_{9}(SiO_{1,5})_{10}]-(CH_2)_{10}-$ | Ar | 10 | $-(CH_2)_{10}-$ | Ia-236 |
| $[R^{x}_{11}(SiO_{1,5})_{12}]-(CH_2)_{10}-$ | Ar | 12 | $-(CH_2)_{10}-$ | Ia-237 |
| $[R^{x}_{13}(SiO_{1,5})_{14}]-(CH_2)_{10}-$ | Ar | 14 | $-(CH_2)_{10}-$ | Ia-238 |
| $[R^{x}_{15}(SiO_{1,5})_{16}]-(CH_2)_{10}-$ | Ar | 16 | $-(CH_2)_{10}-$ | Ia-239 |

(fortgesetzt)

| $R^0$ | $R^1$ | n | $R^y$ | Formel |
|---|---|---|---|---|
| $[R^x_{17}(SiO_{1,5})_{18}]-(CH_2)_{10}-$ | Ar | 18 | $-(CH_2)_{10}-$ | Ia-240 |
| $[R^x_{3}(SiO_{1,5})_{4}]-(CH_2)_{11}-$ | Ar | 4 | $-(CH_2)_{11}-$ | Ia-241 |
| $[R^x_{5}(SiO_{1,5})_{6}]-(CH_2)_{11}-$ | Ar | 6 | $-(CH_2)_{11}-$ | Ia-242 |
| $[R^x_{7}(SiO_{1,5})_{8}]-(CH_2)_{11}-$ | Ar | 8 | $-(CH_2)_{11}-$ | Ia-243 |
| $[R^x_{9}(SiO_{1,5})_{10}]-(CH_2)_{11}-$ | Ar | 10 | $-(CH_2)_{11}-$ | Ia-244 |
| $[R^x_{11}(SiO_{1,5})_{12}]-(CH_2)_{11}-$ | Ar | 12 | $-(CH_2)_{11}-$ | Ia-245 |
| $[R^x_{13}(SiO_{1,5})_{14}]-(CH_2)_{11}-$ | Ar | 14 | $-(CH_2)_{11}-$ | Ia-246 |
| $[R^x_{15}(SiO_{1,5})_{16}]-(CH_2)_{11}-$ | Ar | 16 | $-(CH_2)_{11}-$ | Ia-247 |
| $[R^x_{17}(SiO_{1,5})_{18}]-(CH_2)_{11}-$ | Ar | 18 | $-(CH_2)_{11}-$ | Ia-248 |
| $[R^x_{3}(SiO_{1,5})_{4}]-(CH_2)_{12}-$ | Ar | 4 | $-(CH_2)_{12}-$ | Ia-249 |
| $[R^x_{5}(SiO_{1,5})_{6}]-(CH_2)_{12}-$ | Ar | 6 | $-(CH_2)_{12}-$ | Ia-250 |
| $[R^x_{7}(SiO_{1,5})_{8}]-(CH_2)_{12}-$ | Ar | 8 | $-(CH_2)_{12}-$ | Ia-251 |
| $[R^x_{9}(SiO_{1,5})_{10}]-(CH_2)_{12}-$ | Ar | 10 | $-(CH_2)_{12}-$ | Ia-252 |
| $[R^x_{11}(SiO_{1,5})_{12}]-(CH_2)_{12}-$ | Ar | 12 | $-(CH_2)_{12}-$ | Ia-253 |
| $[R^x_{13}(SiO_{1,5})_{14}]-(CH_2)_{12}-$ | Ar | 14 | $-(CH_2)_{12}-$ | Ia-254 |
| $[R^x_{15}(SiO_{1,5})_{16}]-(CH_2)_{12}-$ | Ar | 16 | $-(CH_2)_{12}-$ | Ia-255 |
| $[R^x_{17}(SiO_{1,5})_{18}]-(CH_2)_{12}-$ | Ar | 18 | $-(CH_2)_{12}-$ | Ia-256 |
| $[R^x_{3}(SiO_{1,5})_{4}]-(CH_2)_{13}-$ | Ar | 4 | $-(CH_2)_{13}-$ | Ia-257 |
| $[R^x_{5}(SiO_{1,5})_{6}]-(CH_2)_{13}-$ | Ar | 6 | $-(CH_2)_{13}-$ | Ia-258 |
| $[R^x_{7}(SiO_{1,5})_{8}]-(CH_2)_{13}-$ | Ar | 8 | $-(CH_2)_{13}-$ | Ia-259 |

(fortgesetzt)

| $R^0$ | $R^1$ | n | $R^y$ | Formel |
|---|---|---|---|---|
| $\left[R_9^x(SiO_{1,5})_{10}\right]-(CH_2)_{13}-$ | Ar | 10 | $-(CH_2)_{13}-$ | Ia-260 |
| $\left[R_{11}^x(SiO_{1,5})_{12}\right]-(CH_2)_{13}-$ | Ar | 12 | $-(CH_2)_{13}-$ | Ia-261 |
| $\left[R_{13}^x(SiO_{1,5})_{14}\right]-(CH_2)_{13}-$ | Ar | 14 | $-(CH_2)_{13}-$ | Ia-262 |
| $\left[R_{15}^x(SiO_{1,5})_{16}\right]-(CH_2)_{13}-$ | Ar | 16 | $-(CH_2)_{13}-$ | Ia-263 |
| $\left[R_{17}^x(SiO_{1,5})_{18}\right]-(CH_2)_{13}-$ | Ar | 18 | $-(CH_2)_{13}-$ | Ia-264 |
| $\left[R_3^x(SiO_{1,5})_4\right]-(CH_2)_{14}-$ | Ar | 4 | $-(CH_2)_{14}-$ | Ia-265 |
| $\left[R_5^x(SiO_{1,5})_6\right]-(CH_2)_{14}-$ | Ar | 6 | $-(CH_2)_{14}-$ | Ia-266 |
| $\left[R_7^x(SiO_{1,5})_8\right]-(CH_2)_{14}-$ | Ar | 8 | $-(CH_2)_{14}-$ | Ia-267 |
| $\left[R_9^x(SiO_{1,5})_{10}\right]-(CH_2)_{14}-$ | Ar | 10 | $-(CH_2)_{14}-$ | Ia-268 |
| $\left[R_{11}^x(SiO_{1,5})_{12}\right]-(CH_2)_{14}-$ | Ar | 12 | $-(CH_2)_{14}-$ | Ia-269 |
| $\left[R_{13}^x(SiO_{1,5})_{14}\right]-(CH_2)_{14}-$ | Ar | 14 | $-(CH_2)_{14}-$ | Ia-270 |
| $\left[R_{15}^x(SiO_{1,5})_{16}\right]-(CH_2)_{14}-$ | Ar | 16 | $-(CH_2)_{14}-$ | Ia-271 |
| $\left[R_{17}^x(SiO_{1,5})_{18}\right]-(CH_2)_{14}-$ | Ar | 18 | $-(CH_2)_{14}-$ | Ia-272 |
| $\left[R_3^x(SiO_{1,5})_4\right]-(CH_2)_{15}-$ | Ar | 4 | $-(CH_2)_{15}-$ | Ia-273 |
| $\left[R_5^x(SiO_{1,5})_6\right]-(CH_2)_{15}-$ | Ar | 6 | $-(CH_2)_{15}-$ | Ia-274 |
| $\left[R_7^x(SiO_{1,5})_8\right]-(CH_2)_{15}-$ | Ar | 8 | $-(CH_2)_{15}-$ | Ia-275 |
| $\left[R_9^x(SiO_{1,5})_{10}\right]-(CH_2)_{15}-$ | Ar | 10 | $-(CH_2)_{15}-$ | Ia-276 |
| $\left[R_{11}^x(SiO_{1,5})_{12}\right]-(CH_2)_{15}-$ | Ar | 12 | $-(CH_2)_{15}-$ | Ia-277 |
| $\left[R_{13}^x(SiO_{1,5})_{14}\right]-(CH_2)_{15}-$ | Ar | 14 | $-(CH_2)_{15}-$ | Ia-278 |
| $\left[R_{15}^x(SiO_{1,5})_{16}\right]-(CH_2)_{15}-$ | Ar | 16 | $-(CH_2)_{15}-$ | Ia-279 |

(fortgesetzt)

| $R^0$ | $R^1$ | n | $R^y$ | Formel |
|---|---|---|---|---|
| $\left[R^{x}_{17}(SiO_{1,5})_{18}\right]-(CH_2)_{15}-$ | Ar | 18 | $-(CH_2)_{15}-$ | Ia-280 |
| $\left[R^{x}_{3}(SiO_{1,5})_{4}\right]-(CH_2)_{16}-$ | Ar | 4 | $-(CH_2)_{16}-$ | Ia-281 |
| $\left[R^{x}_{5}(SiO_{1,5})_{6}\right]-(CH_2)_{16}-$ | Ar | 6 | $-(CH_2)_{16}-$ | Ia-282 |
| $\left[R^{x}_{7}(SiO_{1,5})_{8}\right]-(CH_2)_{16}-$ | Ar | 8 | $-(CH_2)_{16}-$ | Ia-283 |
| $\left[R^{x}_{9}(SiO_{1,5})_{10}\right]-(CH_2)_{16}-$ | Ar | 10 | $-(CH_2)_{16}-$ | Ia-284 |
| $\left[R^{x}_{11}(SiO_{1,5})_{12}\right]-(CH_2)_{16}-$ | Ar | 12 | $-(CH_2)_{16}-$ | Ia-285 |
| $\left[R^{x1}_{13}(SiO_{1,5})_{14}\right]-(CH_2)_{16}-$ | Ar | 14 | $-(CH_2)_{16}-$ | Ia-286 |
| $\left[R^{x1}_{15}(SiO_{1,5})_{16}\right]-(CH_2)_{16}-$ | Ar | 16 | $-(CH_2)_{16}-$ | Ia-287 |
| $\left[R^{x1}_{17}(SiO_{1,5})_{18}\right]-(CH_2)_{16}-$ | Ar | 18 | $-(CH_2)_{16}-$ | Ia-288 |
| $\left[R^{x1}_{3}(SiO_{1,5})_{4}\right]-(CH_2)_{17}-$ | Ar | 4 | $-(CH_2)_{17}-$ | Ia-289 |
| $\left[R^{x1}_{5}(SiO_{1,5})_{6}\right]-(CH_2)_{17}-$ | Ar | 6 | $-(CH_2)_{17}-$ | Ia-290 |
| $\left[R^{x1}_{7}(SiO_{1,5})_{8}\right]-(CH_2)_{17}-$ | Ar | 8 | $-(CH_2)_{17}-$ | Ia-291 |
| $\left[R^{x1}_{9}(SiO_{1,5})_{10}\right]-(CH_2)_{17}-$ | Ar | 10 | $-(CH_2)_{17}-$ | Ia-292 |
| $\left[R^{x1}_{11}(SiO_{1,5})_{12}\right]-(CH_2)_{17}-$ | Ar | 12 | $-(CH_2)_{17}-$ | Ia-293 |
| $\left[R^{x1}_{13}(SiO_{1,5})_{14}\right]-(CH_2)_{17}-$ | Ar | 14 | $-(CH_2)_{17}-$ | Ia-294 |
| $\left[R^{x1}_{15}(SiO_{1,5})_{16}\right]-(CH_2)_{17}-$ | Ar | 16 | $-(CH_2)_{17}-$ | Ia-295 |
| $\left[R^{x1}_{17}(SiO_{1,5})_{18}\right]-(CH_2)_{17}-$ | Ar | 18 | $-(CH_2)_{17}-$ | Ia-296 |
| $\left[R^{x1}_{3}(SiO_{1,5})_{4}\right]-(CH_2)_{18}-$ | Ar | 4 | $-(CH_2)_{18}-$ | Ia-297 |
| $\left[R^{x}_{5}(SiO_{1,5})_{6}\right]-(CH_2)_{18}-$ | Ar | 6 | $-(CH_2)_{18}-$ | Ia-298 |
| $\left[R^{x}_{7}(SiO_{1,5})_{8}\right]-(CH_2)_{18}-$ | Ar | 8 | $-(CH_2)_{18}-$ | Ia-299 |

(fortgesetzt)

| $R^0$ | $R^1$ | n | $R^y$ | Formel |
|---|---|---|---|---|
| $\left[R_9^x(SiO_{1,5})_{10}\right]-(CH_2)_{18}-$ | Ar | 10 | $-(CH_2)_{18}-$ | Ia-300 |
| $\left[R_{11}^x(SiO_{1,5})_{12}\right]-(CH_2)_{18}-$ | Ar | 12 | $-(CH_2)_{18}-$ | Ia-301 |
| $\left[R_{13}^x(SiO_{1,5})_{14}\right]-(CH_2)_{18}-$ | Ar | 14 | $-(CH_2)_{18}-$ | Ia-302 |
| $\left[R_{15}^x(SiO_{1,5})_{16}\right]-(CH_2)_{18}-$ | Ar | 16 | $-(CH_2)_{18}-$ | Ia-303 |
| $\left[R_{17}^x(SiO_{1,5})_{18}\right]-(CH_2)_{18}-$ | Ar | 18 | $-(CH_2)_{18}-$ | Ia-304 |
| $\left[R_3^x(SiO_{1,5})_4\right]-(CH_2)_{19}-$ | Ar | 4 | $-(CH_2)_{19}-$ | Ia-305 |
| $\left[R_5^x(SiO_{1,5})_6\right]-(CH_2)_{19}-$ | Ar | 6 | $-(CH_2)_{19}-$ | Ia-306 |
| $\left[R_7^x(SiO_{1,5})_8\right]-(CH_2)_{19}-$ | Ar | 8 | $-(CH_2)_{19}-$ | Ia-307 |
| $\left[R_9^x(SiO_{1,5})_{10}\right]-(CH_2)_{19}-$ | Ar | 10 | $-(CH_2)_{19}-$ | Ia-308 |
| $\left[R_{11}^x(SiO_{1,5})_{12}\right]-(CH_2)_{19}-$ | Ar | 12 | $-(CH_2)_{19}-$ | Ia-309 |
| $\left[R_{13}^x(SiO_{1,5})_{14}\right]-(CH_2)_{19}-$ | Ar | 14 | $-(CH_2)_{19}-$ | Ia-310 |
| $\left[R_{15}^x(SiO_{1,5})_{16}\right]-(CH_2)_{19}-$ | Ar | 16 | $-(CH_2)_{19}-$ | Ia-311 |
| $\left[R_{17}^x(SiO_{1,5})_{18}\right]-(CH_2)_{19}-$ | Ar | 18 | $-(CH_2)_{19}-$ | Ia-312 |
| $\left[R_3^x(SiO_{1,5})_4\right]-(CH_2)_{20}-$ | Ar | 4 | $-(CH_2)_{20}-$ | Ia-313 |
| $\left[R_5^x(SiO_{1,5})_6\right]-(CH_2)_{20}-$ | Ar | 6 | $-(CH_2)_{20}-$ | Ia-314 |
| $\left[R_7^x(SiO_{1,5})_8\right]-(CH_2)_{20}-$ | Ar | 8 | $-(CH_2)_{20}-$ | Ia-315 |
| $\left[R_9^x(SiO_{1,5})_{10}\right]-(CH_2)_{20}-$ | Ar | 10 | $-(CH_2)_{20}-$ | Ia-316 |
| $\left[R_{11}^x(SiO_{1,5})_{12}\right]-(CH_2)_{20}-$ | Ar | 12 | $-(CH_2)_{20}-$ | Ia-317 |
| $\left[R_{13}^x(SiO_{1,5})_{14}\right]-(CH_2)_{20}-$ | Ar | 14 | $-(CH_2)_{20}-$ | Ia-318 |
| $\left[R_{15}^x(SiO_{1,5})_{16}\right]-(CH_2)_{20}-$ | Ar | 16 | $-(CH_2)_{20}-$ | Ia-319 |

(fortgesetzt)

| $R^0$ | $R^1$ | n | $R^y$ | Formel |
|---|---|---|---|---|
| $\left[R^x_{17}(SiO_{1,5})_{18}\right]-(CH_2)_{20}-$ | Ar | 18 | $-(CH_2)_{20}-$ | Ia-320 |
| *)"-" steht für $R^0$ abwesend (freies Elektronenpaar an $N^3$) **) "Ar" = Arylrest | | | | |

Bevorzugte Verbindungen sind die der Formel (Ia), wobei $R^2$, $R^{2'}$, $R^3$ und $R^{3'}$ bzw. $R^2$ und $R^3$ wie vorstehend definiert sind, $R^y$ und n wie in Tabelle 1 definiert sind und $R^x$ aus der Gruppe (i) ausgewählt ist und unsubstituiert ist oder substituiert mit Substituenten aus der Gruppe (i).

Bevorzugte Verbindungen sind die der Formel (Ia), wobei $R^2$, $R^{2'}$, $R^3$ und $R^{3'}$ bzw. $R^2$ und $R^3$ wie vorstehend definiert sind, $R^y$ und n wie in Tabelle 1 definiert sind und $R^x$ geradkettiges oder verzweigtes, substituiertes oder unsubstituiertes $C_1$-$C_{20}$-Alkyl, Cycloalkyl, oder $C_6$-$C_{18}$-Aryl ist.

Bevorzugte Verbindungen sind die der Formel (Ia), wobei $R^2$, $R^{2'}$, $R^3$ und $R^{3'}$ bzw. $R^2$ und $R^3$ wie vorstehend definiert sind, und $R^y$ sowie n wie in Tabelle 1 definiert sind , und $R^x$ ein geradkettiger oder verzweigter, substituierter oder unsubstituierter $C_1$-$C_{20}$-Alkylrest, bevorzugt ein geradkettiger oder verzweigter, substituierter oder unsubstituierter $C_4$-$C_{10}$-Alkylrest, weiter bevorzugt ein geradkettiger oder verzweigter, substituierter oder unsubstituierter $C_4$-$C_8$-Alkylrest, und besonders bevorzugt ein Isobutylrest ist.

Bevorzugte Verbindungen sind die der Formel (Ia), wobei $R^2$, $R^{2'}$, $R^3$ und $R^{3'}$ bzw. $R^2$ und $R^3$ wie vorstehend definiert sind, und $R^y$ sowie n wie in Tabelle 1 definiert sind, und $R^y$ substituiert ist mit einer oder mehreren Gruppen, ausgewählt aus Heteroatom, Aryl, Ether, Polyether, Polythioether, Amino oder einer arylverbrückte Alkylenkette der Formel $-(CH_2)_w$-Ar-$(CH_2)_z$-, wobei w und z unabhängig jeweils eine ganze Zahl von 0 bis 20 sind.

Bevorzugte Verbindungen sind die der Formel (Ic), wobei $R^2$, $R^{2'}$, $R^3$, $R^{3'}$, R und $R^x$ wie vorstehend definiert sind und $R^0$, $R^1$, n und $R^y$ wie in Tabelle 1 definiert sind.

Bevorzugte Verbindungen sind die der Formel (Id), wobei $R^2$, $R^{2'}$, $R^3$, $R^{3'}$, R und $R^x$ wie vorstehend definiert sind und $R^0$, $R^1$, n und $R^y$ wie in Tabelle 1 definiert sind.

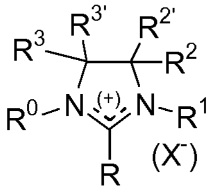

(Ic)

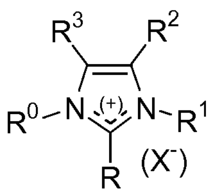

(Id)

Bevorzugte Verbindungen sind die der Formel (Ie), wobei $R^0$, $R^1$, n und $R^y$ wie in Tabelle 1 definiert sind.

Bevorzugte Verbindungen sind die der Formel (If), wobei $R^0$, $R^1$, n und $R^y$ wie in Tabelle 1 definiert sind.

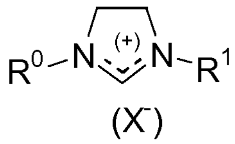

(Ie)

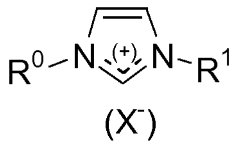

(If)

Bevorzugte Verbindungen sind die der Formel (Ic'), wobei $R^2$, $R^{2'}$, $R^3$, $R^{3'}$, R und $R^x$ wie vorstehend definiert sind und n und $R^y$ wie in Tabelle 1 definiert sind.

Bevorzugte Verbindungen sind die der Formel (Id'), wobei $R^2$, $R^{2'}$, $R^3$, $R^{3'}$, R und $R^x$ wie vorstehend definiert sind und n und $R^y$ wie in Tabelle 1 definiert sind.

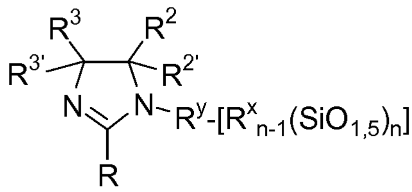

(Ic')

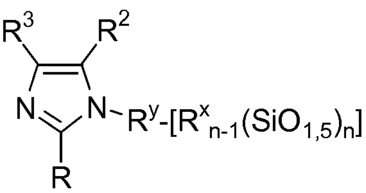

(Id')

Bevorzugte Verbindungen sind die der Formel (Ic'''), wobei $R^2$, $R^{2'}$, $R^3$, $R^{3'}$, R und $R^x$ wie vorstehend definiert sind und n und $R^y$ wie in Tabelle 1 definiert sind.

Bevorzugte Verbindungen sind die der Formel (Id'''), wobei $R^2$, $R^{2'}$, $R^3$, $R^{3'}$, R und $R^x$ wie vorstehend definiert sind und n und $R^y$ wie in Tabelle 1 definiert sind.

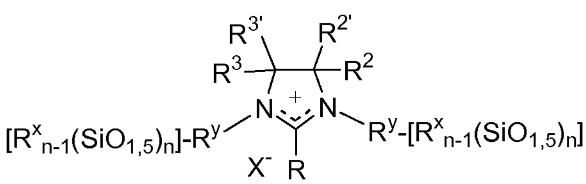

(Ic''')

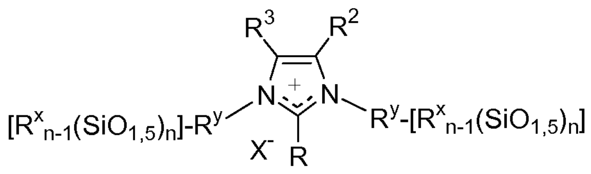

(Id''')

Bevorzugte Verbindungen sind die der Formel (Ic'), (Id'), (Ic''') oder (Id'''), wobei $R^2$, $R^{2'}$, $R^3$ und $R^{3'}$ bzw. $R^2$ und $R^3$ wie vorstehend definiert sind, $R^y$ und n wie unter $R^0$ in Tabelle 1 definiert sind und $R^x$ aus der Gruppe (i) ausgewählt ist, und unsubstituiert ist oder substituiert mit Substituenten aus der Gruppe (i).

Bevorzugte Verbindungen sind die der Formel (Ic'), (Id'), (Ic''') oder (Id'''), wobei $R^2$, $R^{2'}$, $R^3$ und $R^{3'}$ bzw. $R^2$ und $R^3$ wie vorstehend definiert sind, $R^y$ und n wie in Tabelle 1 definiert sind und $R^x$ geradkettiges oder verzweigtes, substituiertes oder unsubstituiertes $C_1$-$C_{20}$-Alkyl, Cycloalkyl, oder $C_6$-$C_{18}$-Aryl ist.

Bevorzugte Verbindungen sind die der Formel (Ic'), (Id'), (Ic''') oder (Id'''), wobei $R^2$, $R^{2'}$, $R^3$ und $R^{3'}$ bzw. $R^2$ und $R^3$ wie vorstehend definiert sind, und $R^y$ sowie n wie in Tabelle 1 definiert sind , und $R^x$ ein geradkettiger oder verzweigter, substituierter oder unsubstituierter $C_1$-$C_{20}$-Alkylrest, bevorzugt ein geradkettiger oder verzweigter, substituierter oder unsubstituierter $C_4$-$C_{10}$-Alkylrest, weiter bevorzugt ein geradkettiger oder verzweigter, substituierter oder unsubstituierter $C_4$-$C_8$-Alkylrest, und besonders bevorzugt ein Isobutylrest ist.

Bevorzugte Verbindungen sind die der Formel (Ic'), (Id'), (Ic''') oder (Id'''), wobei $R^2$, $R^{2'}$, $R^3$ und $R^{3'}$ bzw. $R^2$ und $R^3$ wie vorstehend definiert sind, und $R^y$ sowie n wie in Tabelle 1 definiert sind, und $R^y$ substituiert mit einer oder mehreren Gruppen, ausgewählt aus Heteroatom, Aryl, Ether, Polyether, Polythioether, Amino oder einer arylverbrückte Alkylenkette der Formel $-(CH_2)_w-Ar-(CH_2)_z-$, wobei w und z unabhängig jeweils eine ganze Zahl von 0 bis 20 sind.

Bevorzugte Verbindungen sind die der Formel (Ic'), (Id'), (Ic''') oder (Id'''), wobei $R^2$, $R^{2'}$, $R^3$ und $R^{3'}$ bzw. $R^2$ und $R^3$ wie vorstehend definiert sind, und $R^y$ sowie n wie in Tabelle 1 definiert sind, und wobei $R^x$ ein geradkettiger unsubstituierter $C_1$-$C_{20}$-Alkylrest ist, und $R^y$ ein geradkettiger unsubstituierter $C_4$-$C_{10}$-Alkylrest, bevorzugt ein geradkettiger unsubstituierter $C_4$-$C_8$-Alkylrest und besonders bevorzugt ein Isobutylrest ist.

Gemäß einer bevorzugten Ausführungsform besitzt die Silsesquioxan-substituierte Verbindung die Formel (IIa)

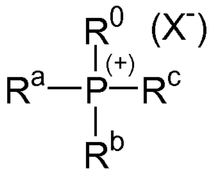

(IIa)

wobei $R^x$ bevorzugt ein substituierter oder unsubstituierter, geradkettiger oder verzweigter $C_1$-$C_{20}$-Alkylrest, und besonders bevorzugt ein $C_4$-$C_{10}$-Alkylrest ist. Weiter bevorzugt ist $R^x$ ein substituierter oder unsubstituierter, geradkettiger oder verzweigter $C_4$-$C_8$-Alkylrest, wobei die Substituenten aus der Gruppe (i) oder (ii), und bevorzugt aus der Gruppe (i) ausgewählt sind.

Gemäß einer weiteren bevorzugten Ausführungsform liefert die Erfindung die Verbindungen der Formel (IIa), wobei $R^y$ ausgewählt aus der Gruppe, bestehend aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_3$-$C_{13}$-Heteroarylen, wobei $R^y$ substituiert sein kann mit einem oder mehreren, ausgewählt aus Heteroatom, wobei das Heteroatom N, S oder O ist, Aryl, Ether, Ester, Polyether, Polythioether, Amino, Alkylamino und einer arylverbrückten Alkylenkette.

Gemäß einer bevorzugten Ausführungsform liefert die Erfindung die Verbindungen der Formel (IIa), wobei der Silsesquioxan-Substituent die Struktur a), b) oder c) gemäß (6) besitzt, und $R^x$ ausgewählt ist aus linearem oder verzweigtem $C_1$-$C_{20}$-Alkyl, $C_3$-$C_{10}$-Cycloalkyl, $C_1$-$C_{20}$-Alkoxy, $C_2$-$C_{20}$-Alkenyl, $C_2$-$C_{20}$-Alkenyloxy, Aryloxy, $C_1$-$C_{20}$-Alkylthio, $C_1$-$C_{20}$-Carboxylat, Aryl, oder Heteroaryl, $C_1$-$C_{20}$-Haloalkyl, anneliertem Aryl oder Heteroaryl, wobei die vorgenannten Gruppen substituiert sein können, ausgewählt aus der Gruppe, bestehend aus Heteroatom, Aryl, Ether, Polyether, Polythioether und Amino.

Gemäß einer bevorzugten Ausführungsform liefert die Erfindung die Verbindungen der Formel (IIa), wobei der

Silsesquioxanrest die Struktur a), b) oder c) gemäß (6) besitzt, und $R^x$ geradkettiges oder verzweigtes, unsubstituiertes oder substituiertes $C_4$-$C_{10}$-Alkyl ist, wobei $R^x$ besonders bevorzugt ein Isobutylrest ist; $R^y$ geradkettiges oder verzweigtes Alkylen mit 1 bis 10 Kohlenstoffatomen, besonders bevorzugt Alkylen mit 3, 5 und 10 Kohlenstoffatomen.

Bei den Resten $R^a$ und $R^b$ der Formel (IIa) kann es sich um annelierte aromatische Ringe handeln, die ihrerseits mit den bei der Ausführungsform (1) unter der Gruppe (ii) auf Seite 9 genannten Substituenten substituiert sein können.

Bevorzugte Verbindungen sind die der Formel (IIa), wobei $R^a$ und $R^b$ wie vorstehend definiert sind und $\left[R^x_{n-1}\left(SiO_{1,5}\right)_n\right]$-$R^y$-, $R^1$, n und $R^y$ wie in Tabelle 1 definiert sind.

Bevorzugte Verbindungen sind die der Formel (IIa), wobei $R^a$ und $R^b$ Adamantyl sind und $\left[R^x_{n-1}\left(SiO_{1,5}\right)_n\right]$-$R^y$-, n und $R^y$ wie in Tabelle 1 definiert sind.

Bevorzugte Verbindungen sind die der Formel (IIa), wobei $R^a$ und $R^b$ unsubstituiertes oder substituiertes Aryl sind und $\left[R^x_{n-1}\left(SiO_{1,5}\right)_n\right]$-$R^y$-, n und $R^y$ wie in Tabelle 1 definiert sind.

Bevorzugte Verbindungen sind die der Formel (IIa), wobei $R^a$ und $R^b$ Mesityl sind und $\left[R^x_{n-1}\left(SiO_{1,5}\right)_n\right]$-$R^y$-, n und $R^y$ wie in Tabelle 1 definiert sind.

Weitere bevorzugte Phosphine zur Verwendung in der vorliegenden Erfindung sind die in der WO 02/10178 A1 zusammengefaßten Adamantyl-Phosphinliganden.

Darüber hinaus liefert die vorliegende Erfindung die verbrückten Silsesquioxan-substituierten Verbindungen der Formel (Ib) oder (Ib'):

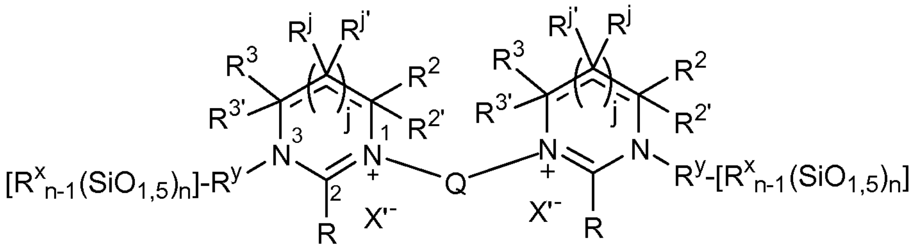

(Ib)

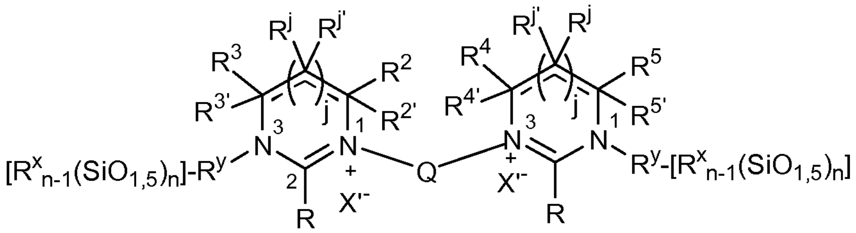

(Ib')

wobei Q eine verbrückende Gruppe ist, ausgewählt aus $-(CH_2)_q$ mit q= 1, 2, 3, 4, 5, 6, 7, 8, 9, 10, 11, 12, 13, 14, 15, 16, 17, 18, 19 oder 20, bevorzugt q=1-10, oder Arylen; = 0, 1 oder 2 C-C-Doppelbindungen im Ring bedeutet, und die übrigen Substituenten und Parameter wie unter Formel (la) in (1) definiert sind.

Bevorzugte Verbindungen sind die der Formel (Ib''), wobei $R^2$, $R^{2'}$, $R^3$, $R^{3'}$, $R^4$, $R^{4'}$, $R^5$, $R^{5'}$, R und $R^x$ wie vorstehend definiert sind und $R^0$, $R^1$, n und $R^y$ wie in Tabelle 1 definiert sind, und Q=-$CH_2$- ist.

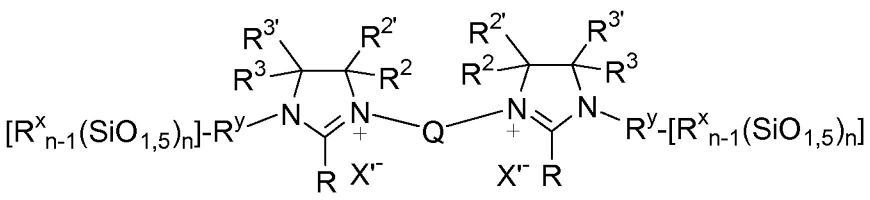

oder

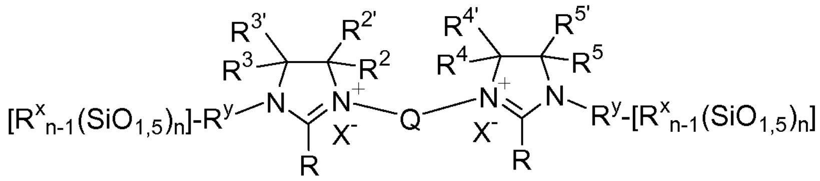

(Ib")

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=$-CH_2-$ist:

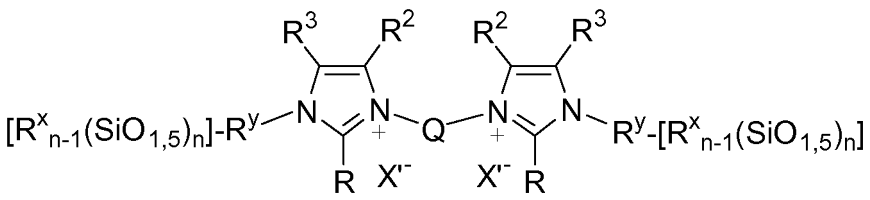

oder

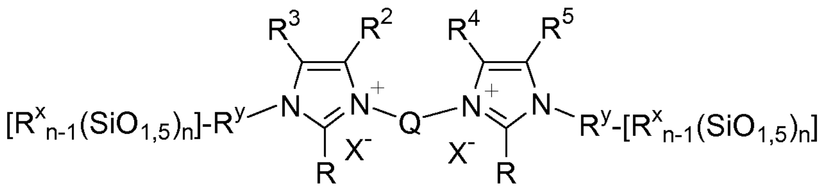

(Ib"')

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=$-CH_2-$ ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=$-CH_2-$ ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=$-CH_2-$ ist. Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=$-CH_2-$ ist.

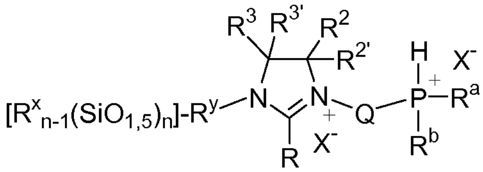

(IIIa')

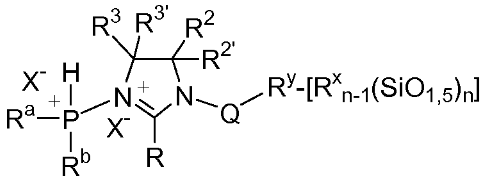

(IIIb')

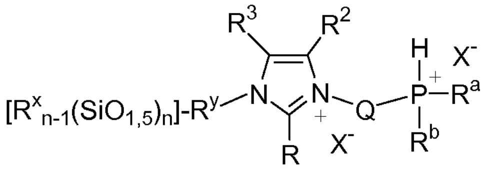

(IIIa")

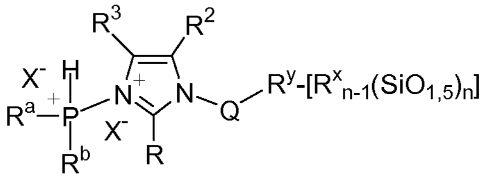

(IIIb")

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind, und Q=-$(CH_2)_2$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_2$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_2$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_2$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_2$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_2$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind, und Q=-$(CH_2)_3$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_3$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_3$-ist.

Bevorzugte Verbindungen sind die der Formel (IIIb'), wobei $R^2$, $R^{2'}$, $R^3$, $R^{3'}$, R und $R^x$ wie vorstehend definiert

sind, n und $R^y$ wie in Tabelle 1 definiert sind und Q=$-(CH_2)_3$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=$-(CH_2)_3$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=$-(CH_2)_3$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=$-(CH_2)_4$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=$-(CH_2)_4$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_4$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_4$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=$-(CH_2)_4$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=$-(CH_2)_4$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=$-(CH_2)_5$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=$-(CH_2)_5$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_5$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_5$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=$-(CH_2)_5$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=$-(CH_2)_5$- ist. Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=$-(CH_2)_6$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=$-(CH_2)_6$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_6$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_6$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=$-(CH_2)_6$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=$-(CH_2)_6$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=$-(CH_2)_7$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=$-(CH_2)_7$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_7$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=$-(CH_2)_7$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=$-(CH_2)_7$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=$-(CH_2)_7$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind, und Q=$-(CH_2)_8$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=$-(CH_2)_8$-ist.

Bevorzugte Verbindungen sind die der Formel (IIIa'), wobei $R^2$, $R^{2'}$, $R^3$, $R^{3'}$, R und $R^x$ wie vorstehend definiert

sind, n und $R^y$ wie in Tabelle 1 definiert sind und Q=-$(CH_2)_8$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_8$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_8$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_8$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_9$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_9$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_9$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_9$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_9$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_9$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{10}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{10}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{10}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{10}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{10}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{10}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{11}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{11}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{11}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{11}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{11}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{11}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{12}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{12}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{12}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{12}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{12}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{12}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{13}$- ist.

Bevorzugte Verbindungen sind die der Formel (Ib"'), wobei $R^2$, $R^3$, $R^4$, $R^5$, R und $R^x$ wie vorstehend definiert

sind, n und $R^y$ wie in Tabelle 1 definiert sind und Q=-$(CH_2)_{13}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{13}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{13}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{13}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{13}$- ist. Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{14}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{14}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{14}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{14}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{14}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{14}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{15}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{15}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{15}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{15}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{15}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{15}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{16}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{16}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{16}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{16}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{16}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{16}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{17}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{17}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{17}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{17}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{17}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{17}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie

vorstehend definiert sind, n und $R^y$ wie in Tabelle 1 definiert sind und Q=-$(CH_2)_{18}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{18}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{18}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{18}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{18}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{18}$- ist.

Bevorzugte Verbindungen sind die der Formel (Ib"), wobei $R^2$, $R^{2'}$, $R^3$, $R^{3'}$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{19}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{19}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{19}$-ist.

Bevorzugte Verbindungen sind die der Formel (IIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{19}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{19}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{19}$- ist.

Bevorzugte Verbindungen sind die der Formel (Ib"), wobei $R^2$, $R^{2'}$, $R^3$, $R^3$, $R^4$, $R^{4'}$, $R^5$, $R^{5'}$, R und $R^x$ wie vorstehend definiert sind, n und $R^y$ wie in Tabelle 1 definiert sind und Q=-$(CH_2)_{20}$- ist.

Bevorzugte Verbindungen sind die der Formel (Ib"'), wobei $R^2$, $R^3$, $R^4$, $R^5$, R und $R^x$ wie vorstehend definiert sind, n und $R^y$ wie in Tabelle 1 definiert sind und Q=-$(CH_2)_{20}$-ist.

Bevorzugte Verbindungen sind die der Formel (IIIa'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{20}$-ist.

Bevorzugte Verbindungen sind die der Formel (IIIb'), wobei $R^2$, $R^{2'}$, $R^3$, $R^{3'}$, R und $R^x$ wie vorstehend definiert sind, n und $R^y$ wie in Tabelle 1 definiert sind und Q=-$(CH_2)_{20}$-ist.

Bevorzugte Verbindungen sind die der Formel (IIIa"), wobei $R^2$, $R^3$, R und $R^x$ wie vorstehend definiert sind, n und $R^y$ wie in Tabelle 1 definiert sind und Q=-$(CH_2)_{20}$- ist.

Bevorzugte Verbindungen sind die der Formel (IIIb"), wobei $R^2$, $R^3$, R und $R^x$ wie vorstehend definiert sind, n und $R^y$ wie in Tabelle 1 definiert sind und Q=-$(CH_2)_{20}$- ist.

In den vorstehend genannten Verbindungen ist bevorzugt $R^x$ ein geradkettiger oder verzweigter $C_1$-$C_{20}$-Alkylrest, bevorzugt ein $C_4$-$C_{10}$-Alkylrest, und weiter bevorzugt ein $C_4$-$C_8$-Alkylrest. Besonders bevorzugt ist $R^x$ein Isobutylrest.

Bevorzugte Verbindungen sind die vorstehend mit der Formel (IIIa'), (IIIb'), (IIIa") und (IIIb") definierten, wobei $R^a$ oder $R^b$, oder $R^a$ und $R^b$ 1- Adamantyl oder 2-Adamantyl sind.

Bevorzugte Verbindungen sind die vorstehend mit der Formel (IIIa'), (IIIb'), (IIIa") und (IIIb") definierten, wobei $R^a$ oder $R^b$, oder $R^a$ und $R^b$ Mesityl sind.

Bevorzugte Verbindungen sind die vorstehend mit der Formel (IIIa'), (IIIb'), (IIIa") und (IIIb") definierten, wobei $R^a$ Mesityl ist und $R^b$ Adamantyl ist.

Die Erfindung stellt auch ein Verfahren zur Herstellung der vorstehend beschriebenen Silsesquioxan-substituierten Verbindungen bereit.

Im Vordergrund des erfindungsgemäßen Verfahrens zur Herstellung der bislang nicht bekannten erfindungsgemäßen Silsesquioxan-substituierten Verbindungen steht eine lösungsmittelfreie Reaktionsführung bzw. die Verwendung von sehr geringen Lösungsmittelmengen, wobei das Lösungsmittel nicht als Reaktionsmedium, das die beteiligten Reaktanden löst, fungiert, sondern als schmelzpunktsenkende Komponente wirkt.

Das erfindungsgemäße Verfahren umfaßt die folgenden Schritte:

(A) die chemische Umsetzung einer Verbindung, ausgewählt aus

a) einer stickstoffhaltigen Verbindung der Formel (Ia')

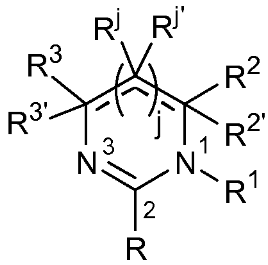

(Ia')

wobei $R^1$=H ist und R, $R^2$, $R^{2'}$, $R^3$, $R^{3'}$, $R^j$, $R^{j'}$, und j die in (1) beschriebenen Definitionen besitzen, oder

b) einem Phosphin der Formel (IIa')

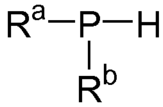

(IIa')

wobei $R^a$ und $R^b$ wie in (1) definiert sind
mit einem Silsesquioxan der Formel (IV)

$$\left[R^x_{n-1}\left(SiO_{1,5}\right)_n\right]\text{-}R^y\text{-}X \text{ (IV)}$$

jeweils als Reinsubstanz in der Schmelze; wobei X eine Abgangsgruppe, z. B. ausgewählt aus Tosylat, Mesylat, Triflat, Acetat, Sulfonat, Sulfinat, Cl, Br oder I, ist, und $\left[R^x_{n-1}\left(SiO_{1,5}\right)_n\right]\text{-}R^y\text{-}$ wie in (1) definiert ist;

(B) ggf. Reinigung des erhaltenen Reaktionsprodukts.

In der obigen Formel (IIa') sind $R^a$ und $R^b$ unabhängig ausgewählt aus der Gruppe (i) und Wasserstoff, und können mit Substituenten der Gruppe (i) oder (ii) gemäß Ausführungsform (1) substituiert sein.

Die erfindungsgemäß verknüpften Phosphoniumsalze können durch einfache Umsetzung verschiedener Polysilsesquioxan-Verbindungen, z.B. Halogenderivate mit verschiedenen Kettenlängen mit einem Phosphin erhalten werden.

Im folgenden Beispiel wird das bevorzugte Bisadamantylphosphin verwendet, da dieses Substitutionsmuster auch im Benchmark-Liganden mit der Bezeichnung cataCXiumA® vorliegt, der sich insbesondere in vielen Palladium-katalysiserten Kreuzkupplungsreaktionen als hervorragender Ligand erwiesen hat. Eine Verbindung des würfelförmigen polyedrischen oligomeren Silsesquioxans mit Bisadamantylphosphin über eine unverzweigte Kette führt zu einer Ligandenstruktur, die derjenigen von cataCXiumA® sehr ähnlich ist, wobei $R^y$ Alkylen und bevorzugt Propylen, Pentylen oder Decylen ist (Schema 1):

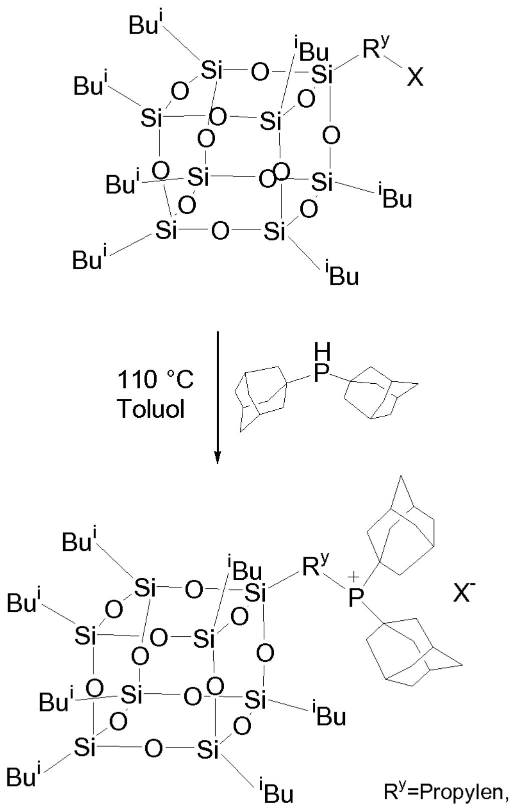


$R^y$=Propylen, Pentylen, Decylen
X=Br, I

Schema 1

Die erfindungsgemäße Synthese ermöglicht eine einfach durchzuführende Variation beider Kettenlängen zwischen dem Phosphoratom und dem würfelförmigen Silsesquioxan, und den Baugruppen am Phosphoratom.

Gemäß einer bevorzugten Ausführungsform wird ein Verfahren zur Herstellung einer der vorstehend beschriebenen Silsesquioxan-substituierten Verbindungen gemäß dem folgenden allgemeinen Schema 2, dargestellt für j=0, bereitgestellt:

x

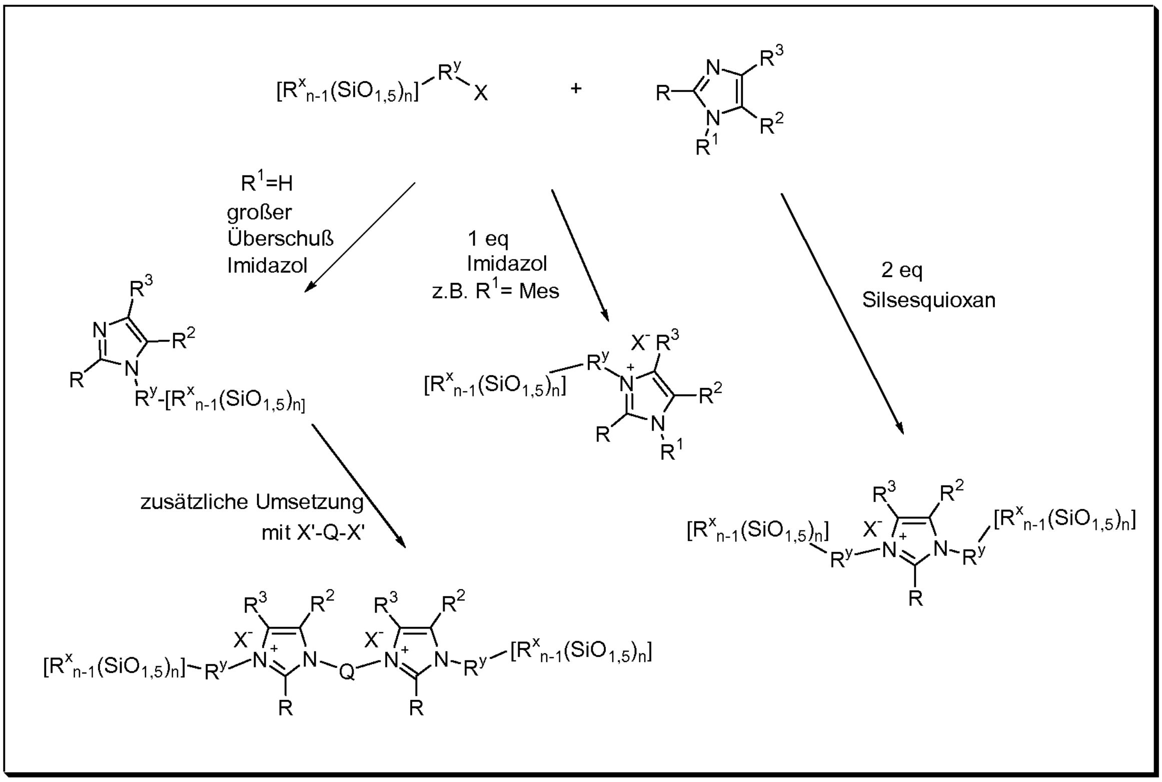


Schema 2. Darstellung von Silsesquioxan-substituierten Imidazolderivaten

Allgemein wird beim erfindungsgemäßen Verfahren bevorzugt das Silsesquioxan (IV) und die stickstoffhaltige Verbindung (Ia') oder das Phosphin (IIa') miteinander, gegebenenfalls unter Rühren, bis zur Schmelze erhitzt und in der Schmelze umgesetzt.

Da die meisten alkylsubstituierten freien Phosphine zu Oxidation neigen, wenn sie der Luft ausgesetzt werden, ist es besser, diese Verbindungen als Phosphoniumsalze zu lagern. Die Phosphoniumsalze sind gegenüber Feuchtigkeit und Luft sehr stabile Verbindungen, die lange Zeit gelagert werden können. Die erfindungsgemäßen Ligandsalze werden durch Reaktionen von Polysilsesquioxan-Verbindungen mit Abgangsgruppen X, z.B. Halogeniden, und den entsprechenden Stickstoff- oder Phosphorderivaten gewonnen.

Bevorzugt wird erfindungsgemäß diejenige Reaktionskomponente, ausgewählt aus dem Silsesquioxan (IV) und der stickstoffhaltigen Verbindung (Ia') oder dem Phosphin (IIa'), mit dem relativ niedrigeren Schmelzpunkt bis zur Schmelze erhitzt und die andere Reaktionskomponente in fester oder flüssiger (geschmolzener) Form, gegebenenfalls unter Rühren, zugegeben, und die beiden Reaktionskomponenten in der Schmelze umgesetzt.

Die Schmelztemperatur bzw. Reaktionstemperatur beim erfindungsgemäßen Verfahren liegt allgemein in einem Bereich zwischen 70°C und 190°C, bevorzugt in einem Bereich von 70°C bis 160°C, weiter bevorzugt in einem Bereich zwischen 90°C und 150°C, und ganz besonders bevorzugt in einem Bereich zwischen 110°C und 150°C. In einer weiter bevorzugten Ausführungsform liegt der Bereich der Schmelz- bzw. Reaktionstemperatur zwischen 130°C und 150°C.

Gemäß einer bevorzugten Ausführungsform wird das Silsesquioxan (IV) durch Erhitzen geschmolzen und die stickstoffhaltige Verbindung (Ia') bzw. das Phosphin (IIa') wird in fester Form unter Rühren zugegeben und die Reaktionskomponenten in der Schmelze gehalten bis zur Vollständigkeit der Umsetzung.

Durch den Einsatz unterschiedlicher Äquivalente an Verbindung (IV) im Verhältnis zur Verbindung (Ia) bzw. (IIa) führt daher zur Bildung der folgenden Silsesquioxan-substituierten Verbindungen gemäß Ausführungsform (21):

a) Umsetzen von 0,9 bis 1,1 Moläquivalenten Silsesquioxan (IV) in Bezug auf die Menge der stickstoffhaltigen Verbindung (Ia'), wobei ein Produkt der Formel (Ic'), (Id'), (Ic") oder (Id") gebildet wird, wobei in Formel (Ic") und (Id") $R^1$ nicht H ist,

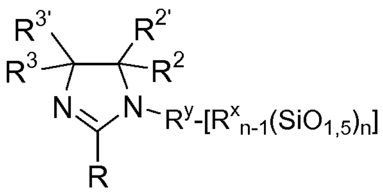

(Ic')

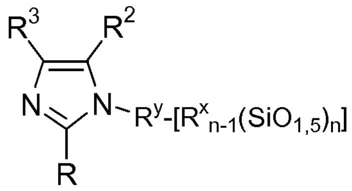

(Id')

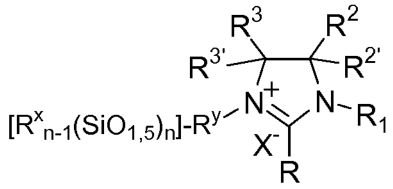

(Ic'')

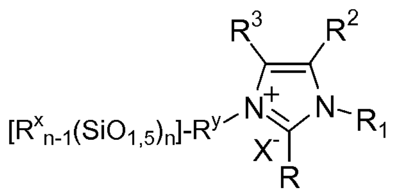

(Id'')

b) Umsetzen von 1,9 bis 2,1 Moläquivalenten Silsesquioxan (IV) in Bezug auf die Menge der stickstoffhaltigen Verbindung (Ia'), wobei ein Produkt der Formel (Ic''') oder (Id''') gebildet wird

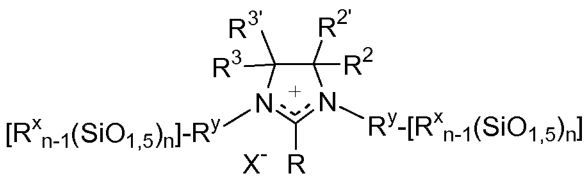

(Ic''')

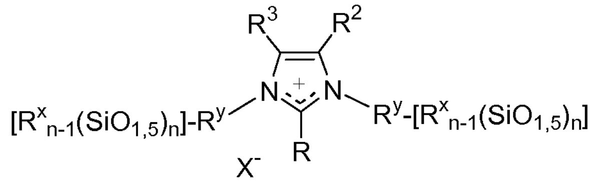

(Id''')

c) Umsetzen von 0,9 bis 1,1 Moläquivalenten Silsesquioxan in Bezug auf die Menge des Phosphins (IIa'), wobei ein Produkt der Formel (IIa) gebildet wird, wobei $R^0$ die Formel $\left[R^x_{n-1}\left(SiO_{1,5}\right)_n\right] R^y - R^y$ - besitzt:

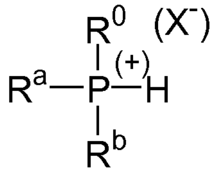

(IIa)

d) Umsetzen von 1,9 bis 2,1 Moläquivalenten Silsesquioxan in Bezug auf die Menge des Phosphins (IIa'), wobei ein Produkt der Formel (IIa) gebildet wird, wobei $R^0$ und $R^a$ oder $R^b$ die Formel $\left[R^x_{n-1}\left(SiO_{1,5}\right)_n\right] R^y -$ besitzen.

Gemäß einer bevorzugten Ausführungsform wird das stickstoffhaltige Derivat (Ia') bevorzugt im 10-100-fachen molaren Überschuß in Bezug auf das einzusetzende Silsesquioxan (IV) als Schmelze bei 70°C bis 190°C, bevorzugt bei 110°C bis 150°C, und besonders bevorzugt bei130°C-150°C vorgelegt, und anschließend das Silsesquioxan (IV) in fester Form portionsweise unter Rühren zugegeben.

Bezüglich der einzusetzenden Menge des Silsesquioxans (IV) wird einer bevorzugten Ausführungsform eine Menge von 0,9 bis 1,1, bevorzugt 1,0 Moläquivalenten in Bezug auf die Menge der stickstoffhaltigen Verbindung (Ia') bzw. des Phosphins (IIa') bevorzugt.

Der Schmelzpunkt einer oder beider Reaktionskomponenten, d.h. dem Silsesquioxan (IV) und der stickstoffhaltigen Verbindung (Ia') oder dem Phosphin (IIa') kann durch Zugabe einer schmelzpunkterniedrigenden inerten Verbindung in einer schmelzpunkterniedrigenden Menge abgesenkt werden.

Die schmelzpunkterniedrigende inerte Verbindung darf nicht in einem Temperaturbereich sieden, der unterhalb dem Schmelzpunkt der Reaktanden liegt, da diese sonst verdampft, und darf keine reaktiven Gruppen enthalten, die mit dem Silsesquioxan, der stickstoffhaltigen Verbindung oder dem Phosphin reagieren können. Sie besitzt einen Siedepunkt, der höher ist als der Schmelzpunkt der Reaktanden, und ist ausgewählt aus der Gruppe organische Verbindungen, bevorzugt aus der Gruppe umfassend Kohlenwasserstoffe und Ether mit einem Siedepunkt größer als 80°C. Bevorzugt wird die schmelzpunkterniedrigende inerte Verbindung ausgewählt aus der Gruppe, bestehend aus Toluol, Xylol, Heptan und Dibutylether, die dem vorgenannten Kriterium genügen.

Bevorzugt wird im erfindungsgemäßen Verfahren eine Verbindung der Formel (Ic) oder (Id), wobei $R^0$ abwesend ist:

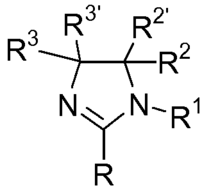

(Ic)

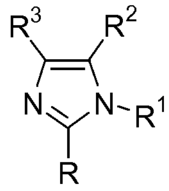

(Id)

mit einem Silsesquioxan der Formel (IV) umgesetzt

$$\left[R^{x}_{n-1}\left(SiO_{1,5}\right)_{n}\right]\text{-}R^{y}\text{-}X \text{ (IV)}$$

wobei n, X, $R^1$, $R^x$, $R^y$, $R^2$, $R^{2'}$, $R^3$ und $R^{3'}$ wie unter Formel (Ia) oben definiert sind, wobei $R^1$ nicht H ist, und ein im Verhältnis zur Verbindung der Formel (IV) 10-100-facher Überschuß an Verbindung (Ic) oder (Id) als Schmelze bei 70-190°C vorgelegt wird und portionsweise mit dem Silsesquioxan der Formel (IV) versetzt wird, wodurch eine Silsesquioxan-substituierte Verbindung der folgenden Formel (Ic') oder (Id') hergestellt wird:

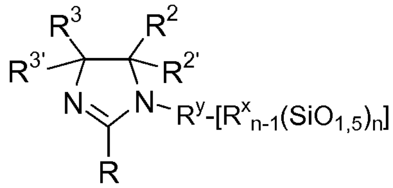

(Ic')

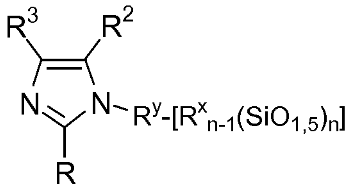

(Id')

Gemäß dieser Ausführungsform wird bevorzugt ein 20-40-facher Überschuß an Verbindung (Ic) oder (Id) eingesetzt.

Alternativ wird im vorgenannten Verfahren eine stickstoffhaltige Verbindung (Ia) der Formel (Ic) oder (Id)

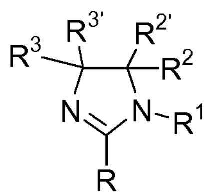

(Ic)

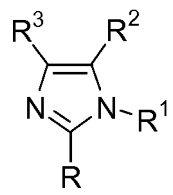

(Id)

mit dem Silsesquioxan der Formel (IV) umgesetzt

$$\left[R^{x}_{n-1}\left(SiO_{1,5}\right)_{n}\right]\text{-}R^{y}\text{-}X \text{ (IV)}$$

wobei $R^1$, $R^x$, $R^2$, $R^{2'}$, $R^3$ und $R^{3'}$ wie oben definiert sind, $R^1$ nicht H ist, und wobei das Silsesquioxan der Formel (IV) als Schmelze bei 70-190°C, bevorzugt bei 90°C bis 150°C, und besonders bevorzugt bei 130°C bis 150°C vorgelegt wird und portionsweise mit 2 Moläquivalenten Verbindung (Ic) oder (Id) versetzt wird,
wodurch eine Silsesquioxan-substituierte Verbindung der Formel (Ic") oder (Id") hergestellt wird:

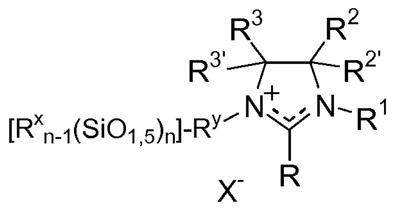

(Ic”)

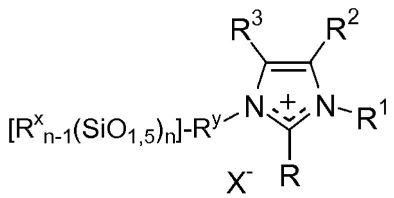

(Id”)

Phosphinhaltige Silsesquioxan-substituierte Verbindungen gemäß der Erfindung können bevorzugt hergestellt werden, indem ein Phosphin der Formel (IIa’)

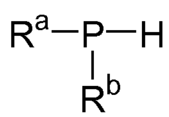

(IIa’)

bei 130°C-170°C geschmolzen wird, und zu der Schmelze 0,9-1,1 Moläquivalente des Silsesquioxans (IV) gegeben werden,
und X’ eine Abgangsgruppe ist, ausgewählt aus der Gruppe, bestehend aus Tosylat, Mesylat, Triflat, Acetat, Sulfonat, Sulfinat, Cl, Br oder I;

wobei $R^a$, $R^b$ und $R^0$ wie in oben definiert sind,
wodurch eine Verbindung der Formel (IIa) hergestellt wird

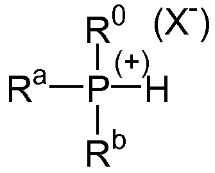

(IIa)

wobei $R^0$, $R^a$ oder $R^b$ $\left[R^x_{n-1}\left(SiO_{1,5}\right)_n\right]$-$R^y$- ist.

Mit dem obigen erfindungsgemäßen Verfahren können ein-, zwei- oder dreifach mit Silsesquioxan substituierte Phosphorverbindungen erhalten werden gemäß dem folgenden Schema 4:

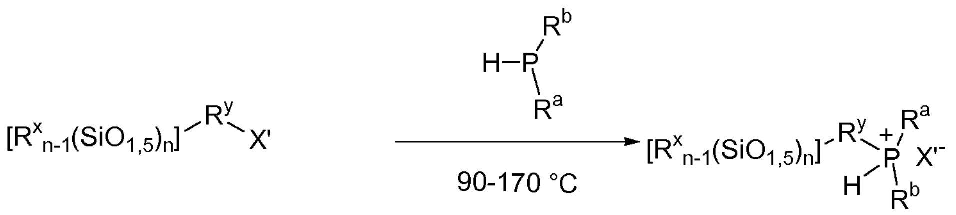


X'= Halogen, OTf, OTs, OMs, OAc

$R^a$, $R^b$= H, Ar, Alkyl, -$R^y$-[$R^x_{n-1}(SiO_{1,5})_n$]

Schema 4

Die vorliegende Erfindung liefert auch ein Verfahren zur Herstellung der verbrückten Silsesquioxan-substituierten Verbindungen der Formel (Ib) bzw. (Ib')

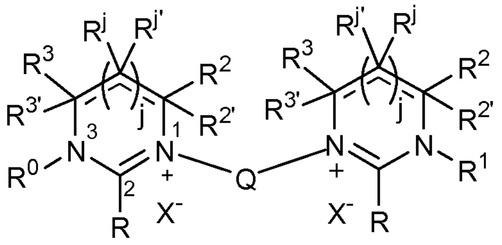

(Ib)

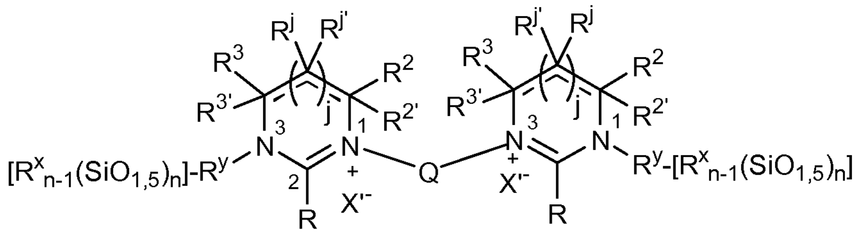

(Ib')

Das erfindungsgemäße Verfahren umfaßt dabei zusätzlich zu den Schritten des oben beschriebenen Verfahrens die chemische Umsetzung des in Schritt (A) bzw. (B) erhaltenen Produkts der Formel (Ia') in der Schmelze

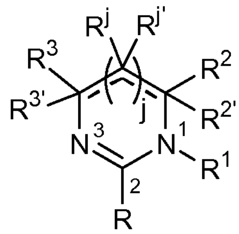

(Ia')

wobei $R^0$, R, $R^x$, $R^y$, $R^2$, $R^{2'}$, $R^3$, $R^{3'}$, $R^j$, $R^{j'}$, n und j die unter Formel (Ia) oben beschriebenen Definitionen besitzen, mit der Maßgabe, daß $R^0 = \left[R^x_{n-1}\left(SiO_{1,5}\right)_n\right]\text{-}R^y\text{-}$ ist, mit einer Verbindung der Formel X'-Q-X', wobei Q=$-(CH_2)_q-$ und wobei q= 1 bis 20; und X' eine Abgangsgruppe bezeichnet, ausgewählt aus Tosylat, Mesylat, Triflat, Acetat, Sulfonat, Sulfinat, Cl, Br oder I.

Weitere verbrückte Silsesquioxan-substituierte Verbindungen der Formel Ib können bevorzugt erhalten werden, indem 1,9-2,1 Moläquivalente, bevorzugt 2 Moläquivalente einer stickstoffhaltigen Verbindung (Ia) der Formel (Ic') oder (Id')

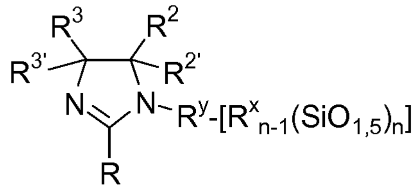

(Ic')

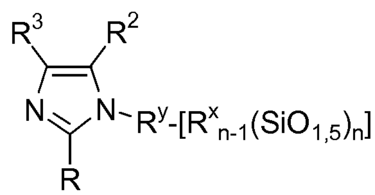

(Id')

bei 70°C-190°C, bevorzugt bei 90°C bis 150°C, und besonders bevorzugt bei 130°C bis 150°C durch Zugabe einer

schmelzpunkterniedrigenden inerten Verbindung geschmolzen werden, und zu der Schmelze 0,9-1,1 Moläquivalente, bevorzugt 1 Moläquivalent der Verbindung X'-$(CH_2)_q$-X' gegeben werden, und die schmelzpunkterniedrigende inerte Verbindung unter vermindertem Druck entfernt wird,
wobei q= 1, 2, 3, 4, 5, 6, 7, 8, 9, 10, 11, 12, 13, 14, 15, 16, 17, 18, 19 oder 20, und bevorzugt q= 2, 3, oder 4 ist, und X' eine Abgangsgruppe bezeichnet, ausgewählt aus Tosylat, Mesylat, Triflat, Acetat, Sulfonat, Sulfinat, Cl, Br oder I, wodurch eine Silsesquioxan-substituierte Verbindung der Formel (Ib") oder (Ib"') hergestellt wird:

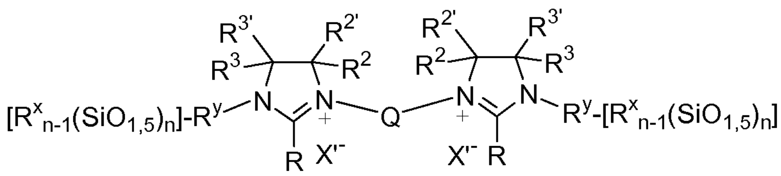

oder

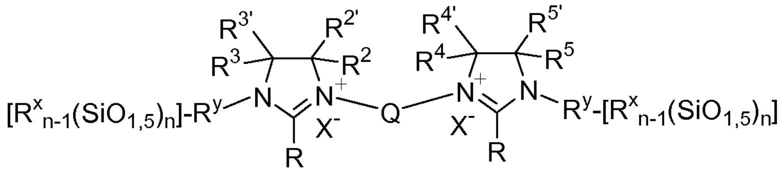

(Ib")

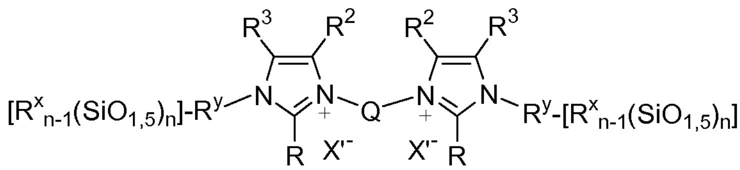

oder

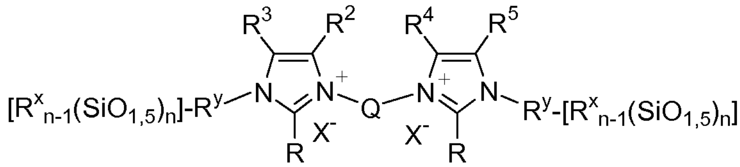

(Ib"')

wobei n, X, $R^2$, $R^{2'}$, $R^3$, $R^{3'}$, $R^4$, $R^{4'}$, $R^5$, $R^{5'}$, $R^j$, $R^{j'}$ und $\left[R^x_{n-1}\left(SiO_{1,5}\right)_n\right]$-$R^y$- jeweils gleich oder verschieden sein können, und wie in (1) definiert sind, und Q wie in (1) definiert ist.

Gemischte Liganden vom NHC-Typ mit der phosphorhaltigen und der stickstoffhaltigen Verbindung der Erfindung werden erhalten durch Behandlung von z.B. dem einfach Silsesquioxan-substituierten Imidazoliumsalz mit Phosphinen bzw. deren Salzen gemäß untenstehendem Schema 3 und den beschriebenen obigen Ausführungsformen (31) bis (33), wobei eine Verbindung der Formel (Ia'),

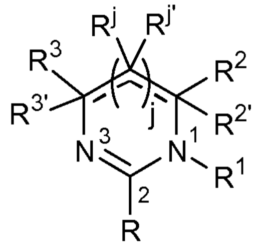

(Ia')

wobei $R^1$=H und $R^x$, R, $R^2$, $R^{2'}$, $R^3$, $R^{3'}$, $R^j$, $R^{j'}$, n und j die in Ausführungsform (1) beschriebenen Definitionen besitzen, mit einer Verbindung der Formel X'-Q-X' umgesetzt wird, wobei Q=$-(CH_2)_q-$ und wobei q= 1, 2, 3, 4, 5, 6, 7, 8, 9, 10, 11, 12, 13, 14, 15, 16, 17, 18, 19 oder 20, und bevorzugt q= 2, 3, oder 4 ist, und wobei X' eine Abgangsgruppe bezeichnet, gefolgt von einem Schritt der Umsetzung der erhaltenen Produkts mit der Verbindung der Formel (IIa") oder (IIa"')

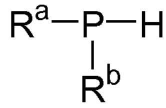

(IIa')

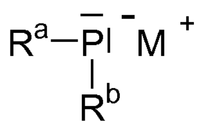

(IIa")

wobei $R^a$ und $R^b$ wie in (1) definiert sind, und M ein Metallkation ist, wobei eine Verbindung der Formel (IIIa) oder (IIIb) hergestellt wird.

Beispiele für Verbindungen der Formel (IIa') sind Lithium-, Natrium- oder Kaliumdiphenylphosphid (d.h. $R^a$=$R^b$=Phenyl).

Bevorzugte Verbindungen der Formel X'-Q-X' sind Alkyldihalogenide, und insbesondere Alkyldibromide oder Alkyldiiodide. Ein besonders bevorzugtes Alkyldihalogenid ist Dibrompropan.

Durch das genannte Verfahren können die erfindungsgemäßen Silsesquioxan-substituierten Verbindungen der Formeln (IIIa), (IIIb), (IIIa'), (IIIb'), (IIIa") und (IIIb") hergestellt werden.

Dies wird durch das Beispiel in Schema 3 verdeutlicht (Synthese einer Verbindung der Formel IIIa"):

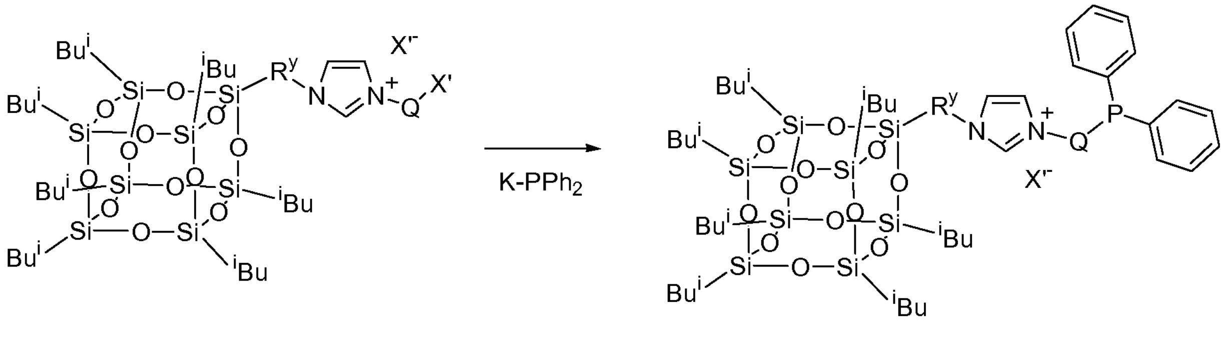


Schema 3

wobei $R^y$, Q und X' wie oben definiert sind. Bevorzugt ist $R^y$ geradkettiges oder verzweigtes Alkyl, Q ist Methylen, Propylen oder Butylen (q = 2, 3, 4), und X' ist Br. Eine besonders bevorzugte Verbindung der Formel X'-Q-X' ist dabei Dibrompropan.

Gemäß dem Verfahren der oben beschriebenen Ausführungsform (33), wobei in Schritt (C) anstelle von 0,9-1,1 Moläquivalenten im Bezug auf die stickstoffhaltige Verbindung ein molarer Überschuß an Verbindung X'-Q-X' eingesetzt wird, wird ein Zwischenprodukt der allgemeinen Formel (Ib"") gebildet:

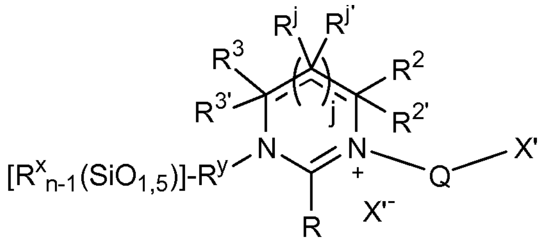

(Ib"")

das anschließend im Schritt (D) mit einer Verbindung der Formel (Ia')

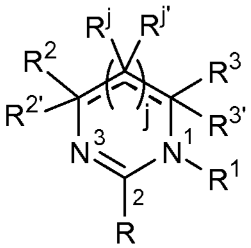

oder

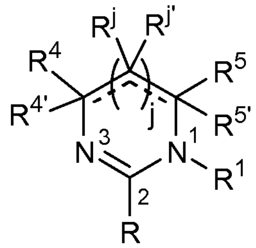

(Ia')

wobei $R^1 = \left[R^x_{n-1}\left(SiO_{1,5}\right)_n\right] R^y -$ ist, umgesetzt wird, wobei in Formeln (Ib"") und (Ia') $R^x$ n, $R^y$, R, $R^2$, $R^{2'}$, $R^3$, $R^{3'}$, $R^4$, $R^{4'}$, $R^5$, $R^{5'}$, $R^j$ $R^{j'}$, und j jeweils gleich oder verschieden sein können und wie in (1) definiert sind, Q, X und X' wie in (1) definiert sind;

wobei ein Produkt der Formel (Ib) bzw. (Ib') hergestellt wird:

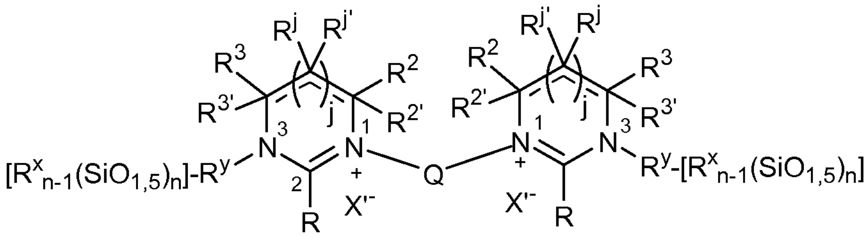

(Ib)

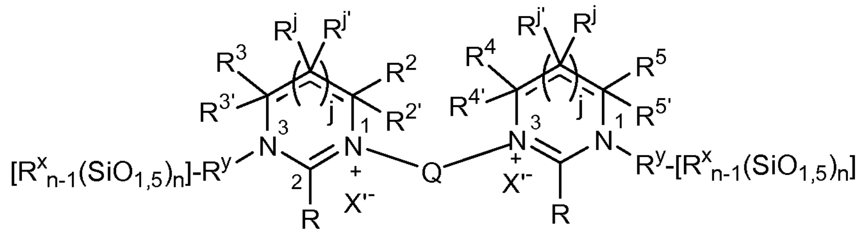

(Ib')

Dadurch wird es möglich, gemischte Derivate mit unterschiedlichen Substitutionsmustern bzw. unsymmetrisch aufgebaute Verbindungen der Formel (Ib') herzustellen, indem nach dem ersten Schritt (C) das Produkt der Struktur (Ib'''') isoliert und anschließend mit einer, von der in Schritt (A) eingesetzten Struktur (Ia') unterschiedlichen, stickstoffhaltigen Verbindung oder einem Phosphin umzusetzen mit beispielsweise folgender Struktur (wobei n, n', $R^x$, $R^{x'}$, $R^y$, $R^{y'}$, R, R', $R^2$, $R^3$, $R^4$ und $R^5$ gleich oder verschieden sein können und wie in (1) definiert sind, und $R^4$ und $R^5$ die gleichen Definitionen wie in (1) unter $R^2$ und $R^3$ aufgeführt annehmen können):

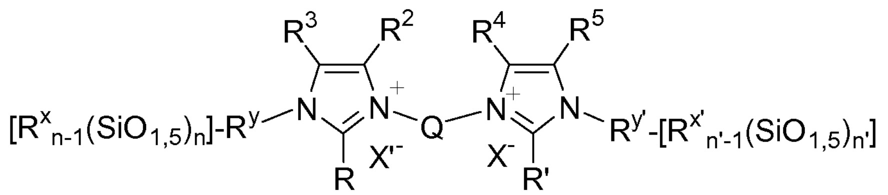

In einer bevorzugten Ausführungsform liefert die Verbindung auch die mehrfach substituierten Imidazolverbindungen der folgenden allgemeinen Formel (I)

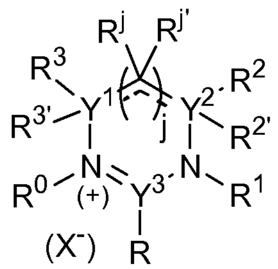

(I)

und den speziellen Formeln (V), (V') und (VI):

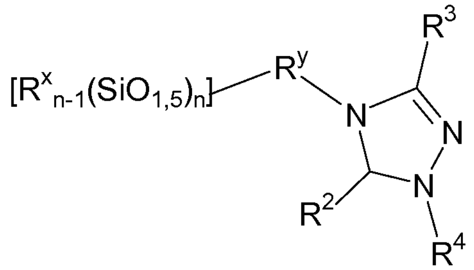

(V)

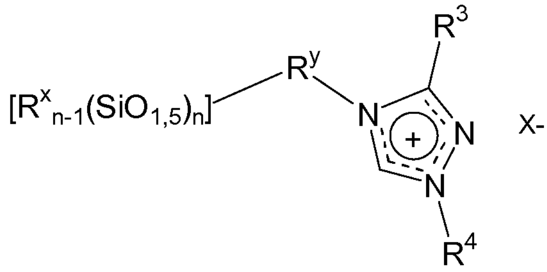

(V')

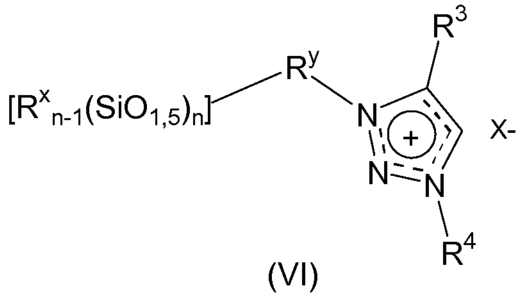

(VI)

wobei j=0 und $[R^x{}_{n-1}(SiO_{1,5})_n]$-$R^y$-, $R^2$, $R^3$ und $R^4$ wie in (1) definiert sind, und in Formeln (V') und (VI') jeweils eines der Stickstoffatome die positive Ladung trägt.

In einer bevorzugten Ausführungsform besitzt $R^4$ jeweils alternativ die Formel $[R^x{}_{n-1}(SiO_{1,5})_n]$-$R^y$-, so daß die obigen Verbindungen (V), (V') und (VI) auch zweifach mit Silsesquioxaneinheiten substituiert sein können.

Die Erfindung liefert auch Katalysatoren, in denen die erfindungsgemäßen Silsesquioxan-substituierten Verbindungen verwendet werden.

Die erfindungsgemäßen Silsesquioxan-substituierten Verbindungen können in Kombination mit Übergangsmetallkomplexen oder Übergangsmetallsalzen der VIII. Nebengruppe des Periodensystems der Elemente wie beispielsweise Palladium, Nickel, Platin, Rhodium, Iridium, Ruthenium, oder Cobalt als Katalysatoren eingesetzt werden. Dabei können die erfindungsgemäßen Liganden zum Beispiel *in situ* zu entsprechenden Übergangsmetallprecusorverbindungen gegeben werden und so für katalytische Anwendungen verwendet werden. Als Übergangsmetallverbindungen werden bevorzugt Palladium- oder Nickelverbindungen und besonders bevorzugt Palladium-Verbindungen eingesetzt, die die erfindungsgemäßen Silsesquioxan-substituierten Verbindungen enthalten.

Die erfindungsgemäßen Liganden können z. B. *in situ* zu Palladium(II)-Salzen bzw. Palladium (II)- bzw. Palladium(0)komplexen gegeben werden. Es kann jedoch vorteilhaft sein, daß Palladium(0)- bzw. Palladium(II)-Komplexe der erfindungsgemäßen Silsesquioxan-substituierten Verbindungen direkt hergestellt und dann für Katalyseanwendungen eingesetzt werden.

Beispiele für Palladiumkomponenten zur Verwendung mit den erfindungsgemäßen Silsesquioxan-substituierten Verbindungen als Liganden sind Palladium(II)-acetat, Palladium(II)-chlorid, Palladium(II)-bromid, Lithiumtetrachloropalladat (II), Palladium(II)-acetylacetonat, Palladium(0)-Dibenzylidenaceton-Komplexe, Palladium(0)-tetrakis(triphenylphosphan), Palladium(0)-bis(tri-o-tolylphosphan), Palladium(II)-propionat, Palladium(II)bis(triphenylphosphan)dichlorid, Palladium(0)-Diallylether-Komplexe, Palladium(II)-nitrat, Palladium(II)chlorid-bis(acetonitril), Palladium(II)-chlorid-bis(benzonitril) und weitere Palladium (0)- und Palladium (II)-Komplexe.

In Katalysatoren, die die erfindungsgemäßen Verbindungen als Liganden enthalten, können eine oder mehrere der erfindungsgemäßen Silsesquioxan-substituierten Verbindungen enthalten sein.

Die erfindungsgemäß hergestellten Silsesquioxan-substituierten Verbindungen können als Liganden zur katalytischen Herstellung z.B. von arylierten Olefinen (Heck Reaktionen), Biarylen (Suzuki-Reaktionen), $\alpha$-Arylketone und Aminen aus Arylhalogeniden oder Vinylhalogeniden verwendet werden. Darüberhinaus können auch andere übergangsmetallkatalysierte Reaktionen wie die Metathese oder Hydrierungen von Doppelbindungen bzw. Carbonylverbindungen, insbesondere jedoch palladium-und nickelkatalysierte Carbonylierungen von Arylhalogeniden, Alkinylierungen mit Alkinen (Sonogashira-Kupplungen), Kreuzkupplungen mit metallorganischen Reagenzien (Zinkreagenzien, Zinnreagenzien etc.) mit Katalysatorsystemen, die die erfindungsgemäßen Verbindungen als Liganden enthalten, ausgeführt werden.

Im Allgemeinen wird der Ligand bei katalytischen Anwendungen im Überschuss zum Übergangsmetall eingesetzt. Das Verhältnis Übergangsmetall zu Ligand beträgt vorzugsweise von 1:1 bis 1:1000. Besonders bevorzugt werden

Verhältnisse von Übergangsmetall zu Ligand von 1:1 bis 1:100. Das genaue zu verwendende Übergangsmetall/Ligand-Verhaltnis hängt von der konkreten Anwendung, aber auch von der eingesetzten Katalysatormenge ab.

In der vorliegenden Erfindung bedeuten Liganden chemische Verbindungen, die ein oder mehrere Atome umfassen. Eine koordinative Bindung wird gebildet, wenn ein oder mehrere Atome eines Liganden ihre Elektronen oder elektronengefüllten Orbitale einem anderen Atom zur Verfügung stellen. Das Elektronen beisteuernde Atom wird als Donor bezeichnet, während das die freien Elektronen oder die Elektronen aus einem gefüllten Orbital annehmende Orbital als Akzeptor bezeichnet wird. Ligandenatome, die die Elektronen oder Orbitale für koordinative Bindungen zur Verfügung stellen, sind normalerweise Hauptgruppenelemente der Gruppen III bis VI mit niedrigen Oxidationszahlen (z.B. C oder N). Dagegen sind Akzeptoren typischerweise Metallatome mit hohen Oxidationszahlen, z. B. Pd(II) oder Ru(III). Ein ungeladener Donor ist daher ein Ligand ohne Nettoladung, der Elektronen oder mit Elektronen gefüllte Orbitale für eine koordinative Bindung mit einem Akzeptor zur Verfügung stellen. Beispiele ungeladener Donoren sind (wobei die beiden Punkte die an der koordinativen Bindung teilnehmenden Elektronen andeuten):

$PH_3P$:, $R_2N$:, $Ph_3As$: sowie

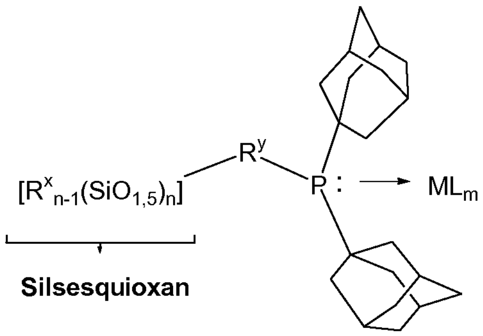

$L_m$= m weitere Liganden
M = Übergangsmetall

Kohlenstoff kann ebenfalls als ungeladener Elektronendonor fungieren. Das Kohlenstoffatom tritt dabei meistens als Carben auf, und besitzt ein Paar Elektronen in einem Orbital. Diese Elektronen werden für eine ungeladene Sigma-Bindung mit dem Metallzentrum zur Verfügung gestellt. Dies wird beispielhaft durch die folgenden Strukturen zum Ausdruck gebracht:

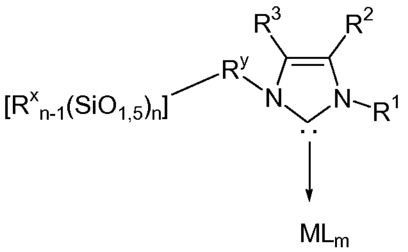

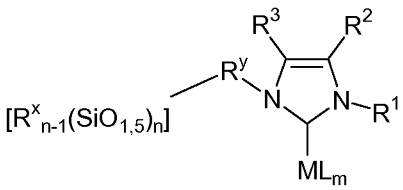

$L_m$ = m weitere Liganden
M= Übergangsmetall

Geladene (Elektronen-)Donoren können andererseits eine Nettoladung tragen, d.h. kationische Donoren tragen eine positive Nettoladung und anionische Donoren eine negative.

Die polyedrischen oligomeren Silsesquioxan-verknüpften Liganden und deren Salze gemäß der Erfindung können als Nanopartikel oder Nanokomposite betrachtet werden, da ihre Größe im Bereich weniger Nanometer liegt.

Demnach ist umso mehr überraschend, daß die Silsesquioxan-substituierten Verbindungen enthaltende Liganden und deren Salze einerseits löslich sind, was eine Vorbedingung für deren Verwendung in der homogenen Katalyse ist, und andererseits filtrierbar sind, was eine Vorbedingung für deren kosteneffiziente und einfache Entfernung

aus einer Reaktionslösung ist.

Die Verwendung von Silsesquioxan-substituierten Liganden oder deren Salze für die homogene Übergangsmetallkatalyse kombinieren daher in überraschender Weise die Vorteile homogener Katalyse, d.h. leichte Zugänglichkeit und hohe Aktivität mit dem Vorteil der leichten Entfernbarkeit. Die Silsesquioxan-substituierten Verbindungen als Liganden erlauben daher die Verwendung homogener Übergangsmetallkatalysatoren in kontinuierlichen Verfahren.

Die Silsesquioxan-substituierten Verbindungen der vorliegenden Erfindung und insbesondere deren Salze besitzen einen weiteren Vorteil gegenüber Liganden oder deren Salzen, die nicht Silsesquioxan-substituiert sind: Ligandensalze mit sehr geringer Löslichkeit in gewöhnlichen organischen Lösungsmitteln wie z. B. Toluol zeigen eine signifikant erhöhte Löslichkeit, wenn sie mit einer Silsesquioxan-Einheit verknüpft werden. Im Vergleich zu Imidazolium- oder Phosphoniumsalzen, die zum Aufbau von Übergangsmetallkatalysatoren in homogenene Verfahren verwendet werden, zeigen die Silsesquioxan-substituierten Verbindungen als Liganden drastisch erhöhte Löslichkeiten. Diese erhöhte Löslichkeit erleichtert den Aufbau der Übergangsmetallkatalysatoren mit diesen Ligandensalzen im Hinblick auf die Leichtigkeit der Reaktionsausführung. Tests haben gezeigt, daß in Toluol, das weithin als Lösungsmittel in kommerziellen Anwendungen in Gebrauch ist, Silsesquioxan-freie Imidazolium- und Phosphoniumsalze unlöslich sind, während die Silsesquioxan-substituierten Verbindungen der Erfindung sich sehr gut lösen.

Gemäß einer bevorzugten Ausführungsform liefert die vorliegende Erfindung neuartige Katalysatoren und Liganden vom Typ des N-heterocyclischen Carbens für Kreuzkupplungsreaktionen, wobei Polysilsesquioxan-Käfige oder andere polyedrische Formen mit Größen im Nanobereich als Nano-Anker dienen.

Bevorzugte Substituenten $R^x$ der erfindungsgemäßen Silsesquioxan-substituierten Verbindungen sind die oben aufgeführten, und besonders bevorzugt die unter (1) aufgeführten. Besonders bevorzugt als Substituenten $R^x$ sind unsubstituierte verzweigte Alkylketten. Diese sorgen für die Löslichkeit der Struktur der Silsesquioxan-substituierten Verbindung in verschiedenen organischen polaren und nichtpolaren Lösungsmitteln. Es ist daher wichtig, daß die bevorzugten Substituenten $R^x$ keine Gruppen besitzen, die eine chemische Wechselwirkung mit dem Katalysator oder anderen Reagenzien die bei der Anwendung verwendet werden, eingehen. Schließlich tragen die Silsesquioxan-Substituenten zu einer weiteren Vergrößerung der Silsesquioxansubstituent-tragenden Gruppe bei.

Gemäß einer weiteren Ausführungsform sind die Reste $R^y$ die oben beschriebenen, und bevorzugt lineare $C_1$-$C_{20}$-Alkylengruppen, besonders bevorzugt lineare $C_3$-$C_{10}$-Alkylengruppen.

Der bzw. die Ligand(en) $L_m$ ist vorzugsweise ausgewählt aus der Gruppe, bestehend aus N-heterocyclischem Carben (NHC), Amin, Imin, Phosphin, Stibin, Arsin, Carbonylverbindung, Carboxylverbindung, Nitril, Alkohol, Ether, Thiol oder Thioether. Besonders bevorzugt ist der Ligand L gemäß der Erfindung ein NHC. NHC sind extrem reaktive Intermediate, die sehr schwer zu isolieren sind. Des weiteren zerstören viele Substanzen das NHC durch chemische Interaktion. Es ist daher überraschend, daß es möglich ist, oligomere Silsesquioxaneinheiten mit einem NHC zu verknüpfen.

Besonders bevorzugt ist die Silsesquioxan-substituierte Ligand ein NHC oder ein Salz davon, ausgewählt aus den folgenden Strukturen:

**Salze** **Carbene**

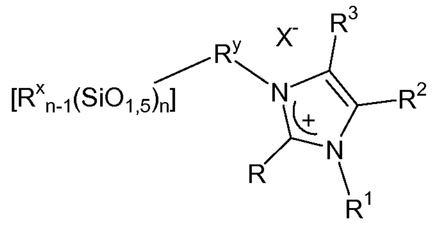

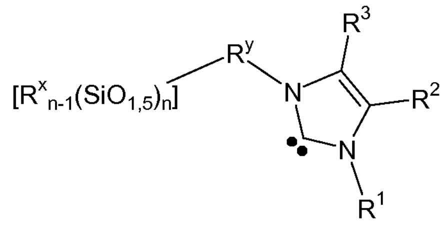

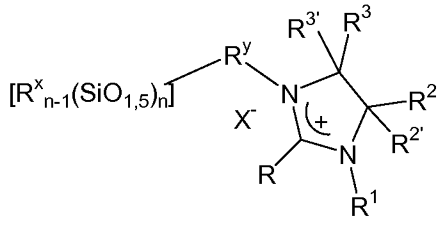

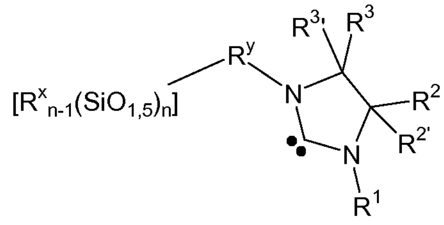

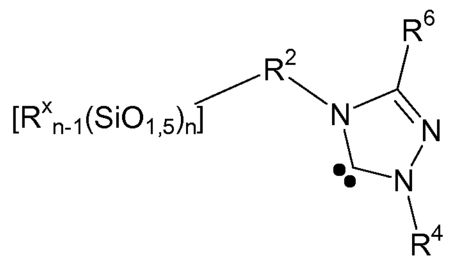

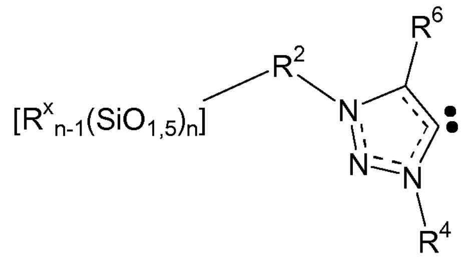

wobei $[R^x_{n-1}(SiO_{1,5})_n]$-$R^y$-, $R^1$, $R^2$, $R^{2'}$, $R^3$, $R^{3'}$ und X wie vorstehend definiert sind.

Wie oben erwähnt, ist vorzugsweise an das NHC eine weitere Silsesquioxaneinheit über eine Alkylenkette, bevorzugt eine $C_1$-$C_{20}$-Alkylenkette, gebunden, so daß ein Carben aus dem NHC-Ligand mit zwei Silsesquioxansubstituenten mit der folgenden Struktur gebildet wird:

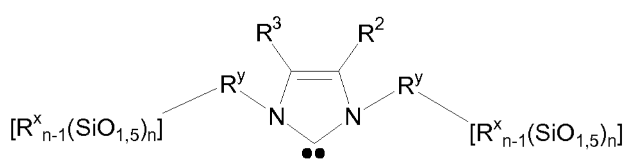

Darüberhinaus kann das Silsesquioxan-verknüpfte NHC über eine Alkylkette an ein weiteres Silsesquioxan-substituiertes NHC gebunden sein, z.B. ein Silsesquioxan-substituiertes Imidazol, so daß eine dimere Struktur gebildet wird, die das folgende Carben ergibt:

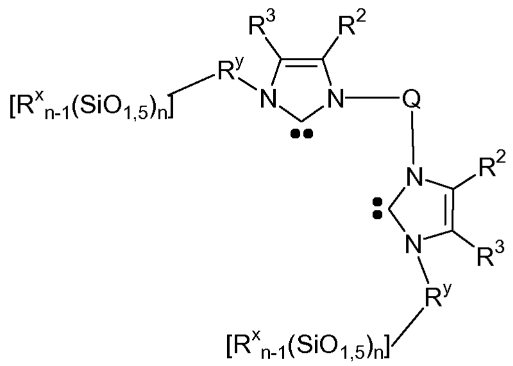

wobei Q eine substituierte oder unsubstituierte, geradkettige oder verzweigte Alkylkette ist mit $Q=-(CH_2)_q-$, wobei q=1, 2, 3, 4, 5, 6, 7, 8, 9, 10, 11, 12, 13, 14, 15, 16, 17, 18, 19 oder 20.

Die Ligandensubstituenten $R^2$ und $R^3$ können weitere Substituenten tragen, wie z.B. die unter den Gruppen (i) und (ii) aufgeführten, beispielsweise Hydroxyl, Amin, Nitril, Thiol, Thioether, Keton, Aldehyd, Ester, Ether, Imin, Nitro, Carbonsäure, Disulfid, Carbonat und Halogen.

Eine weitere bevorzugte Ausführungsform des NHC-Carbens umfasst die folgende Struktur:

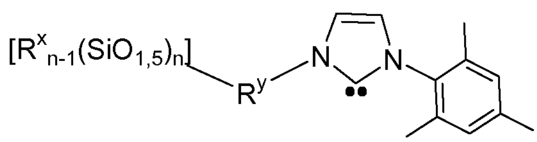

Unsymmetrisch substituierte NHC und deren entsprechenden Salze enthalten bevorzugt eine Alkylketten-verbrückte Silsesquioxaneinheit an einem Stickstoffatom und einen 2,4,6-Trimethylphenyl- (d.h. Mesityl-)Substituenten am anderen N-Atom der Imidazolbaugruppe.

Gemäß einer weiteren bevorzugen Ausführungsform der Erfindung ist der Ligand L ein Phosphin oder ein Salz davon.

Wie vorstehend erwähnt, besitzen Silsesquioxan-substituierte Verbindungen der Erfindung vom Phosphin-Typ (IIa) zur Verwendung als Liganden in Katalysatoren vorzugsweise die folgenden Strukturen:

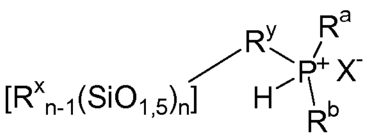

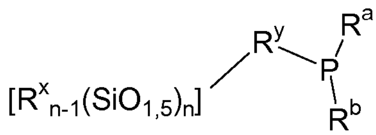

wobei $R^x$, $R^y$, $R^a$, $R^b$ und X wie vorstehend jeweils unter Formel (IIa) definiert sind.

Am meisten bevorzugt sind $R^a$ und $R^b$ 1-Adamantyl.

Im erfindungsgemäßen Liganden kann auch eine Verbindung der Formel (Ia) mit einer Verbindung der Formel (IIa) verknüpft sein. So ergibt sich beispielsweise aus der Verbindung der Formel (IIIb") die folgende beispielhafte Carbenstruktur:

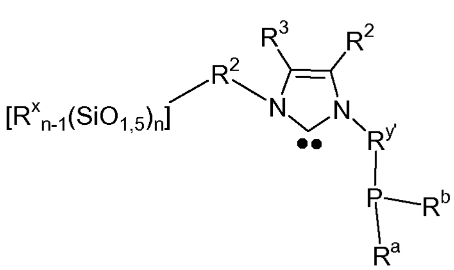

Aufgrund ihrer Größe können Silsesquioxan-Substituierte Verbindungen der Erfindung als Liganden als Nanopartikel-verankerte Liganden angesehen werden. Diese Silsesquioxan-substituierten Nanopartikel können in metallkatalysierten Reaktionen in Verbindung mit der Nanofiltrations-Technologie verwendet werden. Das Silsesquioxan-substituierte Molekül mit einer Größe im Nanometerbereich, an das der Katalysator gebunden ist, erlaubt das spezifische Abfiltrieren des Reaktionsprodukts und anderer Komponenten, wobei der nanoverankterte Katalysator innerhalb der Membransphäre verbleibt.

Mit den genannten erfindungsgemäßen Silsesquioxan-substituierten Verbindungen als Liganden können hochmolekulare Katalysatoren mit einem Gewicht von 1500 bis 3000 erhalten werden, was die Synthese und Abtrennung großer Moleküle mittels Filtration erlaubt.

Darüberhinaus ist die Durchführung von Prozessen mit mehreren Zyklen und von kontinuierlichen Verfahren unter Verwendung der erfindungsgemäßen Verbindungen möglich.

Bevorzugte Beispiele für Übergangsmetallkatalysatoren unter Verwendung der erfindungsgemäßen Verbindungen sind zweizähnige Liganden, die unter Verwendung der Phosphine (IIa), der gemischten Struktur (Ic) bzw. verbrückten Struktur (Ib) und einer Übergangsmetallverbindung erhalten werden, worin Z ein Übergangsmetall-Zentralatom bedeutet wie z. B. Palladium, Ruthenium, Cobalt oder Nickel, und $L_m$ weitere mögliche, ebenfalls an das zentrale Übergangsmetallatom gebundene Liganden bedeutet. Dabei sind auch Strukturen (*) möglich, bei denen die stickstoffhaltige Verbindung mit einem Phosphin über einen Rest $R^y$ verknüpft sind:

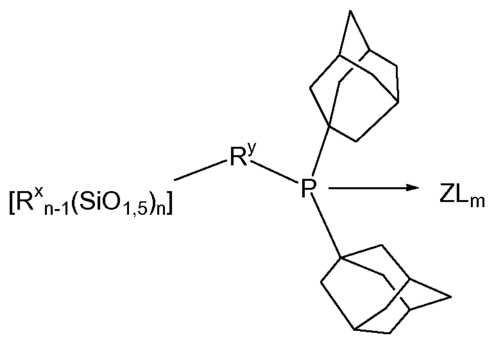

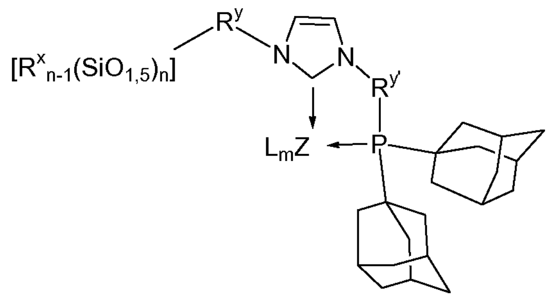

(*)

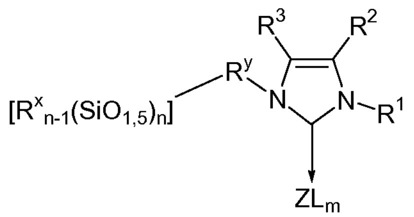

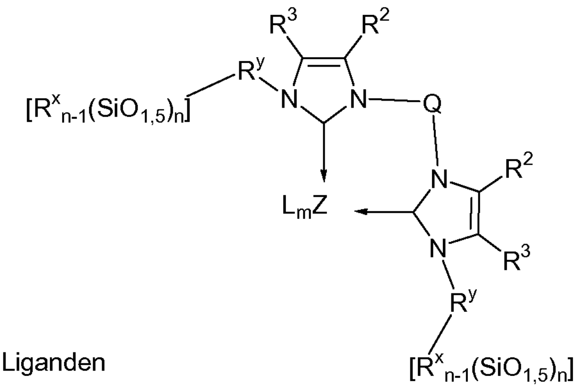

$L_m$ = m weitere Liganden
Z = Zentralatom

Der bzw. die weiteren Ligand(en) $L_m$ können beispielsweise ausgewählt sein aus NHC-Liganden, Amin, Iminen, Phosphinen, Stibinen, Arsinen, Carbonylverbindungen, Carboxylverbindungen, Nitrilen, Alkoholen, Ethern, Thiolen oder Thioethern.

Die entsprechenden Übergangsmetallkomplexe, bevorzugt Palladiumkomplexe können auf zwei Arten erhalten und in Kreuzkupplungsreaktionen verwendet werden:

Einerseits können die Palladiumkomplexe nach Umsetzung z.B. von Phosphonium-oder Imidazoliumsalzen mit Basen umgesetzt werden, gefolgt von Zugabe einer bestimmten Palladiumquelle; die aktive Katalysatorspezies aus der Reaktionsmischung, die beide Katalysatorkomponenten und die Partner der Kreuzkupplungsreaktion enthält, kann jedoch auch *in situ* während der Kreuzkupplungsreaktion erhalten werden, bei welcher eine Base verwendet wird, um z.B. den Palladium-Präkatalysator zu aktivieren, oder um die essentielle und aktive Boronatspezies z.B. in der Suzuki-Miyaura-Reaktion zu erzeugen.

Die symmetrischen Silsesquioxan-substituierten Bis-Imidazoliumsalze können in die entsprechenden bis-NHC-Übergangsmetallkomplexe umgewandelt werden durch Behandlung mit Base und nachfolgender Zugabe einer geeigneten Metallquelle. Als Metall der Wahl für allgemeine industrielle Anwendungen wurde Palladium für die Synthese verschiedener Carben- und Phosphinkomplexe und deren Verwendung in C-C- und C-N-Kupplungsreaktionen eingesetzt.

**Ausführungsbeispiele**

$^{31}P$- und $^{1}H$-NMR-Spektren wurden auf einem Spektrometer vom Typ Bruker DRX 500 (500 MHz) aufgezeichnet. Bei den $^{1}H$-NMR-Spektren sind die chemischen Verschiebungen in ppm relativ zum Standard Tetramethylsilan (0,00 ppm) angegeben bzw. zu den Lösungsmittelpeaks ($CDCl_3$: 7.26 ppm, $CD_2Cl_2$: 5.26 ppm). Die chemischen Verschiebungen der $^{31}P$-Resonanzen wurden relativ zu Phosphorsäure ($H_3PO_4$) als internem Standard (0.00 ppm) bestimmt. Peakmultiplizitäten werden abgekürzt als s: Singlett; d: Dublett, t: Triplett, qr: Quartett; qn: Quintett; sep: Septett; sowie m: Multiplett. Alle Lösungsmittel wurden wie beschafft verwendet. Reagenzien und Lösungsmittel wurden von Aldrich beschafft. Alle Silsesquioxan-Edukte wurden von Hybrid Catalysis beschafft. Di-(1-adamantyl)phosphine ist ein Eigenprodukt der EVONIK-DEGUSSA GmbH.

*Allgemeine Angaben zur Reaktionsführung*

Nach der allgemeinen Vorschrift können Silsesquioxan-substituierte Verbindungen gemäß der vorliegenden Erfindung erhalten werden.

*I. Schmelzen von Silsesquioxan-substituierten Verbindungen*

Ein Silsesquioxan-Derivat der Formel

$$\left[R^{x}_{n-1}\left(SiO_{1,5}\right)_{n}\right] R^{y} - X \quad (IV),$$

wobei $R^x$=Isobutyl (im Folgenden: iBu), und $R^y$ Propylen, Pentylen oder Decylen ist, wird in einem Rundkolben durch Erhitzen im Ölbad auf 130 °C - 150 °C geschmolzen. Sollte keine Schmelze eintreten, so kann diese durch Zugabe von geringen Mengen Toluol bewirkt werden.

*II. Imidazolium-Salze* (insbesondere Produkte der Formel (Ic") und (Id"))

Nach 2 bis 4 Stunden Reaktionszeit mit jeweiligen substituierten Imidazolderivaten bei einer bevorzugten Temperatur von 140 °C wird die Schmelze durch Zugabe von Toluol in flüssigem Zustand gehalten und direkt über Kieselgel filtriert (Lösungsmittel: Gemische aus Hexan-Essigsäureethylester sowie Methanol). Die Produkte werden als farblose bis schwachgelbe Feststoffe isoliert.

*III. Phosphonium-Salze* (insbesondere Produkte der Formel (IIa))

Die Reaktion wird bevorzugt in Toluol (bevorzugte Temperatur 110°C) oder Xylol (bevorzugte Temperatur: 130°C) im Ölbad ausgeführt

Die Vollständigkeit der Umsetzung mit den entsprechenden Phosphinen wird in den meisten Fällen durch Festwerden der Schmelze sichtbar. Bei Silsesquioxan-Verbindungen mit kurzen Alkylenketten (z. B. $R^y$ = Propylen) kann sich die Reaktionsdauer bis zur vollständige Umsetzung um ein Vielfaches verlängern. Eine typische Umsetzungszeit beträgt 2 bis 4 Stunden. Anschließend wird der Feststoff in einem Dichlormethan-Methanol-Gemisch aufgenommen und über Kieselgel filtriert (Lösungsmittel: Gemische aus Hexan-Essigsäureethylester sowie Methanol). Die Produkte sind reinweiße Feststoffe, wobei die lodsalze nach längerer Lagerung gelblich werden.

*IV. Imidazol-Verbindungen*

Imidazol wird - in Bezug auf die Silsesquioxan-Verbindung -in einem 20-40-fachen Überschuß vorgelegt und durch Erhitzen geschmolzen. Zu dieser Schmelze wird die Silsesquioxan-Verbindung (IV) portionsweise zugegeben. Die Schmelze wird zwei Stunden bei 140 °C gerührt und anschließend in Wasser gegossen. Die Extraktion des Produktes wird mit Diethylether realisiert. Anschließend wird der Feststoff in einem Essigsäureethylester aufgenommen und über Kieselgel filtriert (Lösungsmittel: Essigsäureethylester). Die Produkte sind reinweiße Feststoffe.

**Beispiel 1**

**Silsesquioxan-substituierte Imidazol-Verbindungen der allgemeinen Formel (Ia)**

4 g Imidazol (59 mmol) werden im Ölbad bei 130 °C geschmolzen und portionsweise mit 2 g (2 mmol) $[(iBu)_7(SiO_{1,5})_8]$-$(CH_2)_5$-I (X=Iod) in fester Form versetzt. Die Schmelze wird weitere 2 Stunden bei dieser Temperatur gerührt. Am Ende wird die Schmelze in Wasser gegossen. Das Produkt wird mit Diethylether extrahiert und die organische Phase viermal mit Wasser gewaschen. Es werden 1.6 g (84 %) eines weißen Feststoffes isoliert, das sauber ist und keiner weiteren Reinigung bedarf.

Gemäß dieser Vorschrift wurden folgende Silsesquioxan-substituierte Imidazol-Verbindungen der Formel (Ia) hergestellt, wobei j=0, $R^0$ abwesend ist, $R^x$ Isobutyl (iBu) ist, und $R=R^2=R^3$=H sind:

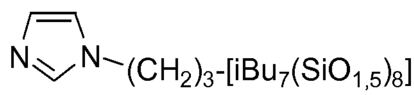

(Ia-19)

$^1$H-NMR (500 MHz, $CDCl_3$): δ 0.60 (m, 16 H, Si-$CH_2$- und 7x $R^x$-Si-$CH_2$-), 0.95, (m, 42 H 7x $(CH_3)_2$CH), 1.85 (m, 9 H, 7x $R^x$-*CH*, $CH_2$), 3.91 (t, J= 7.1 Hz, 2 H, $CH_2$), 6.87, 7.06, 7.44 (3 m, 1 H jew., Imidazol-H). Ausbeute: 57%.

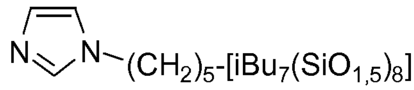

(Ia-35)

$^1$H-NMR (500 MHz, $CDCl_3$): δ 0.60 (m, 16 H, Si-$CH_2$- und 7x $R^x$-Si-$CH_2$-), 0.95, (m, 42 H 7x $(CH_3)_2$CH), 1.34 (m, 2 H, $CH_2$), 1.44 (m, 2 H, $CH_2$),1.77 (m, 2 H, $CH_2$), 1.85 (sep, J = 6.7 Hz, 7x $R^x$-*CH*), 3.91 (t, J= 7.3 Hz, 2 H, $CH_2$), 6.89, 7.05, 7.46 (3 m, jew. 1 H, Imidazol-H). Ausbeute: 87%.

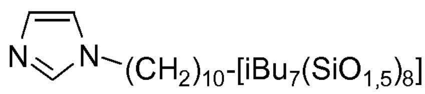

(Ia-75)

$^1$H-NMR (500 MHz, $CDCl_3$): δ 0.60 (m, 16 H, Si-$CH_2$- und 7x $R^x$-Si-$CH_2$-), 0.96, (m, 42 H 7x $(CH_3)_2$CH), 1.25-1.30 (m, 12 H, $CH_2$), 1.38 (m, 2 H, $CH_2$),1.77 (m, 2 H, $CH_2$), 1.85 (sep, J = 6.7 Hz, 7x $R^x$-*CH*), 3.91 (t, J= 7.2 Hz, 2 H, $CH_2$), 6.89, 7.05, 7.46 (3 m, jew. 1 H, Imidazol-H). Ausbeute: 61 %.

**Beispiel 2**

**Silsesquioxan-substituierte Imidazoliumverbindungen der Formel (Id)**

5 g (5 mmol) $[(iBu)_7(SiO_{1,5})_8]$-$(CH_2)_3$-I (X=Iod) werden zusammen mit 1 ml Toluol durch Erhitzen im Ölbad auf 140 °C geschmolzen. Zu dieser Schmelze werden 860 mg (4.6 mmol) 1-Mesitylimidazol portionsweise hinzugefügt und die Mischung für weitere 2 h bei 140 °C Bad-Temperatur gerührt. Nach Zugabe von 5 ml Toluol wird die Schmelze auf Raumtemperatur abgekühlt und das Reaktionsgemisch über Kieselgel filtriert. Dabei wird ein Lösungsmittelgemisch von zunächst Hexan:Essigsäurethylester 10:1, dann Methanol verwendet und so 4.6 g (78 %) des Produktes isoliert.

Gemäß dieser Vorschrift wurden folgende Silsesquioxan-substituierte ImidazolDerivate der allgemeinen Formel (Id) hergestellt:

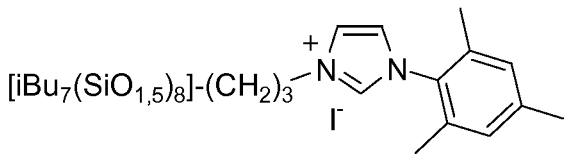

$^{1}$H-NMR (500 MHz, $CDCl_3$): δ 0.61, (m, 16 H, Si-$CH_2$- und 7x $R^x$-Si-$CH_2$-), 0.96 (m, 7x $(CH_3)_2$CH), 1.85 (m, 7 H, 7x Si-$CH_2$-*CH*-), 2.07 (m, 2 H, Si-$CH_2$-$CH_2$-$CH_2$-), 2.11 (s, 6 H, 2 *o*-$CH_3$-Ph), 2.35 (s, 3 H, *p*-$CH_3$-Ph), 4.76 (bt, 2 H, -$CH_2$-$N^{Im}$), 7.03 (s, 2 H, 2 *m*-Ph-*H*), 7.18 (s, 1 H, 5-$H^{Im}$), 7.51 (s, 1 H, 4-$H^{Im}$), 10.18 (s, 1 H, 2-$H^{Im}$). Ausbeute: 78%.

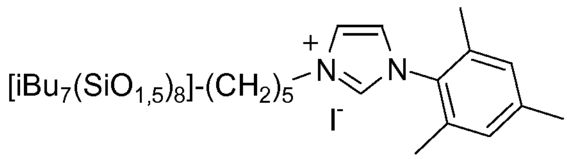

$^{1}$H-NMR (500 MHz, $CDCl_3$): δ 0.58-0.61, (m, 16 H, Si-$CH_2$- und 7x $R^x$-Si-$CH_2$-), 0.96, (m, 42 H 7x $(CH_3)_2$CH), 1.43 (m, 4 H, 2 -*CH2*-), 1.85 (m, 7 H, 7x *CH*), 1.95 (m, 2 H, - *CH*2-), 2.08 (s, 6 H, 2 *o*-$CH_3$-Ph), 2.35 (s, 3 H, 2 *m*-Ph-*H*), 4.66 (t, J= 7.0 Hz, 2 H, - $CH_2$-N), 7.01 (s, 2 H, 2 *m*-Ph-*H*), 6.48 (s, 1 H, 5-$H^{Im}$), 7.26 (m, 1 H, 5-$H^{Im}$), 7.70 (m, 1 H, 4-$H^{Im}$) 10.06 (s, 1 H, 2-$H^{Im}$). Ausbeute: 67%.

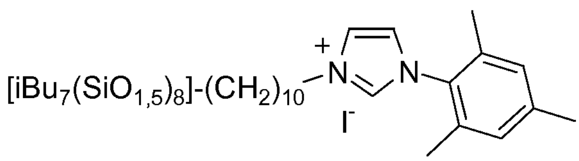

$^{1}$H-NMR (500 MHz, $CDCl_3$): δ 0.57-0.61, (m, 16 H, Si-$CH_2$- und 7x $R^x$-Si-$CH_2$-), 0.96, (m, 42 H 7x $(CH_3)_2$CH), 1.25 (m, 8 H, 4 -*CH2*-), 1,37 (m, 6 H, 3 -*CH2*-), 1.86 (sep, J = 6.7 Hz, 7 H, 7x $R^x$-*CH*), 1.99 (m, 2 H, -*CH2-),* 2.08 (s, 6 H, 2 *o*-$CH_3$-Ph), 2.35 (s, 3 H, 2 *m*-Ph-*H*), 4.66 (t, J= 7.0 Hz, 2 H, -$CH_2$-N), 7.00 (s, 2 H, 2 *m*-Ph-*H*), 6.48 (s, 1 H, 5-$H^{Im}$), 7.19 (m, 1 H, 5-$H^{Im}$), 7.72 (m, 1 H, 4-$H^{Im}$)10.50 (s, 1 H, 2-$H^{Im}$). Ausbeute: 92%.

**Beispiel 3**

**Zweifach Silsesquioxan-substituierte Verbindungen der Formel (Id')**

12 g (11,8 mmol) Verbindung (IV) der Formel $[(iBu)_7(SiO_{1,5})_8]$-$(CH_2)_5$-I (X=Iod) werden bei 140 °C geschmolzen. Zu dieser Schmelze werden 410 mg (6.2 mmol) festes Imidazol zugegeben. Nach 3 h bei 140 °C ist die Reaktion vollständig. Die Schmelze wird auf Raumtemperatur abgekühlt und in 300 Diethylether aufgenommen. Durch dreimaliges Waschen mit je 50 ml Wasser wird das überschüssige Imidazol abgetrennt. Anschließend wird das Lösungsmittel unter vermindertem Druck entfernt. Das Rohprodukt (5.2 g, 81 % Ausbeute) ist sauber, bedarf keiner weiteren Reinigung und besitzt die Formel

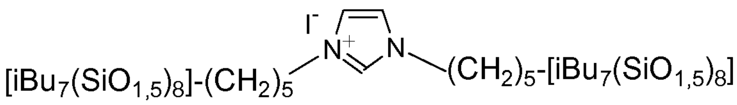

$^{1}$H-NMR (500 MHz, $CDCl_3$): $^{1}$H-NMR (500 MHz, $CDCl_3$): δ 0.60 (m, 32 H, 2x Si-$CH_2$-und 14x $R^x$-Si-$CH_2$-), 0.95, (m, 84 H, 14x $(CH_3)_2$CH), 1.31-1.45 (m, 8 H, 4x $CH_2$), 1.75-1.93 (m, 18 H, 2 $CH_2$ und 14x *CH*), 3.91 (t, J= 7.2 Hz, 2 H, $CH_2$), 4.33 (t, J= 7.5 Hz, 2 H, 2 $CH_2$), 6.89, 7.05, 10.57 (3 m, jew. 1 H, Imidazol-H). Ausbeute: 82%.

**Beispiel 4**

**Verknüpfte Silesequioxan-substituierte Verbindungen der Formel (Id''')**

(1) 2 g (2.1 mmol) der Verbindung mit der Formel (Ia-35)

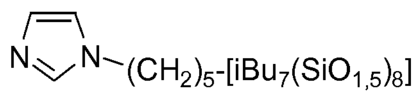

wurden bei 140 °C unter Zuhilfenahme von max. 1 ml Toluol geschmolzen. Zu dieser Schmelze wurden 215 mg (1.05 mmol) 1,3-Dibrompropan hinzugefügt. Nach Bildung einer gelartigen Masse wurde das Toluol unter vermindertem Druck entfernt. Das so erhaltene Rohprodukt (2 g, 78 % Ausbeute) ist sauber und bedarf keiner weiteren Aufreinigung.

Gemäß dieser Vorschrift wurden folgende Verbindungen der Formel (Ib) hergestellt:

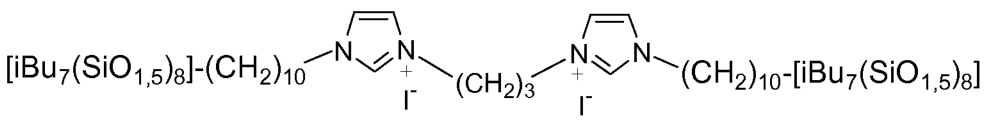

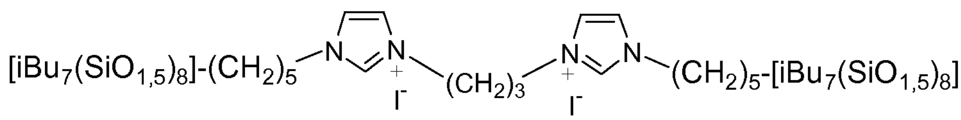

$^1$H-NMR (500 MHz, $CDCl_3$): δ 0.61 (m, 16 H, -Si-$CH_2$, 7x $R^x$-Si-*$CH_2$*-), 0.96, (m, 42 H 7x (*$CH_3$*)$_2$CH), 1.38-1.45 (m, 8 H, 4 $CH_2$), 1.82-1.89 (m, 18 H, 2x $CH_2$, 14x $R^x$-*CH*), 2.93 (m, 2 H, verbrückendes $CH_2$, d.h. Gruppe Q), 4.13 (m, 4 H, $CH_2$), 4.21 (m, 4 H, 2x $CH_2$), 4.77 (m, 4 H, 2 verbrückendes $CH_2$), 7.14, 8.23, 10.25 (3 m, jew. 1 H, Imidazol-H). Ausbeute: 81%.

(2) 1.63 g (1.71 mmol, 1.5 eq.) der Verbindung (Ia') der Formel

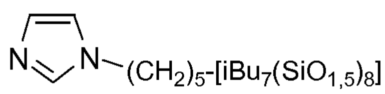

wurden bei 130 °C unter Zuhilfenahme von 3 ml Toluol als schmelzpunkterniedrigende inerte Verbindung geschmolzen. Zu dieser Schmelze wurden mit einer Pipette 227 mg (1.21 mmol) 1,2-Dibromethan gegeben, das in 0,5 ml Toluol gelöst worden war. Das Lösungsmittel und der Überschuß an 1,2-Dibromethan wurden im Vakuum entfernt und 1,51 g (Ausbeute: 77%) weißer Feststoff des reinen Produkts mit der Formel (Ib) erhalten:

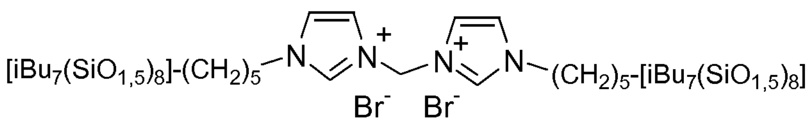

$^1$H-NMR (500 MHz, $CDCl_3$): δ 0.61 (m, 16 H, -Si-$CH_2$, 7x $R^x$-Si-*$CH_2$*-), 0.96, (m, 42 H 7x (*$CH_3$*)$_2$CH), 1.32-1.47 (m, 4 H, 2 $CH_2$), 1.78-1.91 (m, 9 H, $CH_2$, 7x $R^x$-*CH*), 3.96 (m, 2 H, $CH_2$), 4.14 (m, 2 H, verbrückendes $CH_2$, d.h. Gruppe Q), 6.93, 7.69, 10.81 (3 m, jew. 1 H, Imidazol-H).

**Beispiel 5**

**Silsesquioxan-substituierte phosphorhaltige Verbindungen der Formel (IIa')**

8.6 g (8.7 mmol) $[(iBu)_7(SiO_{1,5})_8]$-$(CH_2)_3$-I (X=Iod) werden mit Hilfe von 2 ml Toluol durch Erhitzen im Ölbad auf 150 °C geschmolzen. Zu dieser Schmelze werden 2.4 g (7.9 mmol) Di-1-adamantylphosphin portionsweise hinzugefügt und die Mischung wird für weitere 2 h bei 150 °C Bad-Temperatur gerührt. Die Schmelze wird bereits innerhalb der ersten Stunde fest. Der Feststoff wird auf Raumtemperatur abgekühlt in einem Lösungsmittelgemisch aus Dichlormethan und Methanol aufgenommen. Anschließend wird das Rohprodukt über Kieselgel filtriert. Dabei wird ein Lösungsmittelgemisch von zunächst Hexan:Essigsäurethylester 10:1, dann Methanol verwendet und so 7.5 g (73 %) eines reinweißen Feststoffes isoliert mit der Formel:

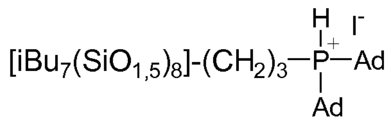

wobei Ad für 1-Adamantyl steht. $^{31}$P-NMR (162 MHz, $CDCl_3$): $\delta$= 19.08 ppm. Ausbeute: 73%.

Gemäß dieser Vorschrift wurden folgende Phosphonium-Salze der Formel (IIa) hergestellt (wobei Ad für 1-Adamantyl, und Mes für Mesityl steht):

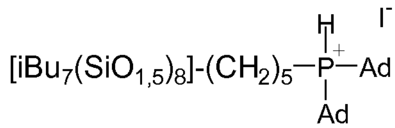

$^{31}$P-NMR (162 MHz, $CDCl_3$): $\delta$= 22.93 ppm. Ausbeute: 92%.

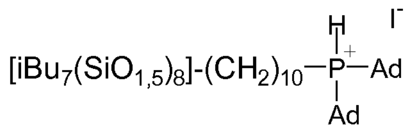

$^{31}$P-NMR (162 MHz, $CDCl_3$): $\delta$= 21.21 ppm. Ausbeute: 49%.

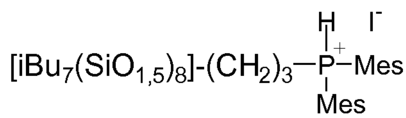

wobei Ad für 1-Adamantyl steht Mes für 2,4,6-Trimethylphenyl (Mesityl) steht.

**Beispiel 6**

**Einfach substituiertes Derivat der Formel (Ib'''')**

8.59 g (46 mmol) Dibromethan wurden auf 120°C erhitzt und 2.18 g (2.3 mmol) der Verbindung der Formel (Ia')

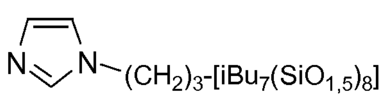

portionsweise unter Rühren gegeben. Nach 2h Reaktionszeit wurde die rohe Reaktionsmischung gemäß dem allgemeinen Verfahren aufgereinigt und es wurden 1,09 g (42 % Ausbeute) eines weißen Feststoffs der Formel (Ib'''') isoliert:

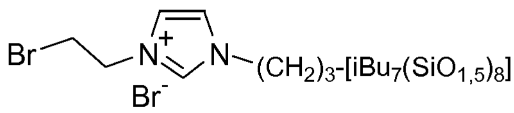

$^1$H-NMR (500 MHz, $CDCl_3$): δ 0.59 (m, 16 H,Si-$CH_2$- und 7x $R^x$-Si-$CH_2$-),0.95, (m, 42 H 7x $(CH_3)_2$CH), 1.35, 1.44 (2 m, jew. 2 H, 2 $CH_2$), 1.85 (m, 9 H, -$CH_2$-, 7x $(CH_3)_2CH$), 3.90 (t, J= 5.9 Hz, 2 H, -$CH_2$-), 4.21 (m, 2 H, -$CH_2$-), 4.71 (t, J= 5.8 Hz, 2 H, -$CH_2$-), 7.66, 7.87, 9.58 ( 3 m, jew. 1 H, Imdazol-H).

In gleicher Weise wurde erhalten:

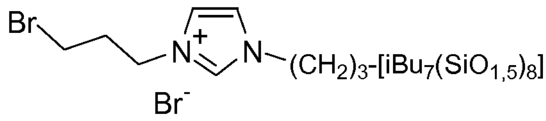

$^1$H-NMR (500 MHz, $CDCl_3$): δ 0.61 (m, 16 H, -Si-$CH_2$, 7x $R^x$-Si-$CH_2$-), 0.95, (m, 42 H 7x $(CH_3)_2$CH), 1.85 (sep, J = 6.7 Hz, 7x $R^x$-$CH$ 2.04 (m, 2 H, $CH_2$, 7x $R^x$-$CH$ ), 2.63 (m, 2 H, $CH_2$),3.54 (t, J= 6.0 Hz, 2 H, $CH_2$), 4.36 (t, J= 7.1 Hz, 2 H, $CH_2$), 7.17, 7.46, 10.88 (3 m, jew. 1 H, Imidazol-H). Ausbeute: 74%.

**Beispiel 7**

**Anwendung der erfindungsgemäßen Silsesquioxan-substituierten Verbindungen in katalytischen Reaktionen**

Die erfindungsgemäßen Verbindungen der Formel $[iBu_7(SiO_{1,5})_8]$-$(CH_2)_5$-$P(Ad)_2$ sowie $[iBu_7(SiO_{1,5})_8]$-$(CH_2)_{10}$-$P(Ad)_2$, wobei "Ad" für 1-Adamantyl steht, wurden in einer Heck-Mizoroki-Reaktion als C-C-Kupplungsreaktion gestestet (Schema 5).

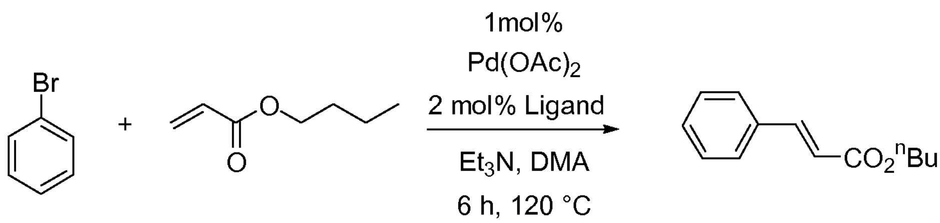


| Ligand | Ausbeute [%] |
|---|---|
| $PPh_3$*) | 78 |
| cataCXiumA*) | 98 |
| L1 | 96 |
| L2 | 90 |

*) als Vergleichsbeispiele

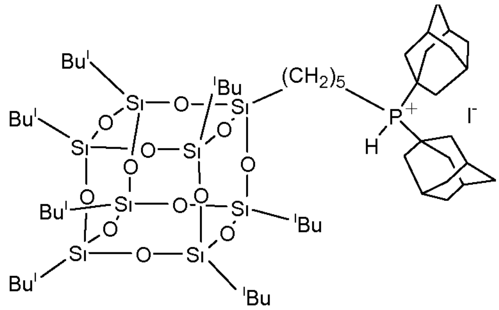

(L1)

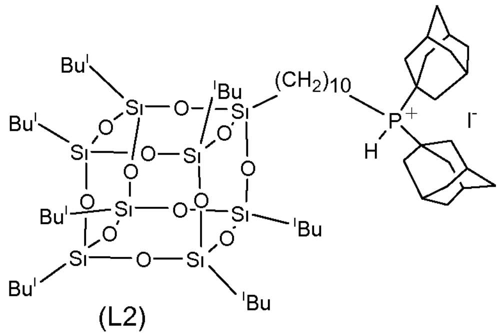

(L2)

PPh$_3$

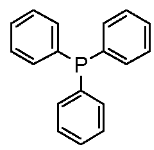

cataCXiumA

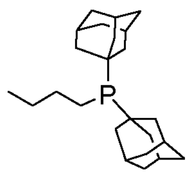

Die obigen Ergebnisse zeigen, daß die erfindungsgemäßen Silsesquioxan-substituierten Verbindungen im Vergleich zu leistungsfähigen bekannten Liganden wie cataCXiumA® hervorragend für Kreuzkupplungsreaktionen geeignet sind, und vergleichbar hohe Ausbeuten liefern.

## Beispiel 8

### Vergleich der erfindungsgemäßen Liganden mit herkömmlichen Liganden

Einige der beschriebenen erfindungsgemäßen silesquioxan-substituierten Verbindungen wurden als NHC-Liganden vom Imidazoltyp wurden zu verschiedenartigen Palladiumkatalysatoren umgesetzt. Von diesen zeigte der μ-Iodoverbrückte dimere Katalysator in Kombination mit dem bis-Adamantyl-Liganden der erfindungsgemäßen Silsesquioxan-substituierten Verbindungen die höchste Aktivität in einer C-N-Kupplungsreaktion (hier Buchwald-Hartwig-Reaktion) in Kombination und wurde mit weiteren leistungsfähigen bekannten Phosphinliganden verglichen (Schema 6):

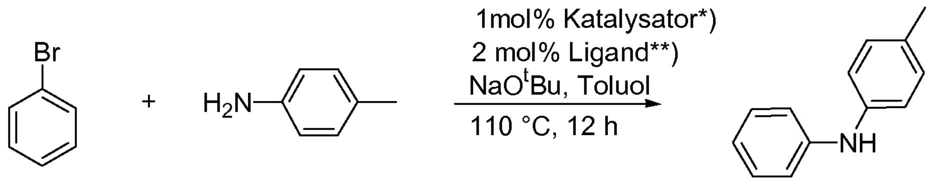


| Ligand | Ausbeute [%] |
|---|---|
| $PPh_3$***) | 49 |
| cataCXiumA***) | 99 |
| L mit $R^y$=$-(CH_2)_3-$ **) | 96 |
| L mit $R^y$=$-(CH_2)_5-$ **) | 98 |
| L mit $R^y$=$-(CH_2)_{10}-$ **) | 89 |

***) zum Vergleich
*)Katalysator: **)Ligand (L):

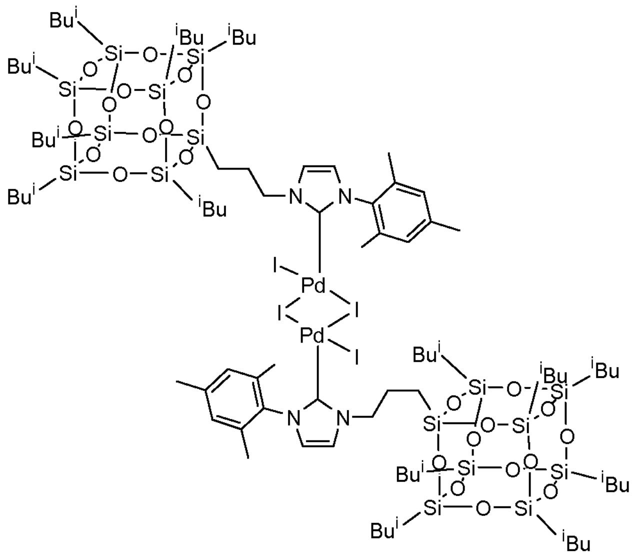

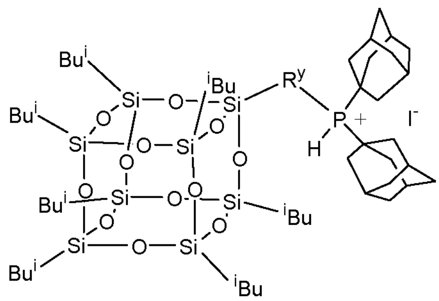

Schema 6.

Die höchsten katalytischen Aktivitäten wurden gefunden, wenn die erfindungsgemäßen Verbindungen, die strukturanalog zu cataCXiumA®-Liganden sind (vgl. Ligand L in Schema 6) mit den erfindungsgemäßen Katalysatoren verwendet wurden.

Zusammenfassend ist festzustellen, daß die Silsesquioxan-substituierten Verbindungen der vorliegenden Erfindung als Liganden in Katalysatorsystemen insbesondere auch im Zusammenhang mit der Membranfiltrationstechnologie alle Anforderungen erfüllen, die an die industrielle Anwendung in Kupplungsreaktionen gestellt werden.

## Patentansprüche

**1.** Silsesquioxan-substituierte Verbindung, ausgewählt aus:

a) einer stickstoffhaltigen Verbindung der allgemeinen Formel (Ia), (Ib) oder (Ib')

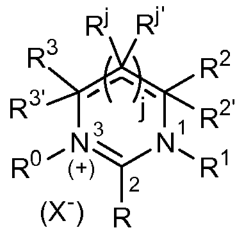

(Ia)

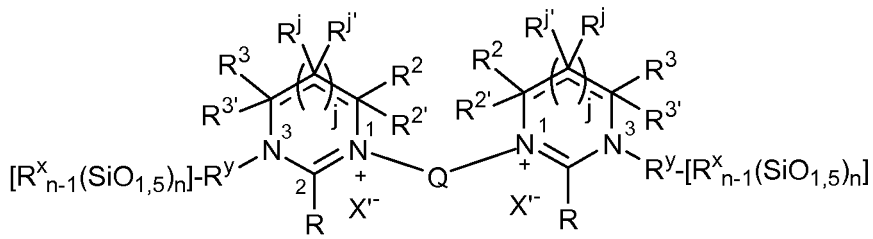

(Ib)

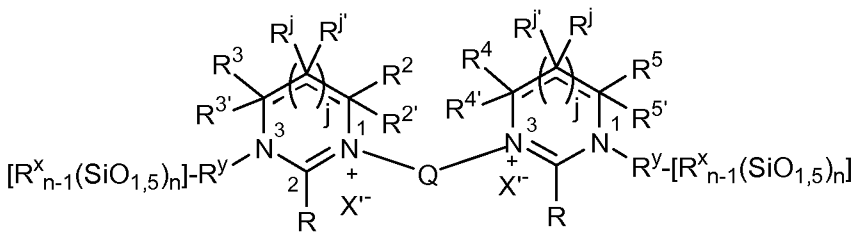

(Ib')

und deren Salze,

wobei j gleich 0, 1 oder 2 ist, $R^0$ abwesend ist und ein freies Elektronenpaar an $N^3$ vorliegt oder $R^0$ gleich $\left[R^x_{n-1}\left(SiO_{1,5}\right)_n\right]$-$R^y$- ist und $N^3$ eine positive Ladung trägt,

wobei n gleich 4, 6, 8, 10, 12, 14, 16 oder 18 ist und $X^-$ ein Anion ist;

Q eine verbrückende Gruppe ist, ausgewählt aus $-(CH_2)_q-$ mit q = 1, 2, 3, 4, 5, 6, 7, 8, 9, 10, 11, 12, 13, 14, 15, 16, 17, 18, 19 oder 20, oder Arylen;

= 0, 1 oder 2 C-C-Doppelbindungen im Ring bedeutet;

$R^1$= H oder $\left[R^x_{n-1}\left(SiO_{1,5}\right)_n\right]$-$R^y$- ist, oder ausgewählt ist aus der folgenden Gruppe (i), und unsubstituiert oder substituiert ist mit Substituenten, ausgewählt aus der folgenden Gruppe (i) oder (ii);

$R^x$ ausgewählt ist aus der folgenden Gruppe (i), und unsubstituiert oder substituiert ist mit Substituenten, ausgewählt aus der folgenden Gruppe (i);

$R^y$ ausgewählt ist aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_1$-$C_{20}$-Alkylen-$C_6$-$C_{18}$-Arylen oder $C_6$-$C_{18}$-Arylen-$C_1$-$C_{20}$-Alkylen; nicht anelliertem oder anelliertem $C_3$-$C_{13}$-Heteroarylen, und unsubstituiert oder substituiert ist mit Substituenten, ausgewählt aus der folgenden Gruppe (i) oder (ii);

$R^2$, $R^{2'}$, $R^3$, $R^{3'}$, $R^4$, $R^{4'}$, $R^5$, $R^{5'}$, $R^j$ und $R^{j'}$ ausgewählt sind aus Wasserstoff und den folgenden Gruppen (i) oder (ii); und unsubstituiert oder substituiert sind mit Substituenten, ausgewählt aus der folgenden Gruppe (i) oder (ii);

(i) geradkettigem oder verzweigtem $C_1$-$C_{20}$-Alkyl- oder $C_1$-$C_{20}$-Alkoxy; substituiertem oder unsubstituiertem mono-, bi- oder tricyclischem $C_3$-$C_{10}$-Cycloalkyl oder $C_3$-$C_{10}$-Cycloalkyloxy;
geradkettigem oder verzweigtem $C_1$-$C_{20}$-Thioalkyl;
geradkettigem oder verzweigtem $C_2$-$C_{20}$-Alkenyl- oder $C_2$-$C_{20}$-Alkenyloxy;
Aryl oder Aryloxy, wobei Aryl oder Aryloxy einen mono- oder polycyclischen aromatischen, nicht anellierten oder anellierten Kohlenwasserstoffrest mit 6 bis 18 Kohlenstoffatomen darstellt;
Aralkyl oder Alkylaryl, wobei Aryl und Alkyl wie oben definiert sind;
Heterocyclus, wobei der Heterocyclus einen gesättigten oder teilweise gesättigten 3- bis 7-gliedrigen nichtaromatischen Ring aus Kohlenstoffatomen und 1 bis 4 unabhängig aus N, O und S ausgewählten Heterotaomen darstellt, wobei N oder S oxidiert oder nicht oxidiert sein können; und wobei der nichtaromatische Ring an einen oder mehrere monocyclische(n) Carbocyclus-, Heterocyclus-, Aryl- oder Heteroarylring(e) anelliert sein kann;
Heteroaryl, wobei das Heteroaryl einen aromatischen Ring mit 3 bis 13 Kohlenstoffatomen und 1 bis 4 Heteroatomen darstellt, unabhängig ausgewählt aus N, O, und S, in einem oder mehreren heterocyclischen Ring(en), wobei ein monocyclischer Heteroarylring an einen oder mehrere carbocyclische(n), heterocyclische(n) Ring, Aryl- oder Heteroarylring(e) anelliert sein kann;
(ii) Hydroxyl, Halogen, Amin, mono- oder dialkyliertem Amin, Imin, Silyl, Alkoxysilyl, Silyloxy, Amid, Carbonsäure, Ester, Nitril, Keton, Sulfoxid, Phosphin, Alkenylether, Thioether, Ether, cyclischer Ether, Polyether, Arylthio, Carbodiimid, Sulfoxid, Sulfon, Sulfonat, Sulfonamid, Oxythiophosphoryl, Phosphinoxid, und Borono;

wobei jeweils zwei Substituenten $R^2$, $R^{2'}$, $R^3$, $R^{3'}$, $R^4$, $R^{4'}$, $R^5$, $R^{5'}$, $R^j$ und $R^{j'}$ miteinander an den Stammring der allgemeinen Formel (Ia) oder die Stammringe der Formel (Ib) annelierte, unsubstituierte oder substituierte Ringe bilden können;
R ausgewählt ist aus der Gruppe, umfassend H, $CF_3$, $CCl_3$, $CBr_3$, $C_6F_5$, Triflat, Tosylat, Mesylat, oder Sulfinat;

mit der Maßgabe, daß $R^0$ oder $R^1$ oder beide $\left[R^x_{n-1}\left(SiO_{1,5}\right)_n\right]$-$R^y$- sind; oder

b) einem Phosphin der allgemeinen Formel (IIa)

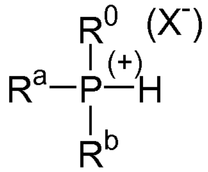

(IIa)

und dessen Salze, wobei
$R^0$ abwesend sein kann und ein freies Elektronenpaar am Phosphoratom vorliegt oder $R^0$ $\left[R^x_{n-1}\left(SiO_{1,5}\right)_n\right]$-$R^y$- ist und das Phosphoratom eine positive Ladung trägt und ein Salz mit dem Anion $X^-$ vorliegt, wobei $\left[R^x_{n-1}\left(SiO_{1,5}\right)_n\right]$-$R^y$- wie in a) definiert ist;

$R^a$ und $R^b$ wie $R^1$ in a) definiert sind;

mit der Maßgabe, daß einer, zwei oder drei der Reste $R^0$, $R^a$ und $R^b$ die Formel $\left[R^x_{n-1}\left(SiO_{1,5}\right)_n\right]$-$R^y$- besitzt bzw. besitzen; oder
c) einer Verbindung der Formel (IIIa) oder (IIIb)

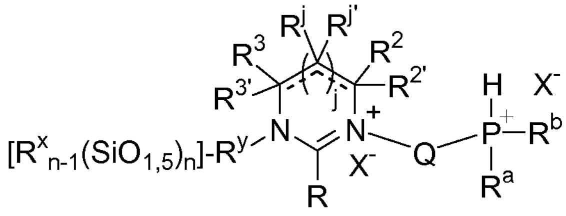

(IIIa)

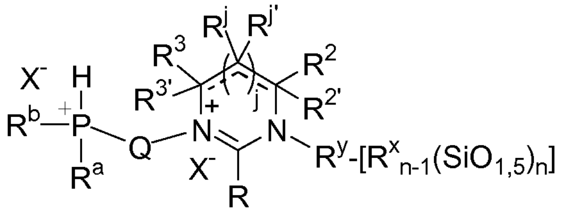

(IIIb)

wobei $R^a$ und $R^b$ wie in b) definiert sind,

und j, Q, $R^2$, $R^{2'}$, $R^3$, $R^{3'}$, $R^j$, $R^{j'}$ und $\left[R^x_{n-1}\left(SiO_{1,5}\right)_n\right]$-$R^y$- wie in a) definiert sind.

**2.** Silsesquioxan-substituierte Verbindung gemäß Anspruch 1 mit der allgemeinen Formel (Ic) oder (Id)

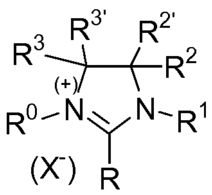

(Ic)

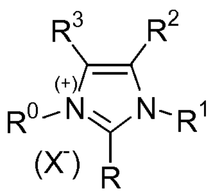

(Id)

und deren Salze, wobei R, $R^0$, $R^1$, $R^2$, $R^{2'}$, $R^3$ und $R^{3'}$ wie in Anspruch 1 definiert sind.

**3.** Silsesquioxan-substituierte Verbindung gemäß Anspruch 1 oder 2 und deren Salze, wobei die Verbindung die allgemeine Formel (Ia), (Ic) oder (Id) besitzt, und wobei

$R^0=\left[R^x_{n-1}\left(SiO_{1,5}\right)_n\right]$-$R^y$- ist; oder

$R^0$ abwesend ist und $R^1=\left[R^x_{n-1}\left(SiO_{1,5}\right)_n\right]$-$R^y$- ist; oder $R^0=R^1=\left[R^x_{n-1}\left(SiO_{1,5}\right)_n\right]$-$R^y$- ist;

wobei $\left[R^x_{n-1}\left(SiO_{1,5}\right)_n\right]$-$R^y$- wie in Anspruch 1 definiert ist.

**4.** Silsesquioxan-substituierte Verbindung gemäß Anspruch 1 mit der allgemeinen Formel (Ib), wobei die Verbindung ausgewählt ist aus den folgenden Formeln (Ib") und (Ib"'):

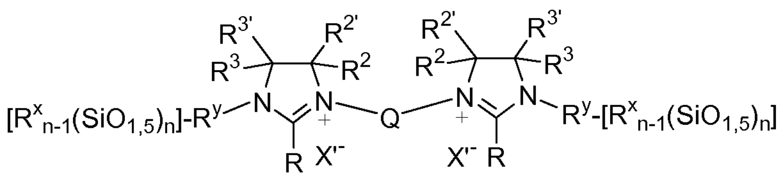

oder

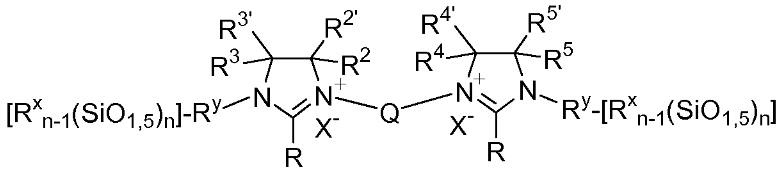

(Ib")

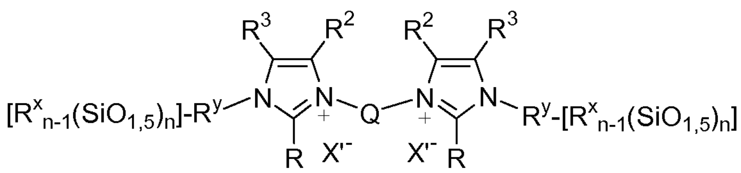

oder

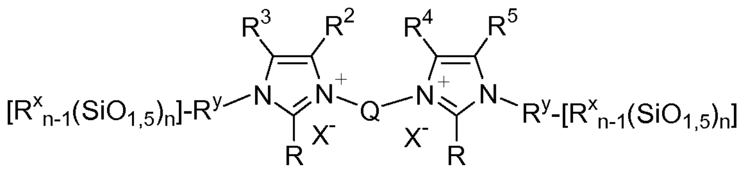

(Ib"')

wobei n, X, $R^2$, $R^{2'}$, $R^3$, $R^{3'}$, $R^4$, $R^{4'}$, $R^5$, $R^{5''}$ und $\left[R^x_{n-1}\left(SiO_{1,5}\right)_n\right]$-$R^y$- jeweils gleich oder verschieden sein können, und wie in Anspruch 1 definiert sind, und Q wie in Anspruch 1 definiert ist.

**5.** Silsesquioxan-substituierte Verbindung gemäß Anspruch 1 mit der allgemeinen Formel (IIIa) oder (IIIb), wobei die Verbindung ausgewählt ist aus den folgenden Formeln (IIIa'), (IIIb'), (IIIa") und (IIIb"):

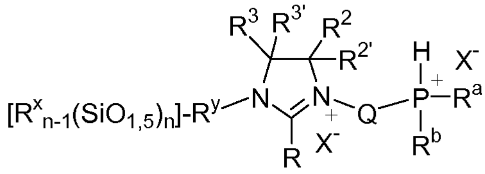

(IIIa')

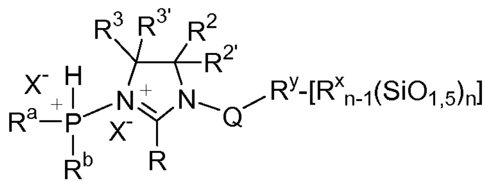

(IIIb')

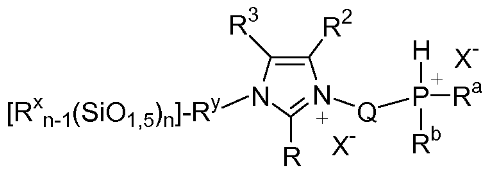

(IIIa")

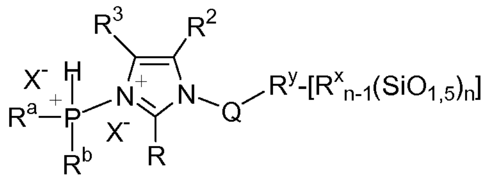

(IIIb")

wobei R, $R^a$, $R^b$, $R^2$, $R^{2'}$, $R^3$, $R^{3'}$, $\left[R^x_{n-1}\left(SiO_{1,5}\right)_n\right]$-$R^y$- und Q wie in Anspruch 1 definiert sind, und $X^-$ ein Anion ist.

**6.** Silsesquioxan-substituierte Verbindung und deren Salze gemäß einem der Ansprüche 1 bis 5, wobei $\left[R^x_{n-1}\left(SiO_{1,5}\right)_n\right]$ die folgende Struktur besitzt, ausgewählt aus der Gruppe, bestehend aus

a) n=6: $\left[R^x_5\left(SiO_{1,5}\right)_6\right]-$

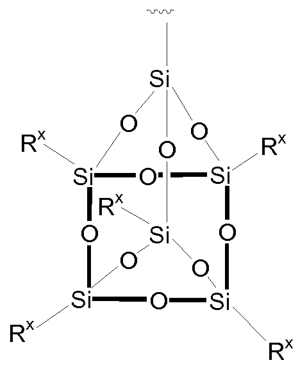

b) n=8: $\left[R_7^x\left(SiO_{1,5}\right)_8\right]-$

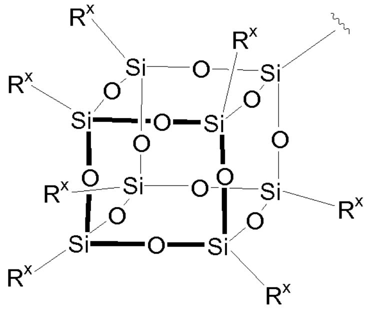

c) n=10: $\left[R_9^x\left(SiO_{1,5}\right)_{10}\right]-$

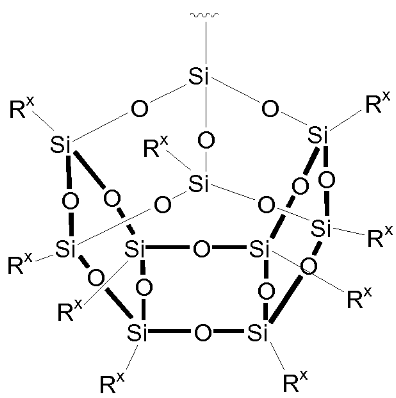

wobei $R^x$ wie in Anspruch 1 definiert ist, und ~~~ die Bindung zur Gruppe $R^y$ bedeutet.

**7.** Silsesquioxan-substituierte Verbindung und deren Salze gemäß einem der Ansprüche 1 bis 6, wobei $R^x$ ausgewählt ist aus der Gruppe, bestehend aus $C_1$-$C_{20}$-Alkyl, $C_1$-$C_{20}$-Alkenyl, $C_3$-$C_{10}$-Cycloalkyl, $C_6$-$C_{18}$-Aryl oder $C_3$-$C_{13}$-Heteroaryl, wobei die vorgenannten Gruppen durch Substituenten der Gruppe (i) gemäß Anspruch 1 substituiert sein können.

**8.** Silsesquioxan-substituierte Verbindung und deren Salze gemäß einem der Ansprüche 1 bis 7, wobei $R^y$ ausgewählt ist aus $C_1$-$C_{20}$-Alkylen, $C_3$-$C_{10}$-Cycloalkylen, $C_1$-$C_{20}$-Alkylenoxy, $C_2$-$C_{20}$-Alkenylen, $C_2$-$C_{20}$-Alkenylenoxy, $C_2$-$C_{20}$-Alkylenthio, $C_2$-$C_{20}$-Alkylencarbonyloxy, nicht anelliertem oder anelliertem $C_6$-$C_{18}$-Arylen, $C_3$-$C_{13}$-Heteroarylen, wobei $R^y$ unsubstituiert oder sustituiert ist mit einem oder mehreren, ausgewählt aus der Gruppe, bestehend aus Heteroatom, Aryl, Ether, Ester, Polyether, Polythioether, Amino oder einer arylverbrücktem Alkylen.

**9.** Silsesquioxan-substituierte Verbindung und deren Salze gemäß einem der Ansprüche 1 bis 8 und deren Salze,

wobei $R^x$ geradkettige oder verzweigte $C_1$-$C_{20}$-Alkylreste, und $R^y$ geradkettige oder verzweigte $C_1$-$C_{20}$-Alkylenreste darstellt, wobei die vorgenannten Reste unsubstituiert oder substituiert sind durch Substituenten der Gruppe (i) oder (ii).

**10.** Silsesquioxan-substituierte Verbindung und deren Salze gemäß einem der Ansprüche 1 bis 9, wobei $R^1$ $C_1$-$C_{20}$-Alkyl, Aryl oder Heteroaryl ist, wobei die Reste unsubstituiert oder substituiert sind durch Substituenten der Gruppe (i) oder (ii).

**11.** Silsesquioxan-substituierte Verbindung und deren Salze gemäß einem der Ansprüche 1 bis 10, wobei $R^a$ und $R^b$ unabhängig voneinander ausgewählt sind aus der Gruppe, bestehend aus $C_1$-$C_{20}$-Alkyl oder $C_1$-$C_{20}$-Alkoxy, 1-Adamantyl, 2-Adamantyl, $C_3$-$C_{12}$-Cycloalkyl oder $C_3$-$C_{12}$-Cycloalkyloxy, substituiertem oder unsubstituiertem Aryl oder Aryloxy, wobei die vorgenannten Reste unsubstituiert oder substituiert sind durch Substituenten der Gruppe (i) oder (ii).

**12.** Silsesquioxan-substituierte Verbindung und deren Salze gemäß Anspruch 11, wobei $R^a$ 1-Adamantyl ist und $R^b$ $C_1$-$C_{18}$-Alkyl ist, oder
wobei $R^a$ 2-Adamantyl ist und $R^b$ $C_1$-$C_{18}$-Alkyl ist, oder
wobei $R^a$ $C_1$-$C_{18}$-Alkyl ist und $R^b$ ist 1-Adamantyl, oder
wobei $R^a$ $C_1$-$C_{18}$-Alkyl ist und $R^b$ 2-Adamantyl ist;
wobei Adamantyl in 1- oder 2-Stellung an das Phosphoratom gebunden sein kann gemäß den folgenden Formeln:

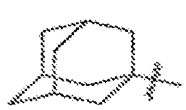 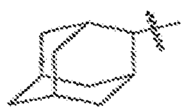

.

wobei $C_1$-$C_{18}$-Alkyl geradkettig oder verzweigt sein kann, und wobei $R^a$ und $R^b$ unsubstituiert oder substituiert sein können mit $C_1$- bis $C_8$-Alkyl, O-Alkyl($C_1$-$C_8$), OH, OCO-Alkyl($C_1$-$C_8$), O-Phenyl, Phenyl, Aryl, Fluor, $NO_2$, SiAlkyl$(C_1$-$C_8)_3$, CN, COOH, CHO, $SO_3H$ $NH_2$, NH-Alkyl-($C_1$-$C_8$), N-Akyl$(C_1$-$C_8)_2$, P(Alkyl$(C_1$-$C_8))_2$, P$(Aryl)_2$, $SO_2$-Alkyl($C_1$-$C_6$), SO-Alkyl($C_1$-$C_6$), $CF_3$, NHCO-Alkyl($C_1$-$C_4$), COO-Alkyl($C_1$-$C_8$), $CONH_2$, CO-Alkyl($C_1$-$C_8$), NHCHO, NHCOO-Alkyl($C_1$-$C_4$), CO-Phenyl, COO-Phenyl, CH=CH-$CO_2$-Alkyl($C_1$-$C_8$), CH=CHCOOH, PO$(Phenyl)_2$, PO(Alkyl$(C_1$-$C_4))_2$, $PO_3H_2$, PO(OAlkyl$(C_1$-$C_6))_2$, $SO_3$(Alkyl($C_1$-$C_4$)), wobei Aryl für einen Aromaten mit 5 bis 14 Ringkohlenstoffatomen steht, wobei ein oder mehrere Ringkohlenstoffatome durch Stickstoff-, Sauerstoff- und/oder Schwefelatome ersetzt sein können, so daß ein Heteroaromat mit 1 bis 13 Ringkohlenstoffatomen vorliegt.

**13.** Silsesquioxan-substituierte Verbindung und deren Salze gemäß einem der Ansprüche 1 bis 12, ausgewählt aus der Gruppe, bestehend aus Formel (Ia-1) bis (Ia-320) gemäß Tabelle 1, wobei $R^x$ wie in Anspruch 1 definiert ist.

**14.** Silsesquioxan-substituierte Verbindung und deren Salze gemäß Anspruch 13, wobei $R^x$ ausgewählt ist aus der Gruppe, bestehend aus unsubstituiertem oder substituiertem, geradkettigem oder verzweigtem $C_1$-$C_{20}$-Alkyl, $C_1$-$C_{20}$-Alkenyl, $C_3$-$C_{10}$-Cycloalkyl, $C_6$-$C_{18}$-Aryl oder $C_3$-$C_{13}$-Heteroaryl.

**15.** Verfahren zur Herstellung einer Silsesquioxan-substituierten Verbindung gemäß einem der Ansprüche 1 bis 14, umfassend

(A) die chemische Umsetzung einer Verbindung, ausgewählt aus

a) einer stickstoffhaltigen Verbindung der Formel (Ia')

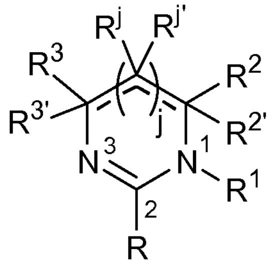

(Ia')

wobei R, $R^1$, $R^2$, $R^2$, $R^3$, $R^{3'}$, $R^j$, $R^{j'}$, und j die in Anspruch 1 beschriebenen Definitionen besitzen, oder
b) einem Phosphin der Formel (IIa')

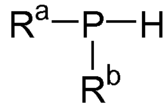

(IIa')

wobei $R^a$ und $R^b$ die in Anspruch 1 beschriebene Definition besitzen; mit einem Silsesquioxan der Formel (IV)

$$\left[R^{x}_{n-1}\left(SiO_{1,5}\right)_{n}\right]\text{-}R^{y}\text{-}X \text{ (IV)},$$

jeweils als Reinsubstanz in der Schmelze; wobei X eine Abgangsgruppe ist und $\left[R^{x}_{n-1}\left(SiO_{1,5}\right)_{n}\right]\text{-}R^{y}\text{-}$ wie in Anspruch 1 definiert ist;

(B) ggf. Reinigung des erhaltenen Reaktionsprodukts.

**16.** Verfahren gemäß Anspruch 15, wobei das Silsesquioxan (IV) und die stickstoffhaltige Verbindung (Ia') oder das Phosphin (IIa') miteinander, gegebenenfalls unter Rühren, bis zur Schmelze erhitzt und in der Schmelze umgesetzt werden.

**17.** Verfahren gemäß Anspruch 15 oder 16, wobei diejenige Reaktionskomponente, ausgewählt aus dem Silsesquioxan (IV) und der stickstoffhaltigen Verbindung (Ia') oder dem Phosphin (IIa') mit dem relativ niedrigeren Schmelzpunkt bis zur Schmelze erhitzt wird und die andere Reaktionskomponente in fester oder flüssiger (geschmolzener) Form, gegebenenfalls unter Rühren, zugegeben wird und die beiden Reaktionskomponenten in der Schmelze umgesetzt werden.

**18.** Verfahren gemäß einem der Ansprüche 15 bis 17, wobei die Schmelztemperatur bzw. Reaktionstemperatur in einem Bereich von 70°C bis 190°C liegt.

**19.** Verfahren gemäß einem der Ansprüche 15 bis 18, wobei das Silsesquioxan (IV) durch Erhitzen geschmolzen wird und die stickstoffhaltige Verbindung (Ia') bzw. das Phosphin (IIa') in fester Form unter Rühren zugegeben wird und die Reaktionskomponenten in der Schmelze bis zur Vollständigkeit der Umsetzung gehalten werden.

**20.** Verfahren gemäß einem der Ansprüche 15 bis 19, wobei das stickstoffhaltige Derivat (Ia') im 10-100-fachen molaren Überschuss in Bezug auf das einzusetzende Silsesquioxan (IV) als Schmelze bei 70°C bis 190°C vorgelegt wird, und anschließend das Silsesquioxan (IV) in fester Form portionsweise unter Rühren zugegeben wird.

**21.** Verfahren gemäß einem der Ansprüche 15 bis 19, wobei das Silsesquioxan (IV)

a) in einer Menge von 0,9 bis 1,1 Moläquivalenten in Bezug auf die Menge der stickstoffhaltigen Verbindung (Ia')

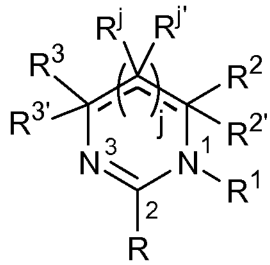

(Ia')

eingesetzt wird, wobei ein Produkt der Formel (Ic') oder (Id') gebildet wird

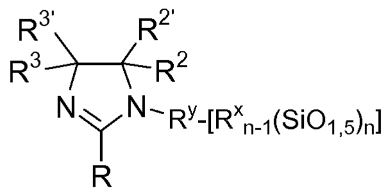

(Ic')

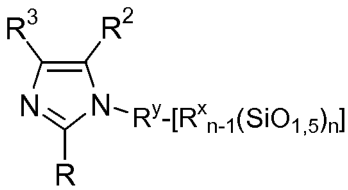

(Id')

wobei $[R^x_{n-1}(SiO_{1,5})_n]$-$R^y$-, $R^2$, $R^{2'}$, $R^3$ und $R^{3'}$ die in Anspruch 1 beschriebenen Definitionen besitzen, und $R^1$ in Formel (Ia') H ist;
oder wobei ein Produkt der Formel (Ic") oder (Id") gebildet wird

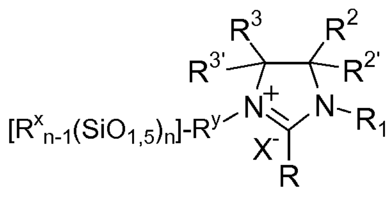

(Ic'')

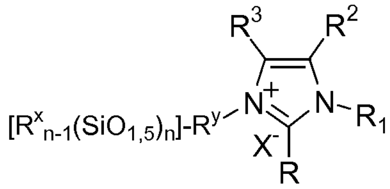

(Id")

wobei $\left[R^{x}_{n-1}\left(SiO_{1,5}\right)_{n}\right]$, R, $R^1$, $R^2$, $R^{2'}$, $R^3$ und $R^{3'}$ die in Anspruch 1 beschriebenen Definitionen besitzen, wobei $R^1$ in Formel (Ia'), (Ic") und (Id") nicht H ist;

b) in einer Menge von 1,9 bis 2,1 Moläquivalenten in Bezug auf die Menge der stickstoffhaltigen Verbindung (Ia') eingesetzt wird, wobei ein Produkt der Formel (Ic"') oder (Id"') gebildet wird

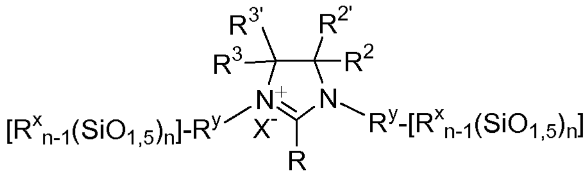

(Ic"')

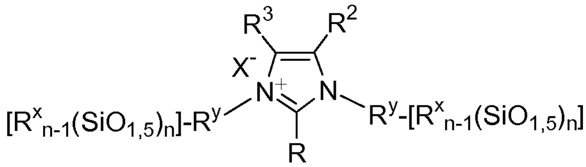

(Id"')

wobei $\left[R^{x}_{n-1}\left(SiO_{1,5}\right)_{n}\right]$ -$R^y$-, R, $R^1$, $R^2$, $R^{2'}$, $R^3$ und $R^{3'}$ die in Anspruch 1 beschriebenen Definitionen besitzen, wobei $R^1$ in Formel (Ia') H ist;

c) in einer Menge von 0,9 bis 1,1 Moläquivalenten in Bezug auf die Menge des Phosphins (IIa') eingesetzt wird, wobei ein Produkt der Formel (IIa) gebildet wird, wobei $R^0$ die Formel $\left[R^{x}_{n-1}\left(SiO_{1,5}\right)_{n}\right]$-$R^y$- besitzt:

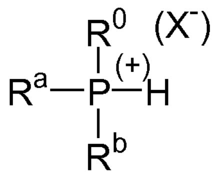

(IIa)

wobei $\left[R^{x}_{n-1}\left(SiO_{1,5}\right)_{n}\right]$ -$R^y$-, $R^a$, $R^b$ und $R^0$ in Formel (IIa') die in Anspruch 1 beschriebenen Definitionen

besitzen;

d) in einer Menge von 1,9 bis 2,1 Moläquivalenten in Bezug auf die Menge des Phosphins (IIa') eingesetzt wird,

und ein Produkt der Formel (IIa) gebildet wird, wobei $R^0$ und $R^a$ oder $R^b$ die Formel $\left[R^x_{n-1}\left(SiO_{1,5}\right)_n\right]$-$R^y$- besitzen:

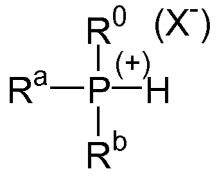

(IIa)

wobei $\left[R^x_{n-1}\left(SiO_{1,5}\right)_n\right]$-$R^y$-, , $R^a$, $R^b$ und $R^0$ in Formel (IIa') die in Anspruch 1 beschriebenen Definitionen besitzen.

**22.** Verfahren gemäß einem der Ansprüche 15 bis 21, wobei der Schmelzpunkt mindestens eines Reaktanden, ausgewählt aus dem Silsesquioxan (IV) und der stickstoffhaltigen Verbindung (Ia') oder dem Phosphin (IIa') durch Zugabe einer inerten Verbindung in einer schmelzpunkterniedrigenden Menge abgesenkt wird, wobei die schmelzpunkterniedrigende inerte Verbindung eine organische Verbindung ist, die einen Siedepunkt besitzt, der über der Schmelztemperatur des mindestens einen Reaktanden liegt und chemisch inert gegenüber den Reaktanden ist.

**23.** Verfahren gemäß Anspruch 22, wobei die schmelzpunkterniedrigende inerte Verbindung ausgewählt ist aus der Gruppe umfassend Kohlenwasserstoffe und Ether.

**24.** Verfahren gemäß Anspruch 22, wobei die schmelzpunkterniedrigende inerte Verbindung ausgewählt aus der Gruppe, bestehend aus Toluol, o-, m- oder p-Xylol, n-Heptan, 2-Methylhexan, 3-Methylhexan, 2,2-Dimethylpentan, 2,3-Dimethylpentan, 2,4-Dimethylpentan, 3,3-Dimethylpentan, 3,4-Dimethylpentan, 2,2,3-Dimethylbutan und Dibutylether.

**25.** Verfahren gemäß einem der Ansprüche 15 bis 24,
wobei eine stickstoffhaltige Verbindung (Ia) der Formel (Ic) oder (Id), wobei $R^0$ abwesend ist:

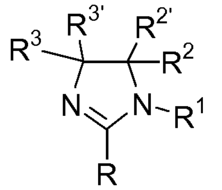

(Ic)

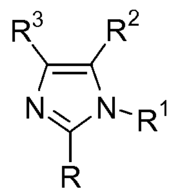

(Id)

mit dem Silsesquioxan der Formel (IV) umgesetzt wird,

$$\left[R^{x}_{n-1}\left(SiO_{1,5}\right)_{n}\right]\text{-}R^{y}\text{-}X \text{ (IV)}$$

wobei $R^1$ H ist und n, $R^x$, $R^y$, $R^2$, $R^{2'}$, $R^3$ und $R^{3'}$ wie in Anspruch 1 definiert sind und X eine Abgangsgruppe ist, und ein im Verhältnis zur Verbindung der Formel (IV) 10-100-facher Überschuß an Verbindung (Ic) oder (Id) als Schmelze bei 70-190°C vorgelegt wird und portionsweise mit dem Silsesquioxan der Formel (IV) versetzt wird, wodurch eine Silsesquioxan-substituierte Verbindung der folgenden Formel (Ic') oder (Id') hergestellt wird:

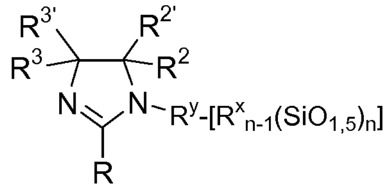

(Ic')

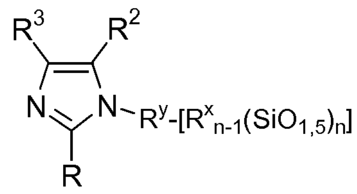

(Id')

**26.** Verfahren gemäß Anspruch 25, wobei ein 20-40-facher Überschuß an Verbindung (Ic) oder (Id) eingesetzt wird.

**27.** Verfahren gemäß einem der Ansprüche 15 bis 24,
wobei eine stickstoffhaltige Verbindung (la) der Formel (Ic) oder (Id), wobei $R^0$ abwesend ist:

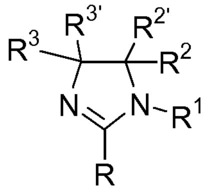

(Ic)

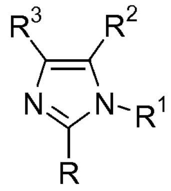

(Id)

mit dem Silsesquioxan der Formel (IV) umgesetzt wird,

$$\left[R^{x}_{n-1}\left(SiO_{1,5}\right)_{n}\right]\text{-}R^{y}\text{-}X \text{ (IV)}$$

wobei $R^1$, $R^x$, $R^y$, $R^2$, $R^{2'}$, $R^3$ und $R^{3'}$ wie in Anspruch 1 definiert sind, $R^1$ nicht H ist, und wobei das Silsesquioxan der Formel (IV) als Schmelze bei 70-190°C vorgelegt wird und portionsweise mit 0,9-1,1 Moläquivalenten Verbindung (Ic) oder (Id) versetzt wird,
wodurch eine Silsesquioxan-substituierte Verbindung der Formel (Ic") oder (Id") hergestellt wird:

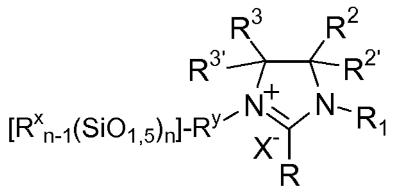

(Ic")

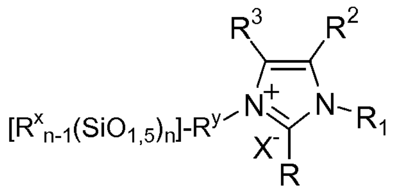

(Id")

**28.** Verfahren gemäß Anspruch 15,
wobei ein Phosphin der Formel (IIa')

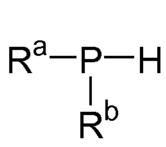

(IIa')

bei 70°C-190°C geschmolzen wird, und zu der Schmelze 0,9-1,1 Moläquivalente des Silsesquioxans (IV) gegeben werden,
wobei $R^a$ und $R^b$ wie in Anspruch 1 definiert sind,
wodurch eine Verbindung der Formel (IIa) hergestellt wird

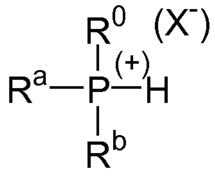

(IIa)

wobei $R^0$ die Formel $\left[R^x_{n-1}\left(SiO_{1,5}\right)_n\right]$-$R^y$- besitzt.

**29.** Verfahren gemäß einem der Ansprüche 15 bis 25, des Weiteren umfassend

(C) die chemische Umsetzung in der Schmelze des in Schritt (A) bzw. (B) erhaltenen Produkts der Formel (Ia')

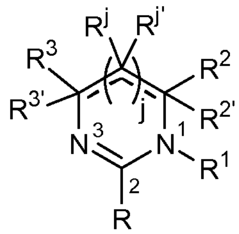

(Ia')

wobei $R^1$=H und R, $R^x$, $R^y$, $R^2$, $R^{2'}$, $R^3$, $R^{3'}$, $R^j$, $R^{j'}$, n und j die in Anspruch 1 beschriebenen Definitionen besitzen,

mit der Maßgabe, daß $R^1 = \left[R^x_{n-1}\left(SiO_{1,5}\right)_n\right]$-$R^y$- ist,

mit einer Verbindung der Formel X'-Q-X', wobei Q=-$(CH_2)$q- und q= 1, 2, 3, 4, 5, 6, 7, 8, 9, 10, 11, 12, 13, 14, 15, 16, 17, 18, 19 oder 20; und X' eine Abgangsgruppe bezeichnet,
wobei ein Produkt mit der Formel (Ib) hergestellt wird:

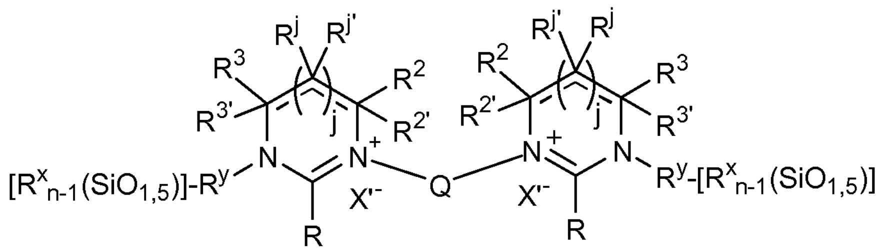

(Ib) .

**30.** Verfahren gemäß Anspruch 29,
wobei in (C) 1,9-2,1 Moläquivalente einer stickstoffhaltigen Verbindung (Ia'), ausgewählt aus den Formeln (Ic') und (Id')

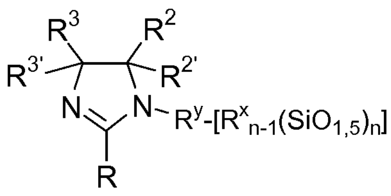

(Ic')

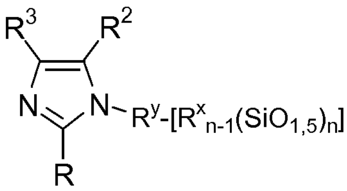

(Id')

bei 70°C-190°C durch Zugabe einer schmelzpunkterniedrigenden inerten Verbindung geschmolzen werden, und in der Schmelze mit 0,9-1,1 Moläquivalenten der Verbindung X'-Q-X' umgesetzt werden, und die schmelzpunkterniedrigende inerte Verbindung unter vermindertem Druck entfernt wird,
wobei Q= $-(CH_2)q-$, wobei q =1, 2, 3, 4, 5, 6, 7, 8, 9, 10, 11, 12, 13, 14, 15, 16, 17, 18, 19 oder 20 ist und X' eine Abgangsgruppe bezeichnet,
wodurch eine Silsesquioxan-substituierte Verbindung der Formel (Ib") oder (Ib"') hergestellt wird:

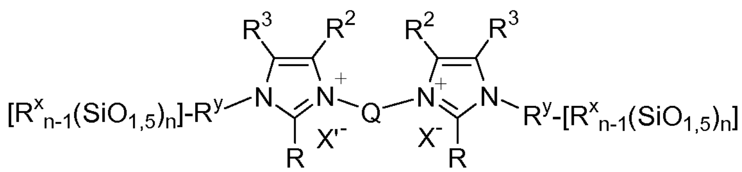

(Ib")

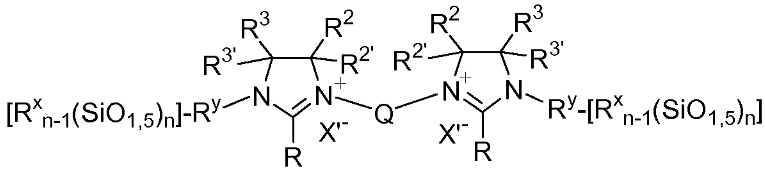

(Ib"')

und wobei $R^x$, $R^y$, $R^2$, $R^{2'}$, $R^3$ und $R^{3'}$ die in Anspruch 1 beschriebenen Definitionen besitzen

**31.** Verfahren zur Herstellung einer Silsesquioxan-substituierten Verbindung gemäß Anspruch 1, 4 oder 5, wobei eine Verbindung der Formel (Ia'),

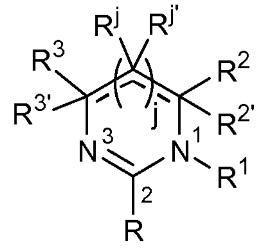

(Ia')

wobei $R^1 = \left[R^x_{n-1}(SiO_{1,5})_n\right]\text{-}R^y\text{-}$ und $R^x$, $R^y$, $R^2$, $R^{2'}$, $R^3$, $R^{3'}$, $R^j$, $R^{j'}$, n und j die in Anspruch 1 beschriebenen Definitionen besitzen,
mit einer Verbindung der Formel X'-Q-X' umgesetzt wird, wobei $Q=-(CH_2)_q-$ und wobei q= 1, 2, 3, 4, 5, 6, 7, 8, 9, 10, 11, 12, 13, 14, 15, 16, 17, 18, 19 oder 20, und wobei X' eine Abgangsgruppe bezeichnet,
gefolgt von einem Schritt der Umsetzung der erhaltenen Produkts mit der Verbindung der Formel (IIa") oder (IIa"')

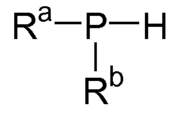

(IIa')

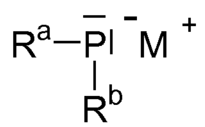

(IIa")

wobei $R^a$ und $R^b$ wie in Anspruch 1 definiert sind, und M ein Metallkation ist, wobei eine Verbindung der Formel (IIIa) oder (IIIb) hergestellt wird:

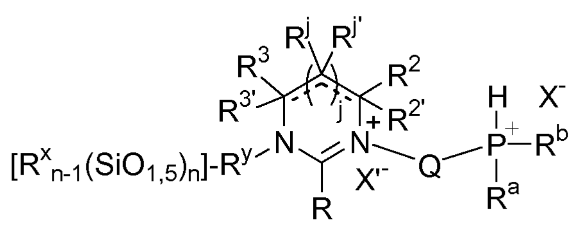

(IIIa)

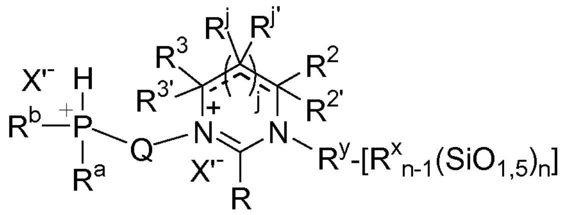

(IIIb) .

**32.** Verfahren gemäß Anspruch 31, umfassend die Umsetzung einer Verbindung der Formel (Ic') oder (Id')

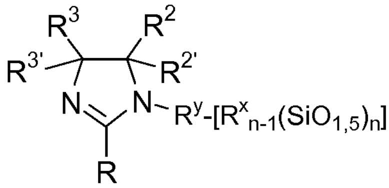

(Ic')

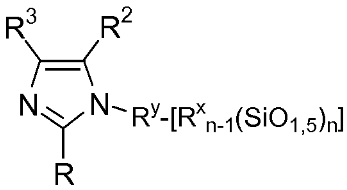

(Id')

wobei $R^x$, n, $R^y$, R, $R^2$, $R^{2'}$, $R^3$, $R^{3'}$ und X wie in Anspruch 1 definiert sind, mit einer Verbindung der Formel X'-$(CH_2)_q$-X', wobei X' eine Abgangsgruppe ist und Q= -$(CH_2)_q$-, wobei q= 1, 2, 3, 4, 5, 6, 7, 8, 9, 10, 11, 12, 13, 14, 15, 16, 17, 18, 19 oder 20, gefolgt von Umsetzung des erhaltenen Produkts mit der Verbindung der Formel (IIa") gemäß Anspruch 31, wobei eine Verbindung der Formel (IIIa") bzw. (IIIb") erhalten wird:

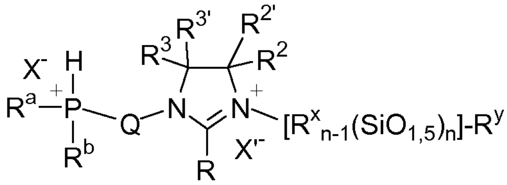

(IIIa")

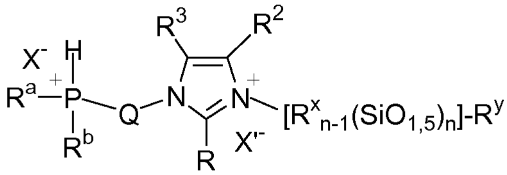

(IIIb")

**33.** Verfahren gemäß einem der Ansprüche 29 bis 31, wobei in (C) anstelle von 0,9-1,1 Moläquivalenten im Bezug auf die stickstoffhaltige Verbindung ein molarer Überschuß an Verbindung X'-Q-X' eingesetzt wird, und ein Zwischenprodukt der allgemeinen Formel (Ib'''') gebildet wird

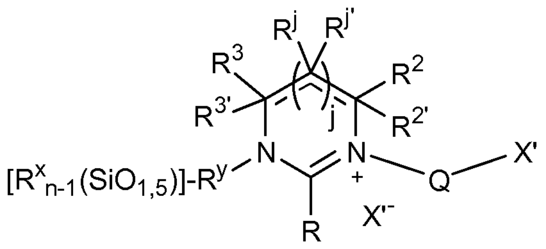

(Ib'''')

das anschließend (D) mit einer Verbindung der Formel (Ia') oder (Ia")

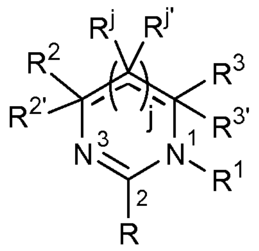

(Ia')

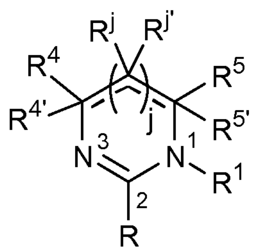

(Ia")

wobei $R^1 = \left[R^{x}_{n-1}\left(SiO_{1,5}\right)_n\right]$-$R^y$- ist, umgesetzt wird, wobei in Formeln (Ib'''') und (Ia') $\left[R^{x}_{n-1}\left(SiO_{1,5}\right)_n\right]$-$R^y$-,, R, $R^2$, $R^{2'}$, $R^3$, $R^{3'}$, $R^j$, $R^{j'}$ und j jeweils gleich oder verschieden sein können und wie in (1) definiert sind, Q, $R^4$, $R^{4'}$, $R^5$, $R^{5'}$, X und X' wie in (1) definiert sind;
wobei in (D) ein Produkt der Formel (Ib) bei Umsetzung mit einer Verbindung der Formel (Ia')) oder ein Produkt der Formel (Ib') bei Umsetzung mit einer Verbindung der Formel (Ia") hergestellt wird:

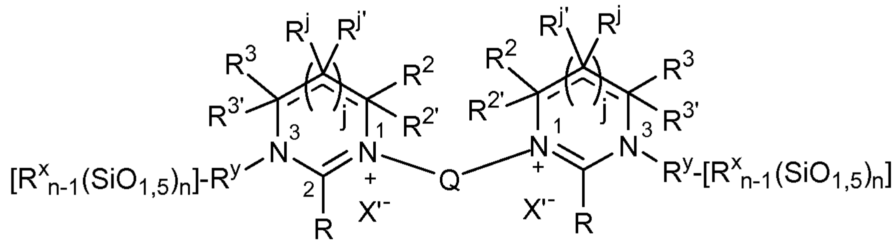

(Ib)

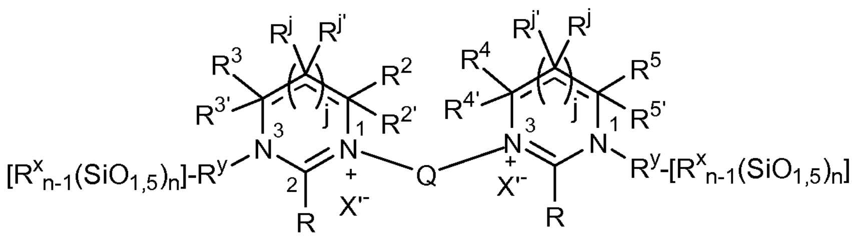

(Ib')

**34.** Katalysator, umfassend eine oder mehrere Silsesquioxan-Verbindungen gemäß einem der Ansprüche 1 bis 14 als Ligand und ein oder mehrere Verbindungen eines Übergangsmetalls, wobei das Übergangsmetall ausgewählt ist aus Palladium, Ruthenium, Nickel und Cobalt.

**35.** Verwendung einer Silsesquioxan-substituierten Verbindung gemäß einem der Ansprüche 1 bis 14 als Ligand für die Herstellung von Katalysatoren oder als Bestandteile von Katalysatoren in homogenen-Übergangsmetall-katalysierten C-C- und C-X-Kupplungen, in der homogen-katalysierten Hydroformylierung oder in der Olefinmetathese.

Europäisches Patentamt
European Patent Office
Office européen des brevets

# EUROPÄISCHER RECHERCHENBERICHT

Nummer der Anmeldung
EP 11 17 0407

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 2011/107417 A1 (EVONIK DEGUSSA GMBH [DE]; INST OF ORGANIC CHEMISTRY POLISH ACADEMY OF) 9. September 2011 (2011-09-09)<br>* das ganze Dokument *<br>----- | 1-15 | INV.<br>C07F7/21<br>C07F9/54<br>C07F15/00<br>B01J31/00 |
| X | FOX, D.M. ET AL.: "Use of a polyhedral oligomeric silsesquioxane (POSS)-imidazolinium cation as an organic modifier for montmorillonite",<br>LANGMUIR,<br>Bd. 23, Nr. 14, 2007, Seiten 7707-7714,<br>XP002663849,<br>* Abbildung 1 *<br>----- | 1-3,6,7,9,13-15 | |

RECHERCHIERTE SACHGEBIETE (IPC)
C07F
B01J

Der vorliegende Recherchenbericht wurde für alle Patentansprüche erstellt

1

| Recherchenort | Abschlußdatum der Recherche | Prüfer |
|---|---|---|
| Den Haag | 2. Januar 2012 | Rinkel, Bert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 11 17 0407

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-01-2012

| Im Recherchenbericht angeführtes Patentdokument | Datum der Veröffentlichung | Mitglied(er) der Patentfamilie | Datum der Veröffentlichung |
|---|---|---|---|
| WO 2011107417 A1 | 09-09-2011 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0210178 A1


### In der Beschreibung aufgeführte Nicht-Patentliteratur


- **G. ORGAN et al.** *Angew. Chem.,* 2007, vol. 46, 2768-2813
- Nanofiltration - Principles and Applications. Elsevier, 2004
- **J. D. LICHTENHAN.** *Comments. Inorg. Chem.,* 1995, vol. 17 (2), 115-130
- **A. M. SEIFALIAN.** *Acc. Chem. Res.,* 2005, vol. 38 (11), 879-884
- **BELLER et al.** *Synthesis,* 2004, vol. 6, 935-941
- **BEDFORD et al.** *Synthesis,* 2005, vol. 4, 622-626